(19) Europäisches Patentamt
European Patent Office
Office européen des brevets

(11) **EP 4 776 719 A1**

(12) **EUROPEAN PATENT APPLICATION**
published in accordance with Art. 153(4) EPC

(43) Date of publication:
**15.07.2026 Bulletin 2026/29**

(21) Application number: **24870224.3**

(22) Date of filing: **20.08.2024**

(51) International Patent Classification (IPC):
**H04W 72/044** (2023.01)

(52) Cooperative Patent Classification (CPC):
**H04B 7/06; H04W 40/22; H04W 72/044;**
**H04W 72/23**

(86) International application number:
**PCT/CN2024/113431**

(87) International publication number:
**WO 2025/066678 (03.04.2025 Gazette 2025/14)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **28.09.2023 CN 202311286630**

(71) Applicant: **HUAWEI TECHNOLOGIES CO., LTD.**
**Shenzhen 518129 (CN)**

(72) Inventors:
• **PENG, Zhongchong**
  **Shenzhen, Guangdong 518129 (CN)**
• **YAN, Mao**
  **Shenzhen, Guangdong 518129 (CN)**
• **SONG, Xinghua**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **SIGNAL FORWARDING METHOD AND APPARATUS**

(57)    This application provides a signal forwarding method and an apparatus, to resolve a problem of how a relay device performs processing when an index value indicated by a network device is not within an index value range that can be identified by the relay device. The method includes: The relay device receives first information from the network device, where a first beam field in the first information indicates a first index value, and a first time field associated with the first beam field indicates a second index value; and if the first index value is not within a first range, and the second index value is within a second range, the relay device skips forwarding a signal on a first time resource, or forwards a signal on a first time resource by using a first access link beam, where the first access link beam is determined based on the first index value; or if the second index value is not within the second range, and the first index value is within the first range, the relay device ignores the first time field and the first beam field, or forwards a signal on a second time resource by using a second access link beam, where the second time resource is determined based on the second index value.

800

A relay device receives first information from a network device, where the first information includes a first beam field and a first time field, the first beam field is associated with the first time field, the first beam field indicates a first index value, and the first time field indicates a second index value ⟶ S810

If the first index value is not within a first range, and the second index value is within a second range, the relay device skips forwarding a signal on a first time resource, or forwards a signal on the first time resource by using a first access link beam, where the first time resource is determined based on the second index value, and the first access link beam is determined based on the first index value or is preconfigured ⟶ S820

If the second index value is not within the second range, and the first index value is within the first range, the relay device ignores the first time field and the first beam field, or forwards a signal on a second time resource by using a second access link beam, where the second access link beam is determined based on the first index value, and the second time resource is determined based on the second index value or is preconfigured ⟶ S830

FIG. 8

## Description

This application claims priority to Chinese Patent Application No. 202311286630.5, filed with the China National Intellectual Property Administration on September 28, 2023 and entitled "SIGNAL FORWARDING METHOD AND APPARATUS", which is incorporated herein by reference in its entirety.

## TECHNICAL FIELD

This application relates to the communication field, and more specifically, to a signal forwarding method and an apparatus.

## BACKGROUND

With development of wireless communication technologies, beamforming technologies are widely used. The beamforming technology is used to concentrate energy for signal transmission within a specific beam direction, to improve signal receiving efficiency, expand a wireless signal transmission range, and reduce signal interference, thereby achieving higher communication efficiency and obtaining a larger network capacity.

In some scenarios, a network device is far away from a terminal device, and a corresponding path loss is high. Consequently, communication quality deteriorates, and even the terminal device cannot directly communicate with the network device. A known method is to use a relay device to assist communication between the network device and the terminal device. For example, during downlink transmission, the relay device may amplify a signal received from the network device, and then forward an amplified signal to the terminal device; during uplink transmission, the relay device may amplify a signal received from the terminal device, and then forward an amplified signal to the network device.

The relay device may have a plurality of types of forwarding resources, including a periodic (periodic) forwarding resource, an aperiodic (aperiodic) forwarding resource, a semi-persistent (semi-persistent, SP) forwarding resource, and the like. The aperiodic forwarding resource may be configured by the network device for the relay device by using higher layer signaling. Before each use of the resource, the network device sends activation indication information of the aperiodic forwarding resource to the relay device, and the aperiodic forwarding resource takes effect only once after being activated. The aperiodic forwarding resource includes a time resource for signal forwarding, an access link beam for signal forwarding, a backhaul link beam for signal forwarding, a signal forwarding direction, a signal amplification gain (or a signal forwarding power), and the like.

Currently, in R18, it is determined to indicate an index value of the access link beam and an index value of the time resource by using downlink control information (downlink control information, DCI) 2_8, to indicate the access link beam and the time resource that correspond to the aperiodic forwarding resource. However, a problem of how the relay device performs processing when the index value indicated by the DCI 2_8 is not within an index value range that can be identified by the relay device is not considered.

## SUMMARY

This application provides a signal forwarding method and an apparatus, to resolve a problem of how a relay device performs processing when an index value indicated by activation indication information of an aperiodic forwarding resource is not within an index value range that can be identified by the relay device.

According to a first aspect, a signal forwarding method is provided. The method may be applied to a relay device, for example, may be performed by the relay device, or may be performed by a component (such as a chip or a chip system) configured in the relay device, or may be implemented by a logical module or software that can implement all or some functions of the relay device. This is not limited in this application.

For example, the method includes: The relay device receives first information from a network device, where the first information includes a first beam field and a first time field, the first beam field is associated with the first time field, the first beam field indicates a first index value, and the first time field indicates a second index value; and if the first index value is not within a first range, and the second index value is within a second range, the relay device skips forwarding a signal on a first time resource, or forwards a signal on the first time resource by using a first access link beam, where the first time resource is determined based on the second index value, and the first access link beam is determined based on the first index value or is preconfigured; or if the second index value is not within the second range, and the first index value is within the first range, the relay device ignores the first time field and the first beam field, or forwards a signal on a second time resource by using a second access link beam, where the second access link beam is determined based on the first index value, and the second time resource is determined based on the second index value or is preconfigured.

Based on the foregoing technical solution, after the relay device receives the first information (activation indication information of an aperiodic forwarding resource), when the first index value indicated by the first beam field included in the first information is not within the first range (an index value range of an access link beam that can be identified by the relay device), or the second index value indicated by the first time field included in the first information is not within the second range (an index value range of a time resource that can be identified by the relay device), the relay device may determine how to forward a signal or determine whether to forward a signal. Therefore, in this embodiment of this application, a problem of how the relay device performs processing when the index value indicated by the activation indication information of the aperiodic forwarding resource is not within the index value range that can be identified by the relay device can be resolved.

With reference to the first aspect, in some implementations of the first aspect, the method further includes: If the first index value is not within the first range, and the second index value is not within the second range, the relay device ignores the first time field and the first beam field, or forwards a signal on the second time resource by using the first access link beam.

Based on the optional implementation, after the relay device receives the first information, when the first index value indicated by the first beam field included in the first information is not within the first range (an index value range of an access link beam that can be identified by the relay device), and the second index value indicated by the first time field included in the first information is not within the second range (an index value range of a time resource that can be identified by the relay device), the relay device may determine how to forward a signal.

With reference to the first aspect, in some implementations of the first aspect, the method further includes: if the first index value is within the first range, and the second index value is within the second range, forwarding a signal on the first time resource by using the second access link beam.

With reference to the first aspect, in some implementations of the first aspect, an index value of the first time resource is the second index value.

With reference to the first aspect, in some implementations of the first aspect, that the first access link beam is determined based on the first index value includes: The first access link beam is determined based on the first index value and a maximum quantity of used access link beams.

With reference to the first aspect, in some implementations of the first aspect, an index value of the first access link beam is $X_{new}=mod(X_{invalid}, J)$, where $X_{invalid}$ is the first index value, J is the maximum quantity of used access link beams, $X_{invalid}$ is greater than or equal to J, and mod() is a modulo function.

With reference to the first aspect, in some implementations of the first aspect, that the first access link beam is determined based on the first index value includes: A second beam field indicates the first access link beam, the second beam field is a beam field adjacent to the first beam field, and the first information further includes the second beam field.

For example, the relay device may determine the second beam field adjacent to the first beam field indicating the first index value, and determine the first access link beam based on an index value indicated by the second beam field.

With reference to the first aspect, in some implementations of the first aspect, an index value of the second access link beam is the first index value.

With reference to the first aspect, in some implementations of the first aspect, that the second time resource is determined based on the second index value includes: The second time resource is determined based on the second index value and a maximum quantity of used time resources.

With reference to the first aspect, in some implementations of the first aspect, an index value of the second time resource is $Y_{new}=mod(Y_{invalid}, I)$, where $Y_{invalid}$ is the second index value, I is the maximum quantity of used time resources, $Y_{invalid}$ is greater than or equal to I, and mod() is a modulo function.

With reference to the first aspect, in some implementations of the first aspect, that the second time resource is determined based on the second index value includes: A second time field indicates the second time resource, the second time field is a time field adjacent to the first time field, and the first information further includes the second time field.

For example, the relay device may determine the second time field adjacent to the first time field indicating the second index value, and determine the second time resource based on an index value indicated by the second time field.

With reference to the first aspect, in some implementations of the first aspect, the first information is downlink control information, the first information includes N beam fields and N time fields, the N beam fields and the N time fields are associated in a one-to-one manner, the N beam fields include the first beam field and the second beam field, the N time fields include the first time field and the second time field, and N is a positive integer.

With reference to the first aspect, in some implementations of the first aspect, the first information further includes a quantity field, the quantity field indicates a total quantity of the N beam fields and the N time fields, the N beam fields and the N time fields are consecutive fields, and the quantity field is a field before the N beam fields and the N time fields, or the quantity field is a field after the N beam fields and the N time fields, where a total quantity 2M of fields included in the first information is greater than 2N, and M is a positive integer.

Based on the optional implementation, after identifying the quantity field, the relay device may determine the total quantity 2N of the beam fields and the time fields that are included in the first information, and after parsing the N beam fields and the N time fields, the relay device no longer parses another field, so that power consumption of the relay device can be reduced. In addition, in addition to the index value of the access link beam and the index value of the time resource, the first information may further indicate the quantity of the beam fields and the time fields that are included in the first information, so that flexibility of dynamic indication can be improved.

With reference to the first aspect, in some implementations of the first aspect, the first information further includes a quantity field, the quantity field indicates a quantity of the N beam fields and/or a quantity of the N time fields, the N beam fields are consecutive fields, the N time fields are consecutive fields, and the quantity field is a field between the N beam fields and the N time fields, where a total quantity 2M of fields included in the first information is greater than 2N, and M is a positive integer.

Based on the optional implementation, after identifying the quantity field, the relay device may determine the quantity N of the beam fields included in the first information and/or the quantity N of the time fields included in the first information, and after parsing the N beam fields and the N time fields, the relay device no longer parses another field, so that power consumption of the relay device can be reduced. In addition, in addition to the index value of the access link beam and the index value of the time resource, the first information may further indicate the quantity of the beam fields included in the first information and the quantity of the time fields included in the first information, so that flexibility of dynamic indication can be improved.

With reference to the first aspect, in some implementations of the first aspect, the first information further includes an invalid indication field, the invalid indication field indicates that a field after the invalid indication field does not include the beam field or the time field, and the invalid indication field is a field after the N beam fields and the N time fields, where a total quantity 2M of fields included in the first information is greater than 2N, and M is a positive integer.

Based on the optional implementation, after identifying the invalid indication field, the relay device no longer parses another field, so that power consumption of the relay device can be reduced. In addition, flexibility of dynamic indication can be further improved.

With reference to the first aspect, in some implementations of the first aspect, the N beam fields and the N time fields are consecutive fields. Optionally, the N beam fields and the N time fields may alternatively be non-consecutive fields.

According to a second aspect, a signal forwarding method is provided. The method may be applied to a relay device, for example, may be performed by the relay device, or may be performed by a component (such as a chip or a chip system) configured in the relay device, or may be implemented by a logical module or software that can implement all or some functions of the relay device. This is not limited in this application.

For example, the method includes: The relay device receives second information from a network device, where the second information includes a first beam field and a first time field, the first beam field is associated with the first time field, a first index value indicated by the first beam field is not within a first range, the first time field indicates a second index value, a first time resource includes at least one first symbol in at least one first slot, and the first time resource is determined based on the second index value; the relay device receives third information from the network device, where the third information indicates to forward a signal on a second time resource by using a first access link beam, the second time resource includes at least one second symbol in the at least one first slot, and the at least one first symbol and the at least one second symbol include a third symbol; and in the third symbol, the relay device forwards a signal by using a second access link beam, or forwards a signal by using the first access link beam, or skips forwarding a signal, where the second access link beam is determined based on the first index value or is preconfigured; and/or in the at least one first symbol other than the third symbol, forwards a signal by using the second access link beam, or skips forwarding a signal; and/or in the at least one second symbol other than the third symbol, forwards a signal by using the first access link beam, or skips forwarding a signal. The third symbol may be understood as a conflicting symbol in symbols included in the first time resource and the second time resource. Optionally, the second index value indicated by the first time field is within a second range.

Based on the foregoing technical solution, after the relay device receives the second information and the third information from the network device, when the first index value indicated by the first beam field included in the second information is not within an index value range of an access link beam that can be identified by the relay device, and a time resource (the at least one first symbol in the at least one first slot) indicated by the first time field associated with the first beam field conflicts with/overlaps a time resource (the at least one second symbol in the at least one first slot) indicated by the third information, the relay device may determine how to forward a signal or determine whether to forward a signal.

With reference to the second aspect, in some implementations of the second aspect, an index value of the first time resource is the second index value.

With reference to the second aspect, in some implementations of the second aspect, that the second access link beam is determined based on the first index value includes: The second access link beam is determined based on the first index value and a maximum quantity of used access link beams; or a second beam field indicates the second access link beam, the second beam field is a beam field adjacent to the first beam field, and the second information further includes the second beam field.

For example, the second beam field is a field adjacent to the first beam field and located on the left of the first beam field; or the second beam field is a field adjacent to the first beam field and located on the right of the first beam field.

With reference to the second aspect, in some implementations of the second aspect, that the second access link beam is determined based on the first index value and the maximum quantity of used access link beams includes: An index value of the second access link beam is $X_{new}'=mod(X_{invalid}', J)$, where $X_{invalid}'$ is the first index value, J is the maximum quantity of used access link beams, $X_{invalid}'$ is greater than or equal to J, and mod() is a modulo function.

With reference to the second aspect, in some implementations of the second aspect, the second information is activation indication information of an aperiodic forwarding resource. Optionally, the third information is configuration information of a periodic forwarding resource, or the third information is activation indication information of a semi-persistent forwarding resource.

According to a third aspect, a signal forwarding method is provided. The method may be applied to a relay device, for example, may be performed by the relay device, or may be performed by a component (such as a chip or a chip system) configured in the relay device, or may be implemented by a logical module or software that can implement all or some functions of the relay device. This is not limited in this application.

For example, the method includes: The relay device receives fourth information from a network device at a first moment, where the fourth information indicates to forward a signal on a first time resource by using a first access link beam, an index value of the first access link beam is within a first range, an index value of the first time resource is within a second range, the first time resource includes at least one first symbol in a first slot, and the fourth information is activation indication information of an aperiodic forwarding resource; the relay device receives fifth information from the network device at a second moment, where the fifth information includes a first beam field and a first time field, the first beam field is associated with the first time field, a first index value indicated by the first beam field is not within the first range, a second index value indicated by the first time field is within the second range, a second time resource includes at least one second symbol in the first slot, and the at least one first symbol and the at least one second symbol include a third symbol, where the first moment is earlier than the second moment, the second time resource is determined based on the second index value, and the fifth information is activation indication information of an aperiodic forwarding resource; and in the third symbol, the relay device forwards a signal by using the first access link beam, or forwards a signal by using a second access link beam, or skips forwarding a signal, where the second access link beam is determined based on the first index value or is preconfigured; and/or in the at least one first symbol other than the third symbol, forwards a signal by using the first access link beam, or skips forwarding a signal; and/or in the at least one second symbol other than the third symbol, forwards a signal by using the second access link beam, or skips forwarding a signal.

Based on the foregoing technical solution, after the relay device receives the fourth information and the fifth information from the network device, when the first index value indicated by the first beam field included in the fifth information is not within an index value range of an access link beam that can be identified by the relay device, and the second time resource (the at least one second symbol in the first slot) indicated by the first time field associated with the first beam field conflicts with/-overlaps the first time resource (the at least one first symbol in the first slot) indicated by the fourth information, the relay device may determine how to forward a signal or determine whether to forward a signal.

With reference to the third aspect, in some implementations of the third aspect, an index value of the second time resource is the second index value.

With reference to the third aspect, in some implementations of the third aspect, the second access link beam is determined based on the first index value and a maximum quantity of access link beams used by the relay device.

With reference to the third aspect, in some implementations of the third aspect, an index value of the second access link beam is $X_{new}'=mod(X_{invalid}', J)$, where $X_{invalid}'$ is the first index value, J is the maximum quantity of access link beams used by the relay device, $X_{invalid}'$ is greater than or equal to J, and mod () is a modulo function.

With reference to the third aspect, in some implementations of the third aspect, a second beam field indicates the second access link beam, the second beam field is a beam field adjacent to the first beam field, and the fifth information further includes the second beam field.

For example, the second beam field is a field adjacent to the first beam field and located on the left of the first beam field; or the second beam field is a field adjacent to the first beam field and located on the right of the first beam field.

According to a fourth aspect, a communication apparatus is provided. The apparatus may be used in the relay device according to the first aspect. The apparatus includes: a transceiver unit, configured to implement receiving and sending functions of the method according to the first aspect; and a processing unit, configured to implement a processing function such as signal forwarding of the method according to the first aspect.

According to a fifth aspect, a communication apparatus is provided. The apparatus may be used in the relay device according to the second aspect. The apparatus includes: a transceiver unit, configured to implement receiving and sending functions of the method according to the second aspect; and a processing unit, configured to implement a processing function such as signal forwarding of the method according to the second aspect.

According to a sixth aspect, a communication apparatus is provided. The apparatus may be used in the relay device according to the third aspect. The apparatus includes: a transceiver unit, configured to implement receiving and sending functions of the method according to the third aspect; and a processing unit, configured to implement a processing function such as signal forwarding of the method according to the third aspect.

According to a seventh aspect, a communication apparatus is provided, and includes a processor and an interface circuit. The interface circuit is configured to receive a signal from another communication apparatus and transmit the signal to the processor, or send a signal from the processor to another communication apparatus, and the processor implements the method according to any one of the first aspect to the third aspect or the possible implementations of the first aspect to the third aspect by using a logic circuit or executing code instructions.

According to an eighth aspect, a computer-readable storage medium is provided. The computer-readable storage medium stores a computer program, and when the computer program runs on a computer, the method according to any one of the first aspect to the third aspect and the possible implementations of the first aspect to the third aspect is performed.

According to a ninth aspect, a computer program product is provided, and includes a computer program. When the computer program is executed, the communication method according to any one of the first aspect to the third aspect and the possible implementations of the first aspect to the third aspect is implemented.

The solutions provided in the fourth aspect to the ninth aspect are used to implement or cooperate implementation of the method provided in the first aspect to the third aspect, and therefore can achieve same or corresponding beneficial effects as those in the first aspect to the third aspect. Details are not described herein again.

## BRIEF DESCRIPTION OF DRAWINGS

FIG. 1(a) to FIG. 1(c) are diagrams of system architectures applicable to embodiments of this application;

FIG. 2 is a diagram of a structure of an access network device according to an embodiment of this application;

FIG. 3 is a diagram of a structure of a relay device according to an embodiment of this application;

FIG. 4 is a diagram of a structure of a terminal device according to an embodiment of this application;

FIG. 5 is a diagram of a structure of a terminal device having a plurality of beam directions according to an embodiment of this application;

FIG. 6 is a schematic flowchart in which a base station controls a relay device to forward a signal;

FIG. 7 is a diagram of a beam and a time resource that are indicated by fields included in DCI 2_8;

FIG. 8 is an example flowchart of a signal forwarding method according to an embodiment of this application;

FIG. 9 is a diagram of index values indicated by a beam field and a time field that are included in first information;

FIG. 10 is a diagram in which a $5^{th}$ beam field and a $5^{th}$ time field do not take effect;

FIG. 11 is a diagram in which none of five beam fields and five time fields takes effect;

FIG. 12 to FIG. 14 are diagrams in which a $5^{th}$ beam field and a $5^{th}$ time field take effect;

FIG. 15 is another diagram of index values indicated by a beam field and a time field that are included in first information;

FIG. 16 is a diagram in which a $4^{th}$ beam field and a $4^{th}$ time field do not take effect;

FIG. 17 to FIG. 19 are diagrams in which a $4^{th}$ beam field and a $4^{th}$ time field take effect;

FIG. 20 is another diagram of index values indicated by a beam field and a time field that are included in first information;

FIG. 21 to FIG. 25 are other diagrams in which a $4^{th}$ beam field and a $4^{th}$ time field take effect;

FIG. 26 is another diagram of index values indicated by a beam field and a time field that are included in first information;

FIG. 27 is a diagram of a location relationship between N beam fields and N time fields;

FIG. 28 is another diagram of a location relationship between N beam fields and N time fields;

FIG. 29 is a diagram of 2M fields included in first information;

FIG. 30 to FIG. 32 are diagrams of first information including a quantity field;

FIG. 33 is a diagram of first information including an invalid indication field;

FIG. 34 is a diagram of a conflict between time resources indicated by a plurality of pieces of control information;

FIG. 35 is an example flowchart of another signal forwarding method according to an embodiment of this application;

FIG. 36 is a diagram of a conflict between time resources indicated by second information and third information;

FIG. 37(a) to FIG. 37(g) are diagrams of symbols that are used to forward a signal and that are determined by a relay device based on second information and third information;

FIG. 38 is another diagram of a conflict between time resources indicated by second information and third information;

FIG. 39(a) to FIG. 39(c) are other diagrams of symbols that are used to forward a signal and that are determined by a relay device based on second information and third information;

FIG. 40 is another diagram of a conflict between time resources indicated by second information and third information;

FIG. 41(a) to FIG. 41(g) are other diagrams of symbols that are used to forward a signal and that are determined by a relay device based on second information and third information;

FIG. 42 is an example flowchart of another signal forwarding method according to an embodiment of this application;

FIG. 43 is an example flowchart of another signal forwarding method according to an embodiment of this application;

FIG. 44 is an example flowchart of another signal forwarding method according to an embodiment of this application;

FIG. 45 is a diagram of a structure of a communication apparatus according to an embodiment of this application;

FIG. 46 is a diagram of a structure of another communication apparatus according to an embodiment of this application; and

FIG. 47 is a schematic block diagram of a communication apparatus according to an embodiment of this application.

## DESCRIPTION OF EMBODIMENTS

The following describes, with reference to the accompanying drawings, technical solutions provided in this application.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a sidelink (sidelink, SL) communication system, a universal mobile telecommunications system (universal mobile telecommunications system, UMTS), a worldwide interoperability for microwave access (worldwide interoperability for microwave access, WiMAX) communication system, a 5th generation (5th generation, 5G) mobile communication system, or a new radio access technology (new radio access technology, NR). The 5G mobile communication system may include non-standalone (non-standalone, NSA) networking and/or standalone (standalone, SA) networking. The technical solutions provided in this application may be further applied to a future communication system, for example, a 6th generation (6th Generation, 6G) mobile communication system. This is not limited in this application.

An access network device in this application may be a device configured to communicate with a terminal, or may be a device that connects the terminal to a wireless network. The access network device may be a node in a radio access network. The access network device may be a base station (base station, BS), an evolved NodeB (evolved NodeB, eNodeB), a transmission reception point (transmission reception point, TRP), a home base station (for example, a home evolved NodeB, or a home NodeB, HNB), a Wi-Fi access point (access point, AP), a mobile switching center, a next generation NodeB (next generation NodeB, gNB) in the 5G mobile communication system, a next generation base station in the 6th generation (6th generation, 6G) mobile communication system, a base station in the future mobile communication system, or the like. Alternatively, the access network device may be a module or unit that completes some functions of the base station, for example, may be a central unit (central unit, CU), a distributed unit (distributed unit, DU), an RRU, or a baseband unit (baseband unit, BBU). Alternatively, the access network device may be a device that functions as a base station in a D2D communication system, a V2X communication system, an M2M communication system, an IoT communication system, and the like. Alternatively, the access network device may be an access network device in a non-terrestrial network (non-terrestrial network, NTN). In other words, the access network device may be deployed on a high-altitude platform or a satellite. The access network device may be a macro base station, may be a micro base station or an indoor base station, or may be a relay node, a donor node, or the like. Certainly, the access network device may alternatively be a node in a core network.

The access network device provides a service for a cell, and the terminal device communicates with the cell by using a transmission resource (for example, a frequency domain resource or a spectrum resource) allocated by the access network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells are characterized by small coverage and a low transmit power, and are applicable to providing a high-rate data transmission service.

The terminal device in this application may also be referred to as user equipment (user equipment, UE), an access terminal, a subscriber unit, a subscriber station, a mobile station, a remote station, a remote terminal, a mobile device, a user terminal, a terminal, a wireless communication device, a user agent, or a user apparatus.

The terminal device may be a device that provides voice/data connectivity for users, for example, a handheld device or a vehicle-mounted device that has a wireless connection function. Currently, some examples of the terminal device may be: a mobile phone (mobile phone), a tablet computer (pad), a computer (for example, a notebook computer or a palmtop computer) having a wireless transceiver function, a mobile internet device (mobile internet device, MID), a virtual reality (virtual reality, VR) device, an augmented reality (augmented reality, AR) device, a wireless terminal in industrial control (industrial control), a wireless terminal in self driving (self driving), an uncrewed aerial vehicle, a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal device in a 5G network, a terminal device in a future evolved public land mobile network (public land mobile network, PLMN), and the like.

The wearable device may also be referred to as a wearable intelligent device, and is a general term of wearable devices, such as glasses, gloves, watches, clothes, and shoes, that are developed by applying wearable technologies to intelligent designs of daily wear. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement all or some functions without depending on smartphones, for example, smart watches or smart glasses, and include devices that focus on only one type of application function and need to collaboratively work with other devices such as smartphones, for example, various smart bands or smart jewelry for monitoring physical signs.

In addition, the terminal device may alternatively be a terminal device in an internet of things (internet of things, IoT) system. An IoT is an important part of future development of information technologies. A main technical feature of the IoT is to connect an object to a network by using a communication technology, to implement an intelligent network for human-machine interconnection and thing-thing interconnection. The IoT technology can achieve massive connections, deep coverage, and terminal power saving by using, for example, a narrowband (narrowband, NB) technology.

In addition, the terminal device may further include sensors such as a smart printer, a train detector, and a gas station. Main functions include: collecting data (which is a function of some terminal devices), receiving control information and downlink data of the access network device, sending an electromagnetic wave, and transmitting uplink data to the access network device.

In embodiments of this application, a relay device has a signal forwarding (or reflection) function, may amplify a signal, and may be referred to as a relay for short. In addition, the relay device may further shift a carrier frequency of a signal; may demodulate a signal, re-modulate the signal, and then forward the signal; or may reduce noise of a signal, and then forward the signal. Therefore, the relay device may perform any one or more of the following processing on a received signal: amplification, demodulation, frequency shifting, and noise reduction, and then forward a processed signal.

In addition, the relay may also be referred to as a reflector or a reflecting surface, or the relay may also be referred to as an intelligent reflecting surface (intelligent reflecting surface), a reflecting array, a configurable reflecting surface (Reconfigurable reflecting surface, RIS), an intelligent reflecting array (intelligent reflecting array), a reflector, an intelligent reflector, a backscatter device (backscatter device), a passive device (passive device), a semi-active device (semi-passive device), an ambient signal device (ambient signal device), or the like.

The relay device may alternatively be considered as a terminal device in a special form. If a capability of a network side for controlling the relay device is considered, relay devices may be classified into a non-intelligent relay and an intelligent relay, or may be classified into a relay device not controlled by a network (uncontrolled repeater) and a relay device controlled by the network (network-controlled repeater, NetConRepeater or NCR). The access network device may control the intelligent relay to perform more functions for performance enhancement, for example, at least one of relay transmit power control, relay amplification gain control, relay beam sweeping control and relay precoding control, on-off control, or uplink/downlink forwarding control.

A typical relay device has two antenna panels. One antenna panel is configured to communicate with the access network device, and may be referred to as a backhaul side. The other antenna panel is configured to communicate with the terminal device, and may be referred to as an access side. Generally, only one antenna panel is configured to receive a signal. After being amplified, the received signal is forwarded or sent by the other antenna panel.

Each antenna panel of the relay may include a plurality of antennas, and a beam may be formed on a single antenna panel, to obtain better relay transmission performance. In consideration of a beam capability on the access side, forwarding is further classified into single-beam forwarding and multi-beam forwarding. If the relay access side has a capability of a plurality of beams, when the relay forwards a signal, the beams on the relay access side need to be aligned with the terminal device, to obtain good transmission performance.

In this application, the relay device may be used in a multi-hop relay cascading communication network. It may be understood as that a relay node may establish a connection to an access network device through at least one upper-level relay node, and is controlled by the access network device. In this case, the upper-level relay node may be considered as a special access network device. Alternatively, the relay node may establish a connection to a terminal device through at least one lower-level relay node. In this case, the lower-level relay node may be considered as a special terminal device.

In this specification, the relay device, the relay, and the relay node appear alternately, and meanings expressed by the relay device, the relay, and the relay node are the same. Specific forms of the access network device, the relay device, and the terminal device are not limited in this application.

To better understand the method provided in embodiments of this application, the following briefly describes terms or concepts used in this application.

1. Reference signal (reference signal, RS)

Based on functions, the reference signal is also referred to as a demodulation reference signal (demodulation reference signal, DMRS), a channel state information reference signal (channel state information reference signal, CSI-RS), a phase tracking reference signal (phase tracking reference signal, PTRS), a channel sounding reference signal (sounding reference signal, SRS), or the like. The reference signal is a known signal used to obtain impact of an external (for example, a spatial channel, a transmit end device, or a receive end device) on the signal during transmission, and is generally used for channel estimation, beam management, phase noise estimation, and the like. For example, the DMRS and the CSI-RS are used to obtain channel information, and the PTRS is used to obtain phase change information.

A physical downlink control channel (physical downlink control channel, PDCCH) is used for transmission of DCI, including information such as scheduling allocation, scheduling grant, and power control of a physical downlink shared channel (physical downlink shared channel, PDSCH). The physical downlink control channel occupies the first {1, 2, 3} symbols in a slot in time domain, and may occupy a full bandwidth in frequency domain, and a specific bandwidth in frequency domain may be configured by using a parameter.

The PDSCH is a channel used for transmission of downlink data. Time domain resource allocation is indicated by a time domain resource allocation field in the DCI, and the time domain resource allocation field may indicate a start symbol and a quantity of consecutive symbols that are occupied by the PDSCH. Frequency domain resource allocation is indicated by a frequency domain resource allocation field in the DCI, and includes allocation manners at a resource block group (resource block group, RBG) granularity and a resource block (resource block, RB) granularity.

2. Resource block (resource block, RB)

The resource block is also referred to as a physical resource block (physical resource block), and is a basic unit of a frequency resource in a communication system that is based on orthogonal frequency division multiplexing (orthogonal frequency division multiplexing, OFDM). One resource block generally includes N resource elements (resource element, RE), and a resource element may also be referred to as a subcarrier, where N is generally 12. Several resource blocks form one resource block group (resource block group, RBG), which may also be referred to as a physical resource block group. Generally, precoding is performed in a unit of a resource block or a resource block group, and a basic unit for sending after the precoding is also referred to as a precoding resource block group (precoding resource block group, PRG).

3. Layer (layer)

After layer mapping is performed on a modulation symbol (complex number symbol) obtained by scrambling (scrambling) and modulating (modulating) one or two codewords, the modulation symbol is mapped to one or more transmission layers (transmission layer). The transmission layer is usually also referred to as a layer. The transmission layer is usually mapped to an antenna port. Therefore, the transmission layer is also referred to as an antenna port. Each transmission layer corresponds to one valid data stream. A quantity of transmission layers/a transmission layer quantity is referred to as a "transmission order" or a "transmission rank (rank)". The transmission rank may dynamically change. The transmission layer quantity needs to be less than or equal to a smaller one of a transmit antenna port quantity and a receive antenna port quantity, that is, "the transmission layer quantity$\leq$min(the transmit antenna port quantity, the receive antenna port quantity)". During NR downlink communication, generally, a transmission layer quantity is equal to an antenna port quantity, and a transmission layer quantity and/or an antenna port quantity (or further including a number of each antenna port) that are/is used for data and DMRS transmission are/is indicated by downlink control information. In NR, an antenna port may also correspond to a transmission configuration indicator (transmission configuration Indicator, TCI), a beam, or the like. For example, one TCI corresponds to a plurality of antenna ports, or one beam corresponds to a plurality of antenna ports. In this application, for ease of description, the TCI, the transmission layer, the antenna port, and the beam may be collectively referred to as a space domain.

4. Beam (beam)

The beam is a main lobe of a radiation pattern of an antenna or an antenna array, and is formed by superposing radiation signals of antenna modules. The beam may be understood as a spatial filter (spatial filter) or a spatial parameter (spatial parameter). A beam used to send a signal may be referred to as a transmission beam (transmission beam, Tx beam), and may be a spatial transmit filter (spatial transmit filter) or a spatial transmit parameter (spatial transmit parameter, spatial Tx parameter). The transmission beam may refer to signal strength distribution formed in different directions in space after a signal is transmitted through an antenna. A beam used to receive a signal may be referred to as a reception beam (reception beam, Rx beam), and may be a spatial receive filter (spatial receive filter) or a spatial receive parameter (spatial receive parameter, spatial Rx parameter). The reception beam may refer to signal strength distribution, in different directions in space, of a radio signal received through an antenna.

A technology for forming the beam may be a beamforming technology or another technology. For example, the beamforming technology may specifically be a digital beamforming technology, an analog beamforming technology, or a hybrid digital/analog beamforming technology. This is not limited in this application. The beam, the spatial filter, the spatial parameter, and the like are merely several possible names enumerated in this specification. This application does not exclude a possibility of defining another term in a future protocol to represent a same or similar meaning.

Characteristics of the beam may be represented by one or more of the following directional parameters: a beam index (beam index); a beam type (beam type); a beam azimuth (beam azimuth); beam tilt (beam tilt); a beam width, including a beam horizontal width (beam horizontal width) and a beam vertical width (beam vertical width); a reference beam direction, which may include a reference beam peak direction and a reference beam center direction; and a maximum equivalent isotropic radiated power (effective isotropic radiated power, EIRP) achieved by a beam peak direction.

The beam may be generated by a particular TRP. The TRP is an antenna array that includes one or more antenna elements and that may be used by a network, and is located at a particular geographical location in a particular area. One TRP may correspond to one coverage area.

5. Quasi co-location (quasi co-location, QCL)

A quasi co-location QCL relationship indicates that a plurality of resources have one or more same or similar communication features. Same or similar communication configuration may be used for the plurality of resources having the quasi co-location relationship. Specifically, signals corresponding to antenna ports having the QCL relationship have a same parameter, or a parameter of one antenna port may be used to determine a parameter of another antenna port having the QCL relationship with the antenna port, or two antenna ports have a same parameter, or a parameter difference between two antenna ports is less than a specific threshold. The parameter may include one or more of the following: delay spread (delay spread), Doppler spread (Doppler spread), a Doppler shift (Doppler shift), an average delay (average delay), an average gain, and a spatial receive parameter. The spatial receive parameter may include one or more of the following: an angle of arrival (angle of arrival, AOA), an average AOA, AOA spread, an angle of departure (angle of departure, AOD), an average angle of departure AOD, AOD spread, a receive antenna spatial correlation parameter, a transmit antenna spatial correlation parameter, a sending beam (or referred to as a transmission beam), a reception beam, and a resource identifier.

In an NR protocol, the QCL relationship may be classified into the following four types based on different parameters:

a type A (type A): the Doppler shift, the Doppler spread, the average delay, and the delay spread;
a type B (type B): the Doppler shift and the Doppler spread;
a type C (type C): the Doppler shift and the average delay; and
a type D (type D): the spatial receive parameter.

6. Transmission configuration indicator (TCI) state (TCI state)

The TCI state may indicate a QCL relationship between two reference signals. A network device may configure a TCI state list for a terminal device by using higher layer signaling (for example, an RRC message), and may activate or indicate one or more TCI states in the list by using higher layer signaling (for example, a medium access control-control element (medium access control-control element, MAC-CE)) or physical layer signaling (for example, DCI).

Configuration information of one TCI state may include one or two reference signal resource identifiers and a QCL type associated with the reference signal resource identifier. When the QCL relationship is configured as one of the type A, the type B, or the type C, the terminal device may demodulate a physical downlink control channel (physical downlink control channel, PDCCH) or a physical downlink shared channel (physical downlink shared channel, PDSCH) based on an indication of the TCI state.

For example, when the QCL relationship is configured as the type D, the terminal device may know a specific transmission beam used by the network device to transmit a signal, and may further determine, based on a beam pairing relationship determined through channel measurement, a specific reception beam used to receive a signal.

7. Amplification gain

The amplification gain is applicable to a relay device and may correspond to power control. For example, if a received power of a received signal is $P_R$ decibel milliwatt (dBm), and the amplification gain is G decibel (dB), an output power (transmit power) of an output signal is $P_T = G + P_R$, and a unit of $P_T$ is decibel milliwatt dBm. In a communication system related to a reflecting surface, the amplification gain may be correspondingly a reflection loss.

8. On-off control

On-off control (ON-OFF control) is also referred to as switch management. For example, a relay is controlled to enable or disable amplification and enable or disable forwarding. Further, uplink on-off control, downlink on-off control, forwarding enabling, and forwarding disabling may be distinguished.

9. A forwarding resource is at least one of the following parameters used to define relay forwarding behaviors: a time resource, an access link (access link) beam, a backhaul link (backhaul link) beam, an amplification gain, a reflection configuration matrix (for a reflecting surface), and a forwarding resource index.

10. A forwarding resource set is a list (or a pattern) of at least one of the following parameters used to define relay forwarding behaviors: a time resource, an access link beam, a backhaul link beam, an amplification gain, a reflection configuration matrix (for a reflecting surface), a forwarding resource index, and a forwarding resource set index. For example, one forwarding resource set corresponds to a plurality of forwarding resource indexes. For another example, one forwarding resource set corresponds to a plurality of time resources. For another example, one forwarding resource set corresponds to a plurality of time resource lists (or patterns), and each time resource list corresponds to a plurality of time resources. For another example, one forwarding resource set corresponds to a plurality of access link beams. For another example, one forwarding resource set corresponds to a plurality of access link beam lists (or patterns), and each access link beam list corresponds to a plurality of access link beams. In this application, when no ambiguity exists, the forwarding resource set may be referred to as a resource set or a resource for short.

11. Amplify-and-forward relay and reflective forwarding relay

The amplify-and-forward relay or the reflective forwarding relay cannot independently implement a function of assisting terminal device communication, and a network device needs to be used. A difference between the two relays is that the amplify-and-forward relay performs simple radio frequency processing (for example, amplification or even noise reduction) on a received signal, and then forwards a processed signal. However, the reflective forwarding relay generally uses a special reflective or transmissive antenna to directly reflect or transparently transmit a received signal to the terminal device. In a process of reflecting or transparently transmitting the signal, some signal attenuation occurs. Amplifying and forwarding, reflective forwarding, and transmissive forwarding may be collectively referred to as "forwarding". Relays in embodiments of this application include the amplify-and-forward relay and the reflective forwarding relay.

The amplify-and-forward relay generally has a plurality of antenna panels, where some antenna panels are configured to receive signals, and other antenna panels are configured to forward signals. Each antenna panel may include a plurality of antennas, and a beam may be formed on a single antenna panel, to obtain better relay transmission performance. In consideration of a beam capability on an access side, forwarding is further classified into single-beam forwarding and multi-beam forwarding; or in consideration of a networking form, forwarding is further classified into single-hop forwarding and multi-hop forwarding.

The reflective forwarding relay may be generally considered as a single antenna array plane, and each antenna element not only receives a signal, but also reflects or transparently transmits a signal.

An amplification circuit of the amplify-and-forward relay brings noise to an amplified signal. When the noise is transmitted to a receive end, noise interference is caused to the receive end. In a network, if an amplification multiple of a signal used by the relay is excessively high, an output power of the relay is high when the relay forwards the signal, which may cause negative effects such as interference; and further, a power amplifier of the relay may enter a saturation region, and an amplified signal is distorted. Consequently, the receive end cannot correctly demodulate the signal. Currently, a means of reducing the interference is mainly to manage amplify-and-forward functions of the relay, for example, configure an amplification gain (output power) of the relay device, and perform switch management (on-off control).

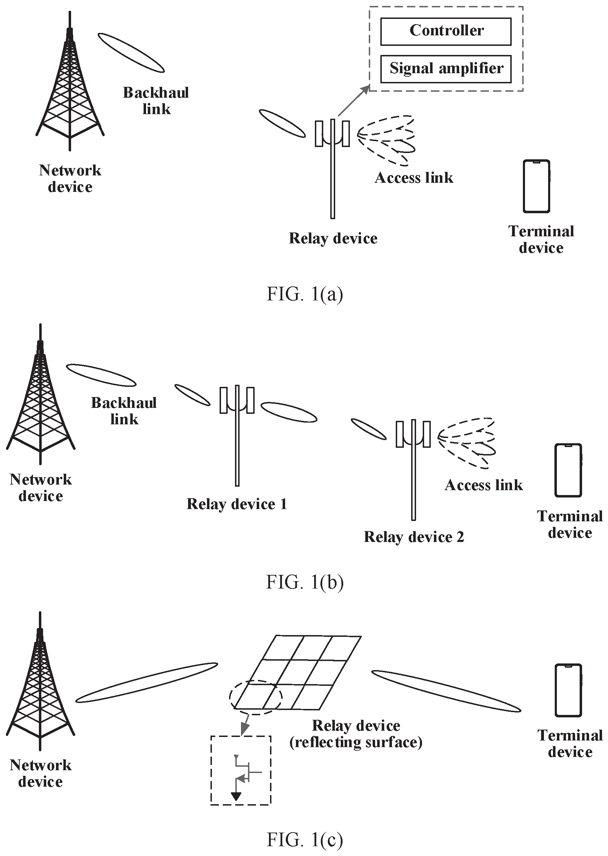

FIG. 1(a) to FIG. 1(c) are diagrams of system architectures applicable to embodiments of this application. The system architectures shown in FIG. 1(a) to FIG. 1(c) each include a network device, a relay device, and a terminal device. The network device may provide network coverage for a specific geographical area. An example in which the network device in this embodiment of this application is an access network device is used. The access network device includes a base station.

As described above, when the access network device is far away from the terminal device, communication quality deteriorates. Therefore, the relay device is introduced to assist communication between the access network device and the terminal device. The relay device in FIG. 1(a) and FIG. 1(b) may be the foregoing amplify-and-forward relay, and the relay device in FIG. 1(c) is the foregoing reflective forwarding relay.

Although not shown in FIG. 1(a) to FIG. 1(c), it may be understood that the access network device may be further connected to a core network device, and the core network device may include but is not limited to an access and mobility management function (access and mobility management function, AMF) network element, a session management function (session management function, SMF) network element, a user plane function (user plane function, UPF) network element, and the like.

The network elements may be configured to implement respective functions. For example, the AMF may be configured to perform mobility management and access management. The SMF may be configured to manage a session, allocate and manage an internet protocol (internet protocol, IP) address of the terminal device, select and manage a user plane function, perform policy control, or be used for a termination point of a charging function interface, be used for downlink data notification, and the like. The UPF may be used for packet routing and forwarding, quality of service (quality of service, QoS) handling for user plane data, or the like.

The access network device and the relay device may further be connected to an operation administration and maintenance (operation administration and maintenance, OAM) network element. Based on an actual requirement of operation of an operator network, network management is usually classified into three types: operation (operation), administration (administration), and maintenance (maintenance), which are referred to as OAM for short. The operation is mainly to complete routine analysis, prediction, planning, and configuration for a network and a service, and the maintenance is mainly routine operation activities such as network and service tests and fault management. The OAM can detect network running states, optimize network connections and performance, improve network running stability, and reduce network maintenance costs.

To better understand embodiments of this application, the following first briefly describes structures of the access network device, the relay device, and the terminal device and related concepts with reference to the accompanying drawings.

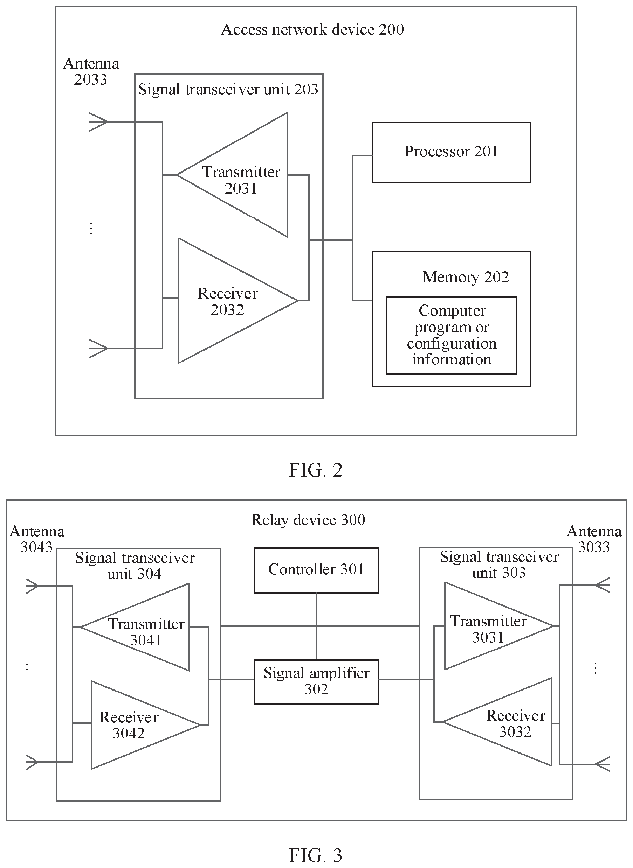

FIG. 2 is a diagram of a structure of an access network device according to an embodiment of this application. The access network device 200 shown in FIG. 2 includes a processor 201, a memory 202, and a signal transceiver unit 203. The memory 202 may be configured to store a computer program or configuration information. The processor 201 may be configured to execute the computer program stored in the memory 202, or read the configuration information stored in the memory 202. The signal transceiver unit 203 includes a transmitter 2031, a receiver 2032, and an antenna 2033. The transmitter 2031 may be configured to send a signal through the antenna 2033, and the receiver 2032 may be configured to receive a signal through the antenna 2033.

FIG. 3 is a diagram of a structure of a relay device according to an embodiment of this application. The relay device 300 shown in FIG. 3 includes one or more of a controller 301, a signal amplifier 302, a signal transceiver unit 303, a signal transceiver unit 304, and the like. The relay device 300 may be configured to implement communication and signaling exchange with an access network device and a terminal device, signal amplification, and the like. A relay controller (for example, the controller 301) is also referred to as a mobile terminal (mobile terminal, MT or NCR-MT), and other parts (for example, the signal amplifier 302, the signal transceiver unit 303, and the signal transceiver unit 304) may form a forwarding module (forwarding, Fwd or NCR-Fwd) (which may also be referred to as a radio unit (radio unit, RU), a distributed unit (distributed unit, DU), a distributed radio unit (distributed radio unit, DRU), or the like).

A link between an access network device and a forwarding module of a relay device connected to the access network device is a backhaul link, and a link between the forwarding module of the relay device and a terminal device connected to the relay device is an access link. A forwarding link may include the backhaul link and the access link. In this embodiment of this application, the relay device may receive a signal from the access network device through the backhaul link, and forward the received signal to the terminal device through the access link. The signal that is received by the relay device through the backhaul link and forwarded by the relay device through the access link may be a reference signal, a control signal, or a data signal. This is not limited in this application. Alternatively, the relay device may receive a signal from the terminal device through the access link, and forward the received signal to the access network device through the backhaul link. The signal that is received by the relay device through the access link and forwarded by the relay device through the backhaul link may be a reference signal or a data signal. This is not limited in this application. In the backhaul link, the relay device may receive a signal from the access network device and/or send a signal to the access network device through a backhaul side antenna. In the access link, the relay device may send a signal to the terminal device and/or receive a signal from the terminal device through an access side antenna.

It should be understood that the signal transceiver unit 303 may include a transmitter 3031, a receiver 3032, and an antenna 3033, and the signal transceiver unit 304 may include a transmitter 3041, a receiver 3042, and an antenna 3043. The transmitter 3031 or 3041 may be configured to send a signal through the antenna 3033 or 3043, and the receiver 3032 or 3042 may be configured to receive a signal through the antenna 3033 or 3043.

In addition, when signal transmission is performed between the relay device and the access network device, the relay controller and the backhaul link may have same information such as a same beam. For example, the relay controller and the backhaul link share an antenna. Specifically, considering that the controller (MT) and the forwarding module (Fwd) receive and send signals simultaneously (where for example, a control signal and a forwarding signal may be frequency-division multiplexed), the controller and the backhaul link have a same reception beam. If there is only a forwarding signal on a specific forwarding occasion (forwarding occasion) (there is no signal receiving/sending relationship between the controller and a base station), the access network device indicates beam information of the backhaul link. Alternatively, reception beams of the MT and the Fwd backhaul link (oriented to an upper-level node or the access network device) may have a QCL relationship, for example, a QCL type A and a QCL type D.

This application is discussed based on the following assumption: It is considered, by default, that the Fwd backhaul link beam and the MT beam are the same or have a preset QCL relationship. For example, during downlink communication, one signal transceiver unit (for example, the signal transceiver unit 303) of the relay device is configured to receive a signal from the access network device, and the other signal transceiver unit (for example, the signal transceiver unit 304) is configured to forward an amplified received signal to the terminal device. In addition, the controller 301 may further communicate with the access network device or the terminal device through the signal transceiver unit 303 or the signal transceiver unit 304. For example, the controller 304 communicates with the access network device through the signal transceiver unit 303, and is configured to establish a communication link, perform beam alignment, and the like between the relay and the access network device. The controller 304 may be further configured to receive configuration or indication information of the access network device, so that the access network device controls working time, a working state, a working manner, or the like of the relay. Alternatively, the controller 304 is configured to receive a trigger signal of the terminal device, so that the relay device enters a corresponding working mode as required. For another example, the controller 301 can further determine a working state (for example, an amplification multiple or a phase) of the signal amplifier 302 based on the indication information of the access network device or measurement information of the controller 301.

It should be understood that a quantity of each type of unit in FIG. 3 may be 1 or a larger value. For example, there may be a plurality of signal amplifiers, respectively corresponding to different polarization directions or relay radio frequency channels.

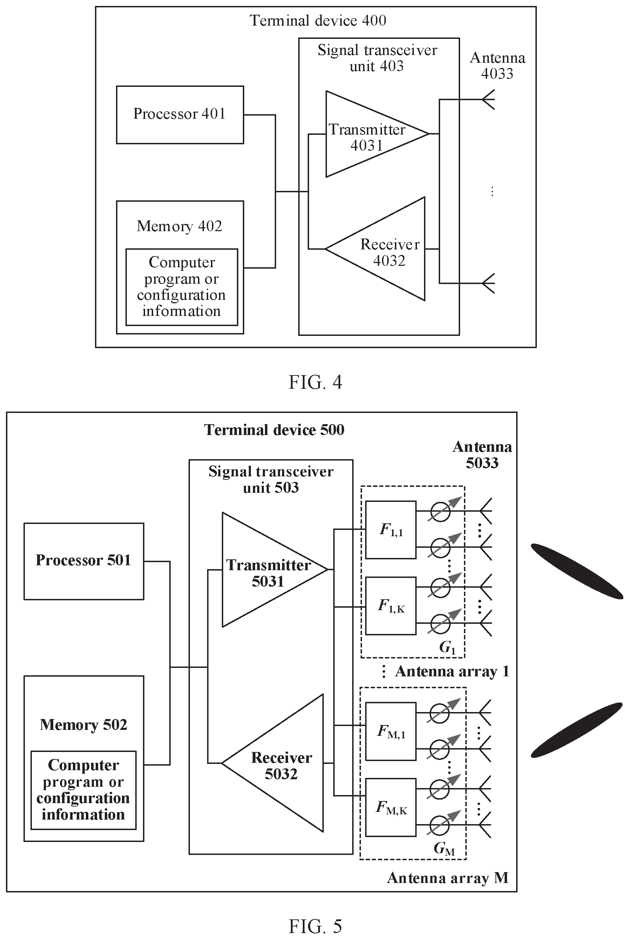

FIG. 4 is a diagram of a structure of a terminal device according to an embodiment of this application. The terminal device 400 shown in FIG. 4 includes a processor 401, a memory 402, and a signal transceiver unit 403. The memory 402 may be configured to store a computer program or configuration information. The processor 401 may be configured to execute the computer program stored in the memory 402, or read the configuration information stored in the memory 402. The signal transceiver unit 403 includes a transmitter 4031, a receiver 4032, and an antenna 4033. The transmitter 4031 may be configured to send a signal through the antenna 4033, and the receiver 4032 may be configured to receive a signal through the antenna 4033.

FIG. 5 is a diagram of a structure of a terminal device having a plurality of beam directions according to an embodiment of this application. The terminal device 500 shown in FIG. 5 includes a processor 501, a memory 502, and a signal transceiver unit 503. The memory 502 may be configured to store a computer program or configuration information. The processor 501 may be configured to execute the computer program stored in the memory 502, or read the configuration information stored in the memory 502. The signal transceiver unit 503 includes a transmitter 5031, a receiver 5032, and an antenna 5033. The transmitter 5031 may be configured to send a signal through the antenna 5033, and the receiver 5032 may be configured to receive a signal through the antenna 5033. It is assumed that the terminal device has a beam capability, for example, is a high-frequency terminal device. Considering that the terminal device can be oriented to a plurality of directions, as shown in FIG. 5, an antenna array 1 radiates a signal toward a 1st direction, which corresponds to a 1st time of spatial filtering; ...; and an antenna array M radiates a signal toward an Mth direction, which corresponds to an Mth time of spatial filtering. In this case, it may be considered that there are M times of spatial filtering, and spatial filtering m may refer to a digital precoding weight $F_m = [F_{m,1};...;F_{m,K}]$, an analog weight $G_m$, or a hybrid analog-digital weight $F_m G_m$ in FIG. 5, where m is a positive integer less than or equal to M. In another implementation, it may be considered that spatial filtering of any L antenna arrays form spatial filtering once. For example, M antenna arrays form spatial filtering once, which specifically refers to any one of the following: $[F_1;...;F_M]$, $[G_1;...;F_M]$, and $[F_1 G_1;...;F_M G_M]$.

It should be understood that structures of the devices shown in FIG. 2 to FIG. 5 are merely examples, and should not constitute any limitation on this application.

To facilitate understanding of embodiments of this application, the following briefly describes technical solutions related to embodiments of this application.

There may be a plurality of types of transmission resources for downlink signals in new radio (new radio, NR), including periodic, semi-static, aperiodic, semi-persistent, and dynamically scheduled transmission resources, to adapt to different application scenarios.

The periodic transmission resource is also referred to as a semi-static transmission resource, and is configured by using higher layer signaling or always exists by default. For example, the periodic transmission resource may be configured by using radio resource configuration (radio resource configuration, RRC) signaling, and the periodic transmission resource takes effect periodically. Transmission resources for a system message (system information block, SIB), a synchronization signal, a periodic tracking reference signal (tracking reference signal, TRS), a CSI-RS, and the like are periodic.

The semi-persistent transmission resource is configured by using higher layer signaling. An initial state of the semi-persistent transmission resource is inactive (unavailable) after the configuration. The semi-persistent transmission resource needs to be activated before being used, may take effect periodically after being activated, and may be deactivated when not required. The semi-persistent transmission resource may be activated or deactivated by using a MAC-CE. Transmission resources for an SP CSI-RS, an SP SRS, downlink semi-persistent scheduling (downlink semi-persistent scheduling, DL SPS), uplink semi-persistent scheduling (uplink semi-persistent scheduling, UL SPS), and the like are semi-persistent. This configuration manner of the transmission resource has significant advantages in terms of configuration flexibility and signaling overheads.

The aperiodic transmission resource is configured by using higher layer signaling. Before being used each time, the aperiodic transmission resource needs to be activated by using signaling, and takes effect only once after being activated. For example, the aperiodic transmission resource needs to be activated by using DCI. The dynamically scheduled transmission resource is generally scheduled for a single transmission based on DCI at a physical layer by using an OFDM symbol or a slot as a granularity. This manner has significant advantages in terms of a transmission delay.

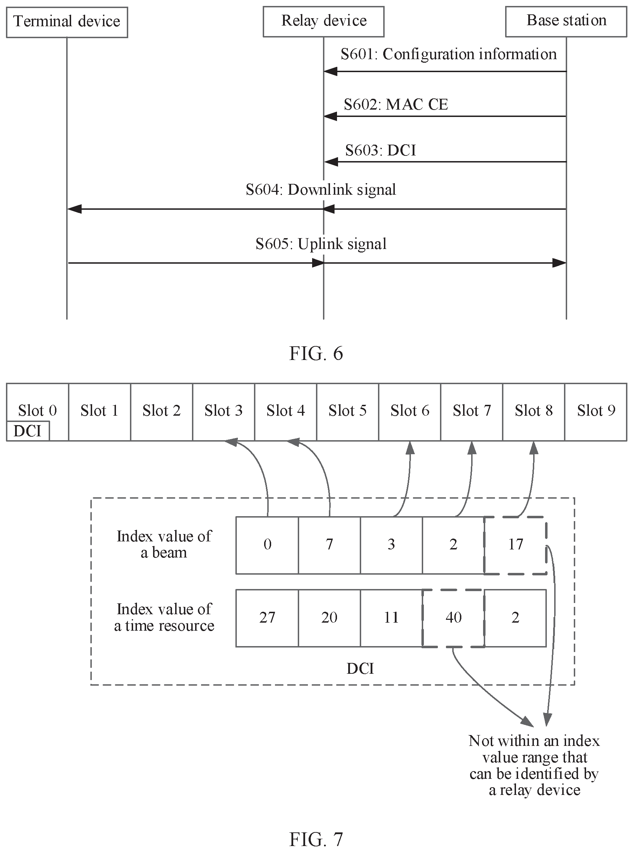

FIG. 6 is a schematic flowchart in which a base station controls a relay device to forward a signal. It may be understood that steps and an execution sequence shown in FIG. 6 are merely used as an example. During actual implementation, some of the steps may be performed, or other steps may be further performed. Similarly, the execution sequence of the steps may also be adjusted. This is not limited in embodiments of this application. The specific steps are as follows.

S601: The base station sends configuration information (or forwarding configuration information) to the relay device by using RRC signaling, where the configuration information indicates a forwarding resource of the relay device, and the configuration information includes at least one of the following: a signal forwarding direction, signal forwarding time (for example, a slot or an OFDM symbol), an access link beam for signal forwarding, a backhaul link beam for signal forwarding, a signal amplification multiple/signal amplification gain (or a signal forwarding power), a signal forwarding type, and a signal forwarding priority. The signal forwarding time may be understood as a time resource for signal forwarding. Optionally, the forwarding resource of the relay device is semi-persistent or aperiodic.

S602: When the forwarding resource (or forwarding) of the relay device is configured to be semi-persistent, the base station may activate the configuration information by using a MAC-CE. Generally, the semi-persistent forwarding resource takes effect periodically after being activated by using the MAC-CE, until the forwarding resource is deactivated or reconfigured.

S603: When the forwarding resource (or forwarding) of the relay device is configured to be aperiodic, the base station may activate the configuration information by using DCI (or the base station indicates, by using the DCI, a time resource and an access link beam that are for forwarding).

S604: The base station sends a downlink signal to the relay device, and the relay device forwards the downlink signal to a terminal device within time in which the forwarding resource is activated (for example, after the semi-persistent forwarding configuration is activated, or after the aperiodic forwarding configuration is indicated by the DCI).

S605: The terminal device sends an uplink signal to the relay device, and the relay device forwards the uplink signal to the base station within the time in which the forwarding resource is activated (for example, after the semi-persistent forwarding configuration is activated, or after the aperiodic forwarding configuration is indicated by the DCI). Step S605 may alternatively be performed before step S604.

Currently, indication signaling for an aperiodic forwarding resource, indication signaling for a periodic forwarding resource, and indication signaling for a semi-persistent forwarding resource are discussed. When a plurality of different types of indication signaling exist simultaneously, if the indication signaling does not have priority flags, a priority of the indication signaling for the aperiodic forwarding resource is higher than a priority of the indication signaling for the semi-persistent forwarding resource, and a priority of the indication signaling for the semi-persistent forwarding resource is higher than that of the indication signaling for the periodic forwarding resource; or if the indication signaling has priority flags, the priority of the indication signaling for the aperiodic forwarding resource is lower than the priority of the indication signaling for the semi-persistent forwarding resource, and the priority of the indication signaling for the semi-persistent forwarding resource is higher than that of the indication signaling for the periodic forwarding resource (or optionally, the priority of the indication signaling for the semi-persistent forwarding resource is lower than that of the indication signaling for the periodic forwarding resource). In addition, there is no conflict between beam indications corresponding to periodic forwarding resources, and there is no conflict between beam indications corresponding to semi-persistent forwarding resources. There may be a conflict between beam indications corresponding to aperiodic forwarding resources. When there is a conflict between beam indications corresponding to aperiodic forwarding resources, it is considered, by default, that a latest beam indication has a higher priority. It may be understood that within conflicting time (or in a conflicting slot, or on a conflicting forwarding resource), forwarding is performed based on a beam indicated by high-priority indication signaling, and low-priority indication signaling is ignored.

For an aperiodic forwarding resource, the base station may preconfigure a beam index and a time resource index for the relay device by using RRC signaling. The beam index may include an access link beam index, a backhaul link beam index, and a pair including the access link beam index and the backhaul link beam index. Optionally, a beam and/or a time resource may be preconfigured by OAM for the relay device. Alternatively, optionally, the beam may be reported by the relay device to the base station and/or another network device.

In R18, it is determined to use DCI 2_8 to indicate the access link beam and the time resource that correspond to the aperiodic forwarding resource. The time resource herein may be one or more of a slot position, a slot offset, a start and length indicator value (start and length indicator value, SLIV) in a slot, and the like. For example, the time resource may be a start symbol in the slot and a symbol length. The DCI 2_8 may simultaneously indicate M beam indexes and M time resource indexes corresponding to the M beam indexes, and the DCI 2_8 includes 2M fields in total, where a value of M is preconfigured by using higher layer signaling such as RRC signaling, and it is specified that a bit length of the DCI 2_8 does not exceed 128. Alternatively, the M beam indexes and the M time resource indexes are associated in one-to-one mapping relationship, and M is configured by using a higher-layer parameter numberofffields.

It is assumed that a quantity of aperiodic time resources configured by a network device (or used by the relay device) is I, a length (or a quantity of bits, or a bit width) of a field indicating a time resource is $b_{\text{time}}$, a quantity of beams is J, and a length (or a quantity of bits or a bit width) of a beam field indicating a beam is $b_{\text{beam}}$. When the length $b_{\text{beam}}$ of the beam field indicating the beam is greater than max $\left\{\lceil \log_2(J) \rceil, 1\right\}$, a beam index value indicated by the DCI 2_8 is not within a first range (or exceeds a first value J', or is not less than the first value J', or exceeds the quantity J of beams, or is not within an index value range of the beam that can be identified by the relay device). Alternatively, when the length $b_{\text{time}}$ of the time field indicating the time resource is greater than max $\left\{\lceil \log_2(I) \rceil, 1\right\}$, an index value of a time resource indicated by the DCI 2_8 is not within a second range (or is not less than a second value I', or exceeds the quantity I of time resources, or is not within an index value range of the time resource that can be identified by the relay device).

It should be understood that, in this embodiment of this application, the following descriptions may be replaced with each other: A value is not within the first range, or the value exceeds the first value J', or the value is not less than the first value J', or the value exceeds the quantity J of beams, or the value is not within the index value range of the beam that can be identified by the relay device, or the value is beyond the index value range of the access link beam that can be identified by the relay device. J' is related to J. For example, J'=J+1.

In this embodiment of this application, the following descriptions may also be replaced with each other: A value is not within the second range, or the value is not less than the second value I', or the value exceeds the quantity I of configured time resources, or the value is not within the index value range of the time resource that can be identified by the relay device, or the value is beyond the index value range of the time resource that can be identified by the relay device. I' is related to I. For example, I'=I+1.

Currently, in a solution of indicating the access link beam and the time resource that correspond to the aperiodic forwarding resource, the following problems exist: (1) A problem of how the relay device performs processing when the index value indicated by the DCI 2_8 is not within the index value range that can be identified by the relay device is not considered. (2) The following problem is not discussed: When a quantity (2M), configured by using RRC, of fields included in the DCI 2_8 is greater than a quantity of aperiodic resources that actually need to be indicated, the relay device needs to parse a valid field and an invalid field, and parsing the invalid field increases power consumption of the relay device. The valid field may be understood as a field indicating the aperiodic forwarding resource, or may be understood as a field indicating an index value of the access link beam and an index value of the time resource, and the invalid field may be understood as a field that does not carry indication information or a null field. (3) A problem of how the relay device performs processing when an index value indicated by a beam field included in activation indication information of the aperiodic resource is not within the index value range that can be identified by the relay device and a time resource indicated by a time field corresponding to the beam field conflicts with a time resource indicated by other control information (configuration information of a periodic forwarding resource, or activation indication information of a semi-persistent forwarding resource) is not considered. (4) A problem of how the relay device performs processing when the relay device successively receives activation indication information of a plurality of aperiodic forwarding resources, and when an index value indicated by a beam field included in latest received activation indication information is not within the index value range of the access link beam that can be identified by the relay device and a time resource indicated by a time field corresponding to the beam field conflicts with a time resource indicated by activation indication information of another aperiodic forwarding resource is not considered.

FIG. 7 is a diagram of a beam and a time resource that are indicated by fields included in DCI 2_8. For example, a beam field indicates an access link beam. A maximum quantity of maximum access link beams used by the relay device is 16, and the index value range of the access link beam that can be identified by the relay device is 0 to 15. A maximum quantity of maximum time resources used by the relay device is 32, and the index value range of the time resource that can be identified by the relay device is 0 to 31. It may be understood as that a maximum quantity of time resource indications (time resource indication, TRI) used by the relay device is 32, and a TRI range that can be identified by the relay device is 0 to 31. The relay device receives DCI 2_8 in a slot 0, and the DCI 2_8 indicates a beam and a time resource that correspond to an aperiodic resource. An index value of a beam corresponding to a slot 8 and an index value of a time resource corresponding to a slot 7 are beyond the ranges that can be identified by the relay device, and an index value of a beam corresponding to another slot and an index value of a time resource corresponding to another slot are not beyond the ranges that can be identified by the relay device. Currently, a problem of how the relay device performs processing when an index value range indicated by the DCI 2_8 exceeds the index value range that can be identified by the relay device urgently needs to be resolved.

Therefore, an embodiment of this application provides a signal forwarding method, to resolve a problem of how a relay device performs processing when an index value indicated by activation indication information (or DCI) of an aperiodic forwarding resource is not within an index value range that can be identified by the relay device (or exceeds a quantity J of beams).

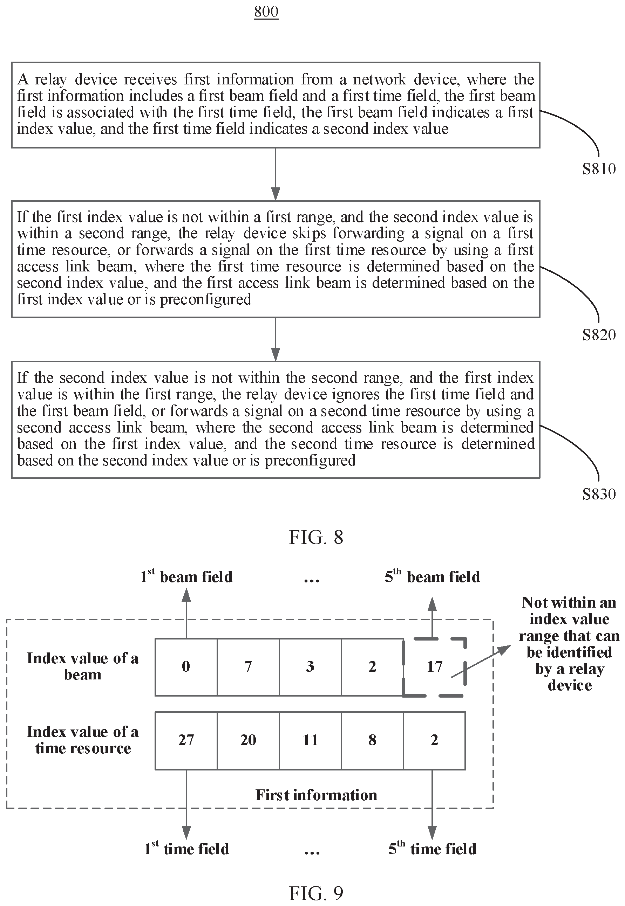

FIG. 8 is an example flowchart of a signal forwarding method 800 according to an embodiment of this application. A network device in this embodiment of this application may be an access network device or a base station. A beam field indicates an index value of an access link beam, and a time field indicates an index value of a time resource. "xx corresponds to yy" may be understood as "xx is associated with yy". "Forward sth. on xx through yy" may be understood as "forward sth. on xx by using yy". "Ignore an xx field" may be understood as "the xx field does not take effect" or "skip forwarding (or skip sending, or skip receiving) sth. on x corresponding to the xx field".

S810: The network device sends first information to a relay device, where the first information includes a first beam field and a first time field, the first beam field corresponds to/is associated with the first time field, the first beam field indicates a first index value, and the first time field indicates a second index value. Correspondingly, the relay device receives the first information from the network device. The first information may be activation indication information of an aperiodic forwarding resource. For example, the first information is DCI or the foregoing DCI 2_8.

Optionally, before the network device sends the first information to the relay device, the network device may send RRC signaling to the relay device. The RRC signaling is used to configure an index value of the access link beam and an index value of the time resource for the relay device, and the RRC signaling may be further used to configure a bit length/a quantity of fields of the first information for the relay device.

Optionally, OAM may also configure an index value of the access link beam, an index value of the time resource, and a bit length/a quantity of fields of the first information for the network device and/or the relay device. Optionally, the relay device reports an index value of the access link beam, an index value of the time resource, and a bit length/a quantity of fields of the first information to the network device.

S820: If the first index value is not within a first range, and the second index value is within a second range, the relay device skips forwarding a signal on a first time resource, or forwards a signal on the first time resource through/by using a first access link beam, where the first time resource is determined based on the second index value, and the first access link beam is determined based on the first index value or is preconfigured. Optionally, an index value of the first time resource is the second index value.

The first range may be understood as an index value range of the access link beam that can be identified by the relay device, and the second range may be understood as an index value range of the time resource that can be identified by the relay device.

That the first index value is not within the first range may be understood as that the first index value indicated by the first beam field is not within the index value range of the access link beam that can be identified by the relay device, or the first index value indicated by the first beam field is beyond the index value range of the access link beam that can be identified by the relay device. That the second index value is within the second range may be understood as that the second index value indicated by the first time field is within the index value range of the time resource that can be identified by the relay device, or the second index value indicated by the first time field is not beyond the index value range of the time resource that can be identified by the relay device.

In an implementation, the first access link beam is determined based on the first index value and a maximum quantity of access link beams used by the relay device. Specifically, the relay device may determine an index value of the first access link beam based on the first index value and the maximum quantity of access link beams used by the relay device, to determine the first access link beam. The maximum quantity of access link beams used by the relay device may be preconfigured by the OAM, or may be reported by the relay device to the network device based on a capability of the relay device.

For example, the index value of the first access link beam is $X_{new}=mod(X_{invalid}, J)$, where $X_{invalid}$ is the first index value, J is the maximum quantity of access link beams used by the relay device, $X_{invalid}$ is greater than or equal to J, and $mod()$ is a modulo function. For example, if the first index value is $X_{invalid}=17$, an index value range of the access link beam used by the relay device is 0 to 15 or 1 to 16, and the maximum quantity of access link beams used by the relay device is J=16, the index value of the first access link beam is $X_{new}=mod(17, 16)=1$.

For example, the index value of the first access link beam is $X_{new}=mod(X_{invalid}, J')$, where $X_{invalid}$ is the first index value, and J' is related to the quantity J of access link beams used by the relay device. For example, J'=J, or J'=J+1. $mod()$ is a modulo function. For example, if the first index value is $X_{invalid}$=17, and the quantity of access link beams used by the relay device is J=16, the index value of the first access link beam is $X_{new}$=mod(17, 16)=1. Further, an index J (or a (J+1)$^{th}$ index) indicates a special state, for example, indicates to disable relay forwarding.

For example, the first access link beam is determined by the relay device by using a cyclic mapping method based on the first index value and the maximum quantity of access link beams used by the relay device. For example, if the first index value is 17, and the maximum quantity of access link beams used by the relay device is 16, the index value of the first access link beam is 1.

For example, the first access link beam is a predefined or preconfigured access link beam. When an index value indicated by a specific beam field included in the first information is not within the index value range of the access link beam that can be identified by the relay device, the relay device may forward a signal by using the predefined or preconfigured access link beam. For example, if an index of the predefined or preconfigured access link beam is 0, when $X_{invalid} \geq J$, $X_{new}$=0.

For example, the first access link beam may alternatively be an access link beam reported by the relay device to the network device in advance. When an index value indicated by a specific beam field included in the first information is not within the index value range of the access link beam that can be identified by the relay device, the relay device may forward a signal by using the access link beam that is reported in advance.

In another implementation, a second beam field indicates the first access link beam, the second beam field is a beam field adjacent to the first beam field, and the first information further includes the second beam field. Specifically, the relay device may determine the second beam field adjacent to the first beam field indicating the first index value, and determine the first access link beam based on an index value indicated by the second beam field.

For example, the second beam field is a field adjacent to the first beam field and located on the left of the first beam field; or the second beam field is a field adjacent to the first beam field and located on the right of the first beam field.

Optionally, the first information includes N beam fields and N time fields, the N beam fields and the N time fields are in one-to-one correspondence/associated in a one-to-one manner, the N beam fields include the first beam field and the second beam field, the N time fields include the first time field, and N is a positive integer.

Optionally, if the first index value is not within the first range, and the second index value is within the second range, the relay device ignores the N beam fields and the N time fields that are included in the first information, or the relay device skips forwarding a signal on N time resources indicated by the N time fields. In this embodiment of this application, that the N beam fields and the N time fields that are included in the first information are ignored may be understood as that the N beam fields and the N time fields do not take effect.

With reference to a specific example, the following uses an example to describe a signal forwarding status of the relay device when the first index value indicated by the first beam field is not within the first range and the second index value indicated by the first time field is within the second range.

FIG. 9 is a diagram of index values indicated by a beam field and a time field that are included in first information. For example, the index value range of the access link beam that can be identified by the relay device is 0 to 15, and the index value range of the time resource that can be identified by the relay device is 0 to 31. The first information includes five beam fields and five time fields. A 1$^{st}$ beam field corresponds to a 1$^{st}$ time field, a 2$^{nd}$ beam field corresponds to a 2$^{nd}$ time field, a 3$^{rd}$ beam field corresponds to a 3$^{rd}$ time field, a 4$^{th}$ beam field corresponds to a 4$^{th}$ time field, and a 5$^{th}$ beam field corresponds to a 5$^{th}$ time field. An index value 17 indicated by the 5$^{th}$ beam field is not within the index value range of the access link beam that can be identified by the relay device, and an index value 2 indicated by the 5$^{th}$ time field is within the index value range of the time resource that can be identified by the relay device. The 5$^{th}$ beam field may be understood as the foregoing first beam field, the 5$^{th}$ time field may be understood as the foregoing first time field, the index value 17 may be understood as the foregoing first index value, and the index value 2 indicated by the 5$^{th}$ time field may be understood as the foregoing second index value.

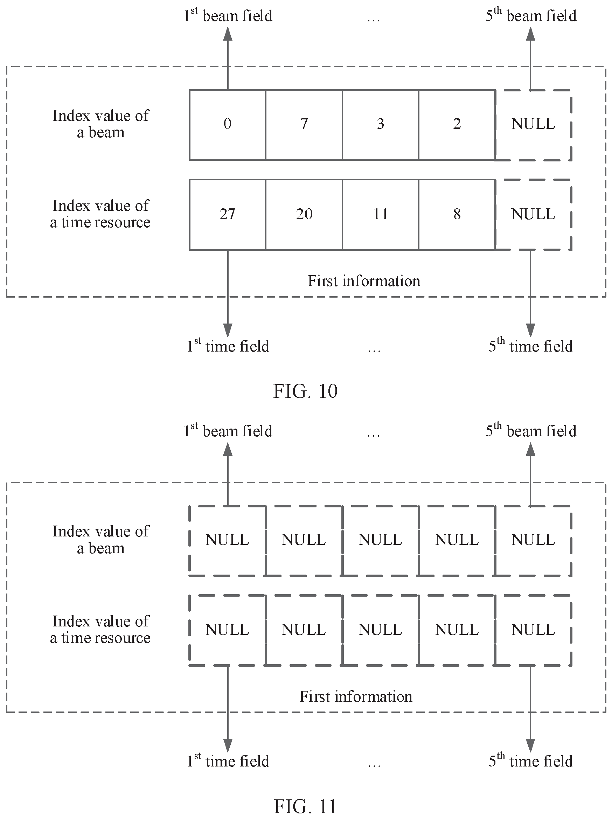

In a first example, because the index value 17 indicated by the 5$^{th}$ beam field is not within the index value range of the access link beam that can be identified by the relay device, the relay device may skip forwarding a signal on a time resource whose index value is 2 and that is indicated by the 5$^{th}$ time field corresponding to the 5$^{th}$ beam field. In this example, the 5$^{th}$ beam field and the 5$^{th}$ time field do not take effect. FIG. 10 is a diagram in which a 5$^{th}$ beam field and a 5$^{th}$ time field do not take effect. "NULL" indicates that a field is invalid or ignored, or indicates that forwarding is not performed.

In a second example, because the index value 17 indicated by the 5$^{th}$ beam field is not within the index value range of the access link beam that can be identified by the relay device, the relay device may skip forwarding a signal on five time resources indicated by the five time fields included in the first information, or the relay device may ignore the five time resources indicated by the five time fields included in the first information. In this example, none of the five beam fields and the five time fields that are included in the first information takes effect. FIG. 11 is a diagram in which none of five beam fields and five time fields takes effect.

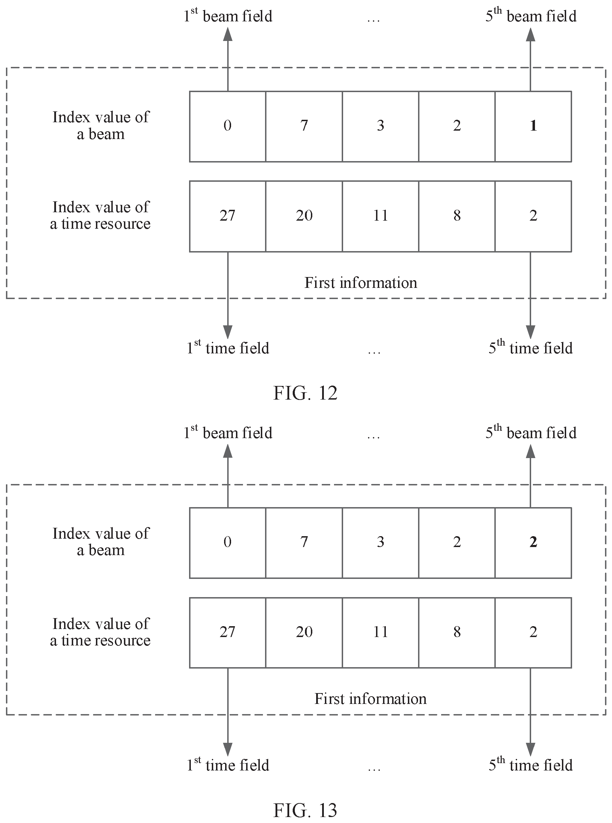

In a third example, because the index value 17 indicated by the 5$^{th}$ beam field is not within the index value range of the access link beam that can be identified by the relay device, the relay device may forward a signal by using an access link beam whose index value is 1 on a time resource whose index value is 2 and that is indicated by the 5th time field. The access link beam whose index value is 1 is determined by using a modulo function based on the index value 17 and the maximum quantity 16 of access link beams used by the relay device. In this example, the access link beam whose index value is 1 may be understood as the foregoing first access link beam, and the 5th beam field and the 5th time field take effect. FIG. 12 is a diagram in which a 5th beam field and a 5th time field take effect.

In a fourth example, because the index value 17 indicated by the 5th beam field is not within the index value range of the access link beam that can be identified by the relay device, the relay device may forward a signal by using an access link beam whose index value is 2 on a time resource whose index value is 2 and that is indicated by the 5th time field. The access link beam whose index value is 2 is indicated by the 4th beam field adjacent to the 5th beam field. In this example, the 4th beam field may be understood as the foregoing second beam field, the access link beam whose index value is 2 may be understood as the foregoing first access link beam, and the 5th beam field and the 5th time field take effect. FIG. 13 is another diagram in which a 5th beam field and a 5th time field take effect.

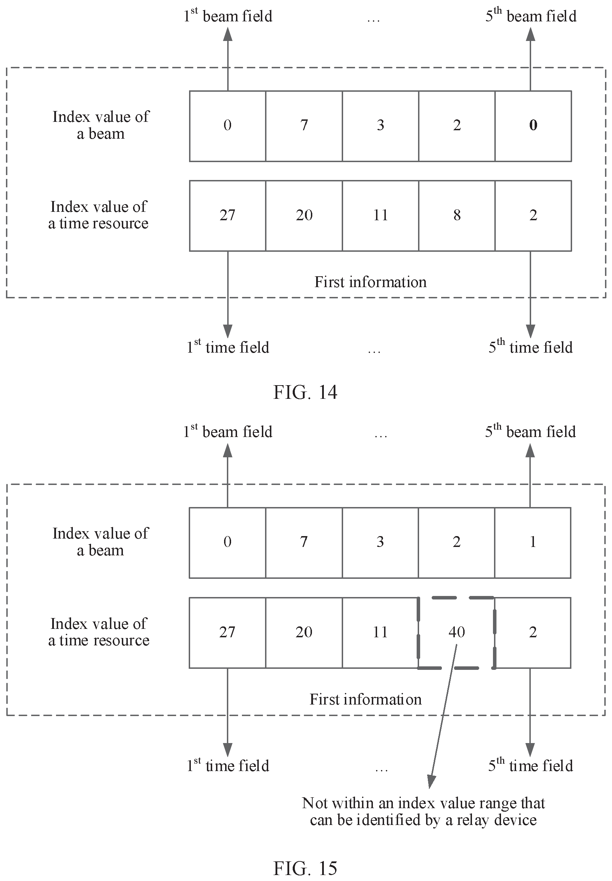

In a fifth example, because the index value 17 indicated by the 5th beam field is not within the index value range of the access link beam that can be identified by the relay device, the relay device may forward a signal by using an access link beam whose index value is 0 on a time resource whose index value is 2 and that is indicated by the 5th time field. The access link beam whose index value is 0 is predefined or preconfigured. In this example, the access link beam whose index value is 0 may be understood as the foregoing first access link beam, and the 5th beam field and the 5th time field take effect. FIG. 14 is another diagram in which a 5th beam field and a 5th time field take effect.

It may be understood that step S820 and step S830 are two parallel steps, and only one of the steps needs to be performed.

S830: If the second index value is not within the second range, and the first index value is within the first range, the relay device ignores the first time field and the first beam field, or forwards a signal on a second time resource through/by using a second access link beam, where the second access link beam is determined based on the first index value, and the second time resource is determined based on the second index value or is preconfigured. Optionally, an index value of the second access link beam is the first index value.

That the second index value is not within the second range may be understood as that the second index value indicated by the first time field is not within the index value range of the time resource that can be identified by the relay device, or the second index value indicated by the first time field is beyond the index value range of the time resource that can be identified by the relay device. That the first index value is within the first range may be understood as that the first index value indicated by the first beam field is within the index value range of the access link beam that can be identified by the relay device, or the first index value indicated by the first beam field is not beyond the index value range of the access link beam that can be identified by the relay device.

In an implementation, the second time resource is determined based on the second index value and a maximum quantity of time resources used by the relay device. Specifically, the relay device may determine an index value of the second time resource based on the second index value and the maximum quantity of time resources used by the relay device, to determine the second time resource. The maximum quantity of time resources used by the relay device may be preconfigured by the network device by using signaling such as RRC.

For example, the index value of the second time resource is $Y_{new}=mod(Y_{invalid}, I)$, where $Y_{invalid}$ is the second index value, I is the maximum quantity of time resources used by the relay device (a quantity of time resources configured by the network device), $Y_{invalid}$ is greater than or equal to I, and mod() is a modulo function. For example, if the second index value is $Y_{invalid}=40$, and the quantity of time resources configured by the network device for the relay device is I=32, the index value of the second time resource is $Y_{new}=mod(40, 32)=8$.

For example, the index value of the second time resource is $Y_{new}=mod(Y_{invalid}, I')$, where $Y_{invalid}$ is the second index value, and I' is related to the quantity I of time resources configured by the network device (or corresponding to aperiodic forwarding configuration information). For example, I'=I, or I'=I+1. mod() is a modulo function. For example, if the first index value is $Y_{invalid}=20$, and the quantity of time resources configured by the network device (or corresponding to the aperiodic forwarding configuration information) is I=8, the index value of the second time resource is $Y_{new}=mod(20, 8)=4$. Further, an index I (or an $(I+1)^{th}$ index) indicates a special state, for example, indicates to disable relay forwarding.

It should be understood that the index value of the second time resource is determined based on an indication field of the time resource. The index value needs to be further mapped to the time resource configured by the network device (or corresponding to the aperiodic forwarding configuration information) (or an actually configured time resource). A mapping rule is that mapping is performed in ascending order of indexes, and mapping is successively performed. Alternatively, an index in the indication field of the time resource is cyclically mapped to an ascending order of a time domain resource configured by using ncr-AperiodicFwdConfig and a resource identifier configured by using ncr-AperiodicFwdTimeResourceId.

It should be understood that the second index value may be directly and cyclically mapped to the time resource configured by the network device (or corresponding to the aperiodic forwarding configuration information) (or the actually configured time resource). A mapping rule is that mapping is performed in ascending order of indexes, and cyclic mapping is successively performed.

For example, the index value of the second time resource is determined by using a cyclic mapping method based on the second index value and the quantity of time resources configured by the network device for the relay device. For example, if the second index value is 40, and the quantity of time resources configured by the network device for the relay device is I=32, the index value of the second time resource is 8.

For example, the second time resource is a predefined or preconfigured time resource. When an index value indicated by a specific time field included in the first information is not within the index value range of the time resource that can be identified by the relay device, the relay device may forward a signal on the predefined or preconfigured time resource.

For example, the second time resource may alternatively be a time resource reported by the relay device to the network device in advance. When an index value indicated by a specific time field included in the first information is not within the index value range of the time resource that can be identified by the relay device, the relay device may forward a signal on the time resource reported in advance.

In another implementation, a second time field indicates the second time resource, the second time field is a time field adjacent to the first time field, and the first information/the N time fields further includes/include the second time field. Specifically, the relay device may determine the second time field adjacent to the first time field indicating the second index value, and determine the second time resource based on an index value indicated by the second time field.

For example, the second time field is a field adjacent to the first time field and located on the left of the first time field; or the second time field is a field adjacent to the first time field and located on the right of the first time field.

Optionally, if the second index value is not within the second range, and the first index value is within the first range, the relay device ignores the N beam fields and the N time fields that are included in the first information.

With reference to a specific example, the following uses an example to describe a signal forwarding status of the relay device when the second index value indicated by the first time field is not within the second range and the first index value indicated by the first beam field is within the first range.

FIG. 15 is another diagram of index values indicated by a beam field and a time field that are included in first information. For example, the index value range of the access link beam that can be identified by the relay device is 0 to 15, and the index value range of the time resource that can be identified by the relay device is 0 to 31. The first information includes five beam fields and five time fields. A 1st beam field corresponds to a 1st time field, a 2nd beam field corresponds to a 2nd time field, a 3rd beam field corresponds to a 3rd time field, a 4th beam field corresponds to a 4th time field, and a 5th beam field corresponds to a 5th time field. An index value 40 indicated by the 4th time field is not within the index value range of the time resource that can be identified by the relay device, and an index value 2 indicated by the 4th beam field is within the index value range of the access link beam that can be identified by the relay device. The 4th beam field may be understood as the foregoing first beam field, the 4th time field may be understood as the foregoing first time field, the index value 40 may be understood as the foregoing second index value, and the index value 2 indicated by the 4th beam field may be understood as the foregoing first index value.

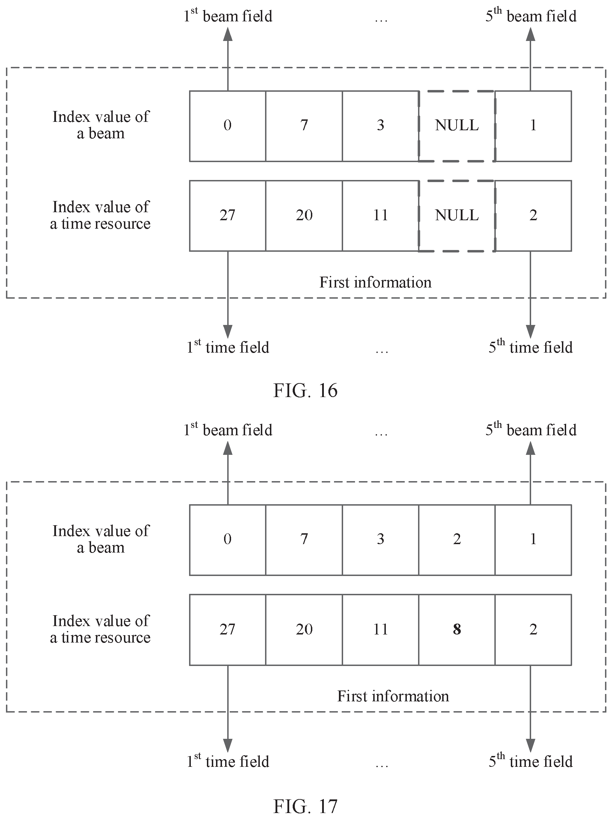

In a first example, because the index value 40 indicated by the 4th time field is not within the index value range of the time resource that can be identified by the relay device, the relay device may ignore the 4th time field and the 4th beam field. In this example, the 4th beam field and the 4th time field do not take effect. FIG. 16 is a diagram in which a 4th beam field and a 4th time field do not take effect.

In a second example, because the index value 40 indicated by the 4th time field is not within the index value range of the time resource that can be identified by the relay device, the relay device may ignore the five beam fields and the five time fields that are included in the first information. In this example, none of the five beam fields and the five time fields that are included in the first information takes effect. FIG. 11 is a diagram in which none of five beam fields and five time fields takes effect. In a more general case, if an mth field included in the first information is not within the index value range of the time resource that can be identified by the relay device, the relay device may ignore the mth field, all time fields after the mth field, and all beam fields after the mth field, where m is a positive integer less than 2M.

In a third example, because the index value 40 indicated by the 4th time field is not within the index value range of the time resource that can be identified by the relay device, the relay device may forward a signal on a time resource whose index value is 8 by using an access link beam whose index value is 2 and that is indicated by the 4th beam field. The time resource whose index value is 8 is determined by using a modulo function based on the index value 40 and the maximum quantity 32 of time resources used by the relay device (the quantity of time resources configured by the network device). In this example, the time resource whose index value is 8 may be understood as the foregoing second time resource, the access link beam whose index value is 2 may be understood as the foregoing second access link

beam, and the 4th beam field and the 4th time field take effect. FIG. 17 is a diagram in which a 4th beam field and a 4th time field take effect.

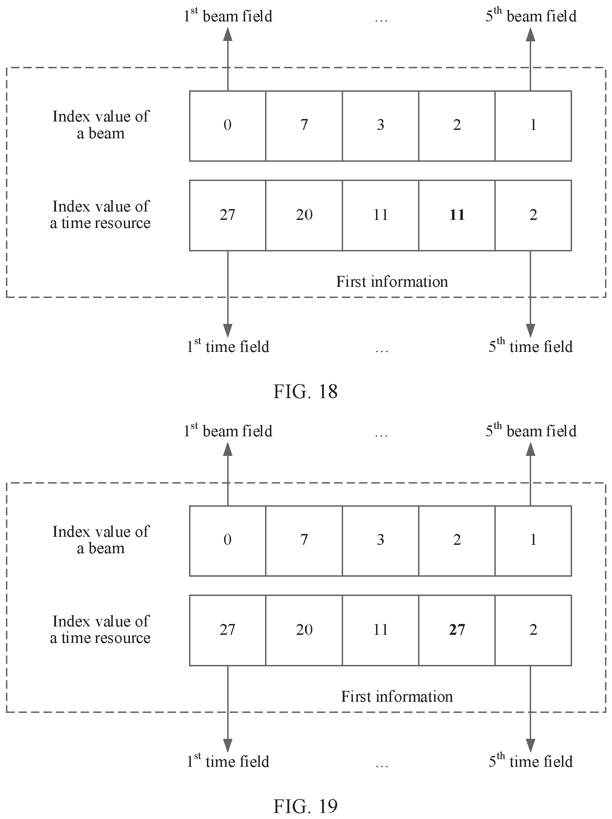

In a fourth example, because the index value 40 indicated by the 4th time field is not within the index value range of the time resource that can be identified by the relay device, the relay device may forward a signal on a time resource whose index value is 11 by using an access link beam whose index value is 2 and that is indicated by the 4th beam field. The time resource whose index value is 11 is indicated by the 3rd time field adjacent to the 4th time field. In this example, the 3rd time field may be understood as the foregoing second time field, the time resource whose index value is 11 may be understood as the foregoing second time resource, and the 4th beam field and the 4th time field take effect. FIG. 18 is another diagram in which a 4th beam field and a 4th time field take effect.

In a fifth example, because the index value 40 indicated by the 4th time field is not within the index value range of the time resource that can be identified by the relay device, the relay device may forward a signal on a time resource whose index value is 27 by using an access link beam whose index value is 2 and that is indicated by the 4th beam field. The time resource whose index value is 27 is predefined or preconfigured. In this example, the time resource whose index value is 27 may be understood as the foregoing second time resource, and the 4th beam field and the 4th time field take effect. FIG. 19 is another diagram in which a 4th beam field and a 4th time field take effect.

Based on the technical solution provided in this embodiment of this application, after the relay device receives the first information (the activation indication information of the aperiodic forwarding resource), when the first index value indicated by the first beam field included in the first information is not within the first range (the index value range of the access link beam that can be identified by the relay device), or the second index value indicated by the first time field included in the first information is not within the second range (the index value range of the time resource that can be identified by the relay device), the relay device may determine how to forward a signal or determine whether to forward a signal. Therefore, in this embodiment of this application, a problem of how the relay device performs processing when the index value indicated by the activation indication information of the aperiodic forwarding resource is not within the index value range that can be identified by the relay device can be resolved.

Optionally, if the first index value is not within the first range, and the second index value is not within the second range, the relay device ignores the first time field and the first beam field, or forwards a signal on the second time resource by using the first access link beam, where the first access link beam is determined based on the first index value or is preconfigured, and the second time resource is determined based on the second index value or is preconfigured.

It may be understood as that if the first index value indicated by the first beam field is not within the index value range of the access link beam that can be identified by the relay device, and the second index value indicated by the first time field is not within the index value range of the time resource that can be identified by the relay device, the relay device ignores the first time field and the first beam field, or forwards a signal on the second time resource by using the first access link beam.

Based on the optional solution, after the relay device receives the first information, when the first index value indicated by the first beam field included in the first information is not within the first range (the index value range of the access link beam that can be identified by the relay device), and the second index value indicated by the first time field included in the first information is not within the second range (the index value range of the time resource that can be identified by the relay device), the relay device may determine how to forward a signal.

Optionally, if the first index value is not within the first range, and the second index value is not within the second range, the relay device ignores the N time resources indicated by the N time fields included in the first information.

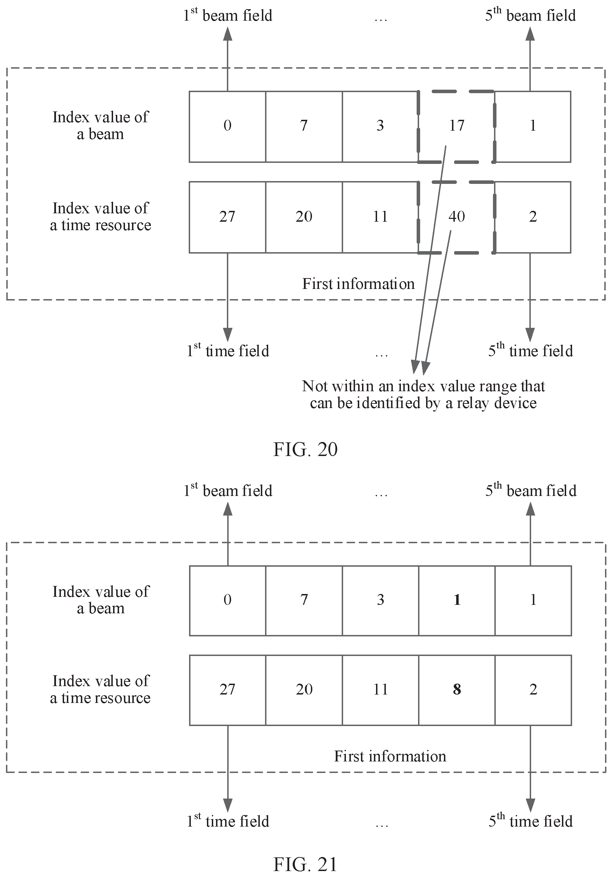

FIG. 20 is another diagram of index values indicated by a beam field and a time field that are included in first information. For example, the index value range of the access link beam that can be identified by the relay device is 0 to 15, and the index value range of the time resource that can be identified by the relay device is 0 to 31. The first information includes five beam fields and five time fields. A 1st beam field corresponds to a 1st time field, a 2nd beam field corresponds to a 2nd time field, a 3rd beam field corresponds to a 3rd time field, a 4th beam field corresponds to a 4th time field, and a 5th beam field corresponds to a 5th time field. An index value 17 indicated by the 4th beam field is not within the index value range of the access link beam that can be identified by the relay device, and an index value 40 indicated by the 4th time field is also not within the index value range of the time resource that can be identified by the relay device. The 4th beam field may be understood as the foregoing first beam field, the 4th time field may be understood as the foregoing first time field, the index value 17 may be understood as the foregoing first index value, and the index value 40 may be understood as the foregoing second index value.

With reference to a specific example, the following uses an example to describe a signal forwarding status of the relay device when the first index value indicated by the first beam field is not within the first range and the second index value indicated by the first time field is not within the second range.

In a first example, because the index value 17 indicated by the 4th beam field is not within the index value range of the access link beam that can be identified by the relay device, and the index value 40 indicated by the 4th

time field is not within the index value range of the time resource that can be identified by the relay device, the relay device may ignore the 4th time field and the 4th beam field. In this example, the 4th beam field and the 4th time field do not take effect. FIG. 16 is a diagram in which a 4th beam field and a 4th time field do not take effect.

In a second example, because the index value 17 indicated by the 4th beam field is not within the index value range of the access link beam that can be identified by the relay device, and the index value 40 indicated by the 4th time field is not within the index value range of the time resource that can be identified by the relay device, the relay device may ignore the five beam fields and the five time fields that are included in the first information. In this example, none of the five beam fields and the five time fields that are included in the first information takes effect. FIG. 11 is a diagram in which none of five beam fields and five time fields takes effect.

In a third example, because the index value 17 indicated by the 4th beam field is not within the index value range of the access link beam that can be identified by the relay device, and the index value 40 indicated by the 4th time field is not within the index value range of the time resource that can be identified by the relay device, the relay device may forward a signal on a time resource whose index value is 8 by using an access link beam whose index value is 1. The time resource whose index value is 8 is determined by using a modulo function based on the index value 40 and the maximum quantity 32 of time resources used by the relay device (the quantity of time resources configured by the network device), and the access link beam whose index value is 1 is determined by using a modulo function based on the index value 17 and the maximum quantity 16 of access link beams used by the relay device. In this example, the access link beam whose index value is 1 may be understood as the foregoing first access link beam, the time resource whose index value is 8 may be understood as the foregoing second time resource, and the 4th beam field and the 4th time field take effect. FIG. 21 is another diagram in which a 4th beam field and a 4th time field take effect.

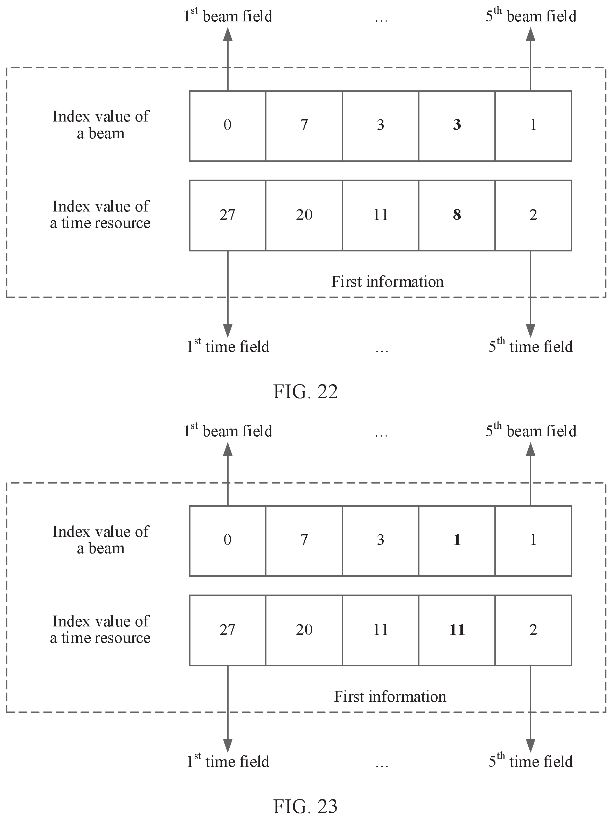

In a fourth example, because the index value 17 indicated by the 4th beam field is not within the index value range of the access link beam that can be identified by the relay device, and the index value 40 indicated by the 4th time field is not within the index value range of the time resource that can be identified by the relay device, the relay device may forward a signal on a time resource whose index value is 8 by using an access link beam whose index value is 3. The time resource whose index value is 8 is determined by using a modulo function based on the index value 40 and the maximum quantity 32 of time resources used by the relay device (the quantity of time resources configured by the network device), and the access link beam whose index value is 3 is indicated by the 3rd beam field adjacent to the 4th beam field. In this example, the access link beam whose index value is 3 may be understood as the foregoing first access link beam, the time resource whose index value is 8 may be understood as the foregoing second time resource, and the 4th beam field and the 4th time field take effect. FIG. 22 is another diagram in which a 4th beam field and a 4th time field take effect.

In a fifth example, because the index value 17 indicated by the 4th beam field is not within the index value range of the access link beam that can be identified by the relay device, and the index value 40 indicated by the 4th time field is not within the index value range of the time resource that can be identified by the relay device, the relay device may forward a signal on a time resource whose index value is 11 by using an access link beam whose index value is 1. The time resource whose index value is 11 is indicated by the 3rd time field adjacent to the 4th time field, and the access link beam whose index value is 1 is determined by using a modulo function based on the index value 17 and the maximum quantity 16 of access link beams used by the relay device. In this example, the access link beam whose index value is 1 may be understood as the foregoing first access link beam, the time resource whose index value is 11 may be understood as the foregoing second time resource, and the 4th beam field and the 4th time field take effect. FIG. 23 is another diagram in which a 4th beam field and a 4th time field take effect.

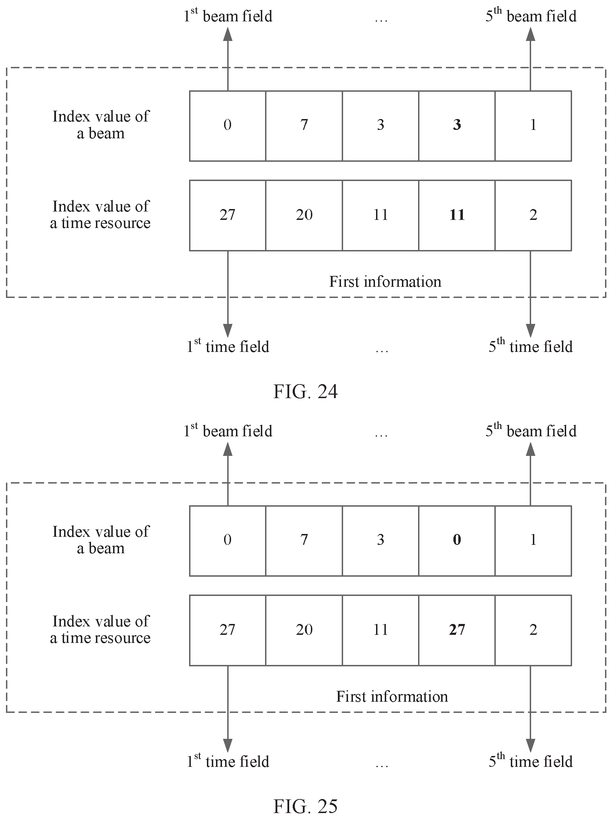

In a sixth example, because the index value 17 indicated by the 4th beam field is not within the index value range of the access link beam that can be identified by the relay device, and the index value 40 indicated by the 4th time field is not within the index value range of the time resource that can be identified by the relay device, the relay device may forward a signal on a time resource whose index value is 11 by using an access link beam whose index value is 3. The time resource whose index value is 11 is indicated by the 3rd time field adjacent to the 4th time field, and the access link beam whose index value is 3 is indicated by the 3rd beam field adjacent to the 4th beam field. In this example, the access link beam whose index value is 3 may be understood as the foregoing first access link beam, the time resource whose index value is 11 may be understood as the foregoing second time resource, and the 4th beam field and the 4th time field take effect. FIG. 24 is another diagram in which a 4th beam field and a 4th time field take effect.

In a seventh example, because the index value 17 indicated by the 4th beam field is not within the index value range of the access link beam that can be identified by the relay device, and the index value 40 indicated by the 4th time field is not within the index value range of the time resource that can be identified by the relay device, the relay device may forward a signal on a time resource whose index value is 27 by using an access link beam whose index value is 0. The time resource whose index value is 27 is predefined or preconfigured, and the access link beam whose index value is 0 is predefined or preconfigured. In this example, the access link beam whose index value is 0 may be understood as the foregoing first access link beam, the time resource whose index value is 27 may be understood as the foregoing second time resource, and the 4th beam field and the 4th time field take effect. FIG. 25 is another diagram in which a 4th beam field and a 4th time field take effect.

Optionally, if the first index value is within the first range, and the second index value is within the second range, the relay device forwards a signal on the first time resource by using the second access link beam, where the first time resource is determined based on the second index value, and the second access link beam is determined based on the first index value. Optionally, the index value of the first time resource is the second index value, and the index value of the second access link beam is the first index value.

For example, if the first index value indicated by the first beam field is within the index value range of the access link beam that can be identified by the relay device, and the second index value indicated by the first time field is within the index value range of the time resource that can be identified by the relay device, the relay device forwards a signal on the first time resource by using the second access link beam, where the index value of the first time resource is the second index value, and the index value of the second access link beam is the first index value.

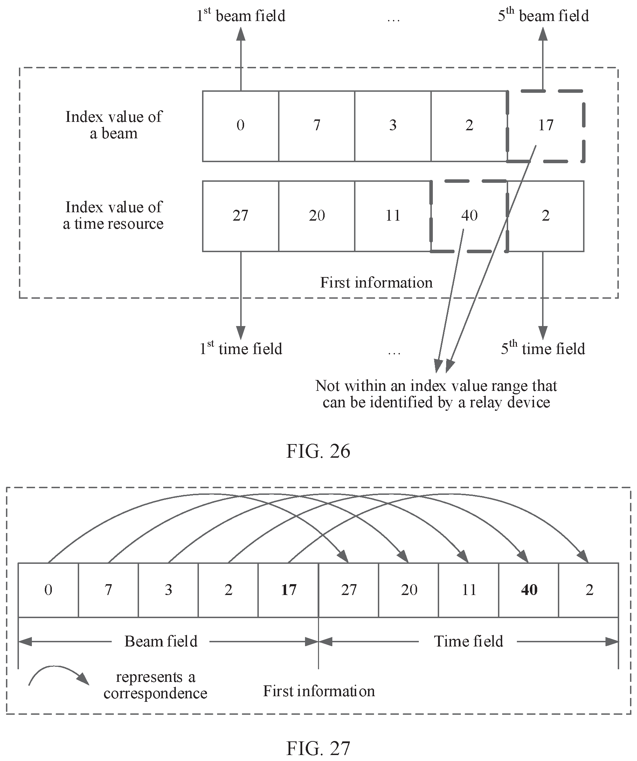

FIG. 26 is another diagram of index values indicated by a beam field and a time field that are included in first information. For example, the index value range of the access link beam that can be identified by the relay device is 0 to 15, and the index value range of the time resource that can be identified by the relay device is 0 to 31. The first information includes five beam fields and five time fields. A 1st beam field corresponds to a 1st time field, a 2nd beam field corresponds to a 2nd time field, a 3rd beam field corresponds to a 3rd time field, a 4th beam field corresponds to a 4th time field, and a 5th beam field corresponds to a 5th time field. An index value 17 indicated by the 5th beam field is not within the index value range of the access link beam that can be identified by the relay device, and an index value 40 indicated by the 4th time field is also not within the index value range of the time resource that can be identified by the relay device. In this case, priorities of the beam field and the time field may be restricted. When an index value indicated by a high-priority field is not within the index value range that can be identified by the relay device, the field still takes effect. When an index value indicated by a low-priority field is not within the index value range that can be identified by the relay device, the field does not take effect.

Optionally, a priority of a beam field indicating an index value that is not within the index value range that can be identified by the relay device is restricted to be higher than a priority of a time field indicating an index value that is not within the index value range that can be identified by the relay device. In this case, the 5th beam field takes effect, and the 4th time field does not take effect. For example, because the index value 17 indicated by the 5th beam field is not within the index value range of the access link beam that can be identified by the relay device, the relay device may determine an access link beam whose index value is 1 by using a modulo function based on the index value 17 and the maximum quantity 16 of access link beams used by the relay device, and forward a signal on a time resource whose index value is 2 by using the access link beam whose index value is 1. Because the index value 40 indicated by the 4th time field is not within the index value range of the time resource that can be identified by the relay device, the relay device ignores the 4th time field and the 4th beam field. In this example, the 4th beam field and the 4th time field do not take effect, and the 5th beam field and the 5th time field take effect. FIG. 16 is a diagram in which a 4th beam field and a 4th time field do not take effect, and a 5th beam field and a 5th time field take effect.

Optionally, a priority of a time field indicating an index value that is not within the index value range that can be identified by the relay device is restricted to be higher than a priority of a beam field indicating an index value that is not within the index value range that can be identified by the relay device. In this case, the 4th time field takes effect, and the 5th beam field does not take effect. For example, because the index value 40 indicated by the 4th time field is not within the index value range of the time resource that can be identified by the relay device, the relay device may determine a time resource whose index value is 8 by using a modulo function based on the index value 40 and the maximum quantity 32 of time resources used by the relay device (the quantity of time resources configured by the network device), and forward a signal on the time resource whose index value is 8 by using an access link beam whose index value is 2. Because the index value 17 indicated by the 5th beam field is not within the index value range of the access link beam that can be identified by the relay device, the relay device ignores the 5th time field and the 5th beam field. In this example, the 4th beam field and the 4th time field take effect, and the 5th beam field and the 5th time field do not take effect. FIG. 10 is a diagram in which a 4th beam field and a 4th time field take effect, and a 5th beam field and a 5th time field do not take effect.

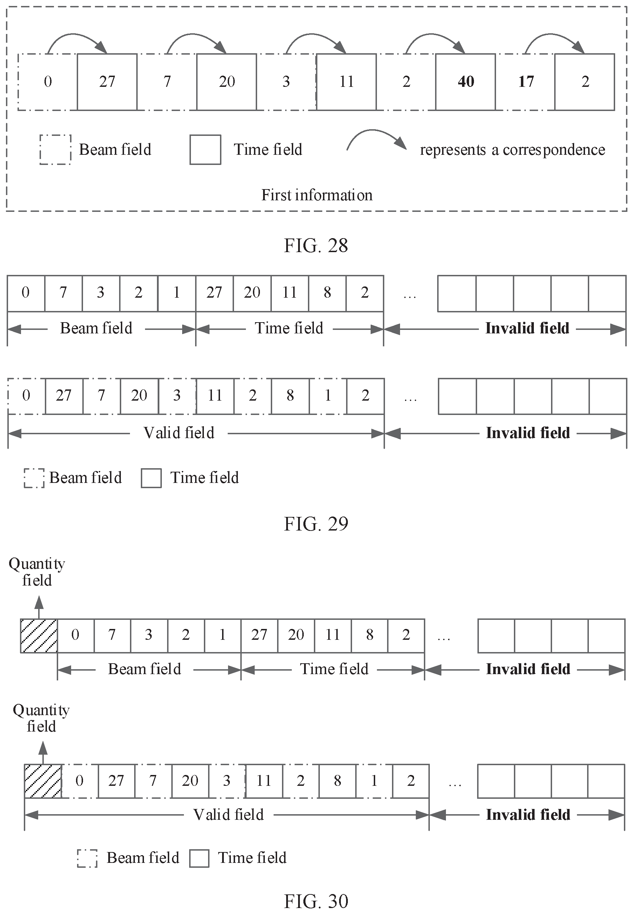

Optionally, a location relationship between the N beam fields and the N time fields that are included in the first information includes the following two formats. In a first format, the N beam fields are consecutive, and the N time fields are consecutive. FIG. 27 is a diagram of a location relationship between N beam fields and N time fields. For example, N=5. In a second format, the beam fields and the time fields are staggered, and one beam field is followed by one corresponding time field, or one time field is followed by one corresponding beam field. FIG. 28 is another diagram of a location relationship between N beam fields and N time fields. For example, N=5.

Optionally, when the location relationship between the N beam fields and the N time fields is in the first format, when the relay device identifies a 1st beam field indicating an index value that is not within the index value range that can be identified by the relay device, the relay device ignores the beam field, other beam fields after the beam field, and time fields corresponding to the ignored beam fields. When the relay device identifies a 1st time field indicating an index value that is not within the index value range that can be identified by the relay device, the relay device ignores the time field, other time fields after the time field, and beam fields corresponding to the ignored time fields.

Optionally, when the location relationship between the N beam fields and the N time fields is in the second format, when the relay device identifies a 1st field indicating an index value that is not within the index value range that can be identified by the relay device, the relay device ignores the field and other fields after the field. For example, the index value range of the access link beam that can be identified by the relay device is 0 to 15, the index value range of the time resource that can be identified by the relay device is 0 to 31, and the location relationship between the N beam fields and the N time fields is shown in FIG. 28. Because an index value 40 indicated by a time field is not within the index value range that can be identified by the relay device, the relay device ignores the time field whose index value is 40, a time field whose index value is 2, and a beam field whose index value is 17.

Because the network device or the OAM preconfigures a total quantity 2M of fields included in the first information, the quantity of fields in the first information remains unchanged. In some scenarios, if a quantity of aperiodic forwarding resources dynamically indicated by the network device is less than a maximum value supported by the first information, there are some invalid fields in the first information. FIG. 29 is a diagram of 2M fields included in first information. The first information includes five beam fields, five time fields (10 valid fields), and 2M-10 invalid fields. The following describes a specific implementation in which the relay device no longer parses another field (the invalid field) after parsing the beam field and the time field in this embodiment of this application.

In an implementation, in addition to the N beam fields and the N time fields, the first information further includes a quantity field, the quantity field indicates a total quantity of the N beam fields and the N time fields, the N beam fields and the N time fields are consecutive fields, and the quantity field is a field before the N beam fields and the N time fields, or the quantity field is a field after the N beam fields and the N time fields, where a total quantity 2M of fields included in the first information is greater than 2N, and M is a positive integer. Optionally, the quantity field may further indicate a quantity of the N beam fields or a quantity of the N time fields. In this implementation, the valid field includes the N beam fields, the N time fields, and the quantity field, and a field in the first information other than the valid field is an invalid field.

FIG. 30 is a diagram of first information including a quantity field. In this example, the quantity field indicates the total quantity of the N beam fields and the N time fields, the N beam fields and the N time fields are consecutive fields, and the quantity field is a field before the N beam fields and the N time fields.

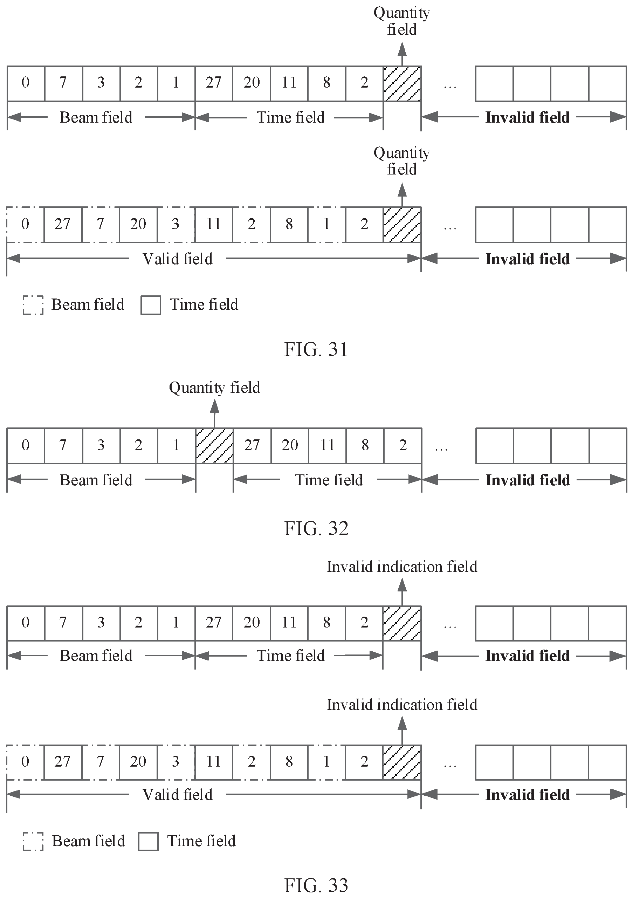

FIG. 31 is another diagram of first information including a quantity field. In this example, the quantity field indicates the total quantity of the N beam fields and the N time fields, the N beam fields and the N time fields are consecutive fields, and the quantity field is a field after the N beam fields and the N time fields.

Based on the optional implementation, after identifying the quantity field, the relay device may determine the total quantity 2N of the beam fields and the time fields that are included in the first information, and after parsing the N beam fields and the N time fields, the relay device no longer parses another field, so that power consumption of the relay device can be reduced. In addition, in addition to the index value of the access link beam and the index value of the time resource, the first information may further indicate the quantity of the beam fields and the time fields that are included in the first information, so that flexibility of dynamic indication can be improved. In addition, the relay device may better distinguish between the valid field and the invalid field based on the quantity field.

In another implementation, in addition to the N beam fields and the N time fields, the first information further includes a quantity field, the quantity field indicates a quantity of the N beam fields and/or a quantity of the N time fields, the N beam fields are consecutive fields, the N time fields are consecutive fields, and the quantity field is a field between the N beam fields and the N time fields, where a total quantity 2M of fields included in the first information is greater than 2N, and M is a positive integer. In this implementation, the valid field includes the N beam fields, the N time fields, and the quantity field, and a field in the first information other than the valid field is an invalid field.

FIG. 32 is another diagram of first information including a quantity field. In this example, the quantity field indicates the quantity of the N beam fields and/or the quantity of the N time fields, the N beam fields and the N time fields are consecutive fields, and the quantity field is a field between the N beam fields and the N time fields.

Based on the optional implementation, after identifying the quantity field, the relay device may determine the quantity N of the beam fields included in the first information and/or the quantity N of the time fields included in the first information, and after parsing the N beam fields and the N time fields, the relay device no longer parses another field, so that power consumption of the relay device can be reduced. In addition, in addition to the index value of the access link beam and the index value of the time resource, the first information may further indicate the quantity of the beam fields included in the first information and the quantity of the time fields included in the first information, so that flexibility of dynamic indication can be improved. In addition, the relay device may better distinguish between the valid field and the invalid field based on the quantity field.

In another implementation, in addition to the N beam fields and the N time fields, the first information further includes an invalid indication field, the invalid indication field indicates that a field after the invalid indication field does not include the beam field or the time field, and the invalid indication field is a field after the N beam fields and the N time fields, where a total quantity 2M of fields included in the first information is greater than 2N, and M is a positive integer. Optionally, the N beam fields and the N time fields are consecutive fields. In this implementation, the valid field includes the N beam fields, the N time fields, and the invalid indication field, and a field in the first information other than the valid field is an invalid field.

Optionally, the N beam fields and the N time fields may alternatively be non-consecutive fields. This is not limited in this application.

FIG. 33 is a diagram of first information including an invalid indication field. In this example, the N beam fields and the N time fields are consecutive fields.

For example, a value of the invalid indication field may be "1" or "0". For example, the value of the invalid indication field may be a maximum quantity of index values of the access link beam that can be identified by the relay device, or a maximum quantity of index values of the time resource that can be identified by the relay device, or a larger one of the maximum quantity of index values of the access link beam that can be identified by the relay device and the maximum quantity of index values of the time resource that can be identified by the relay device. This is not limited in embodiments of this application.

Based on the optional implementation, after identifying the invalid indication field, the relay device no longer parses another field, so that power consumption of the relay device can be reduced. In addition, flexibility of dynamic indication can be further improved. In addition, the relay device may better distinguish between the valid field and the invalid field based on the invalid indication field.

When the network device controls the relay device, a problem of how the relay device performs processing when an index value indicated by a beam field included in the activation indication information of the aperiodic forwarding resource is not within the index value range of the access link beam that can be identified by the relay device and a time resource indicated by a time field corresponding to the beam field conflicts with a time resource indicated by other control information urgently needs to be resolved. The other control information may be configuration information of a periodic forwarding resource or activation indication information of a semi-persistent forwarding resource.

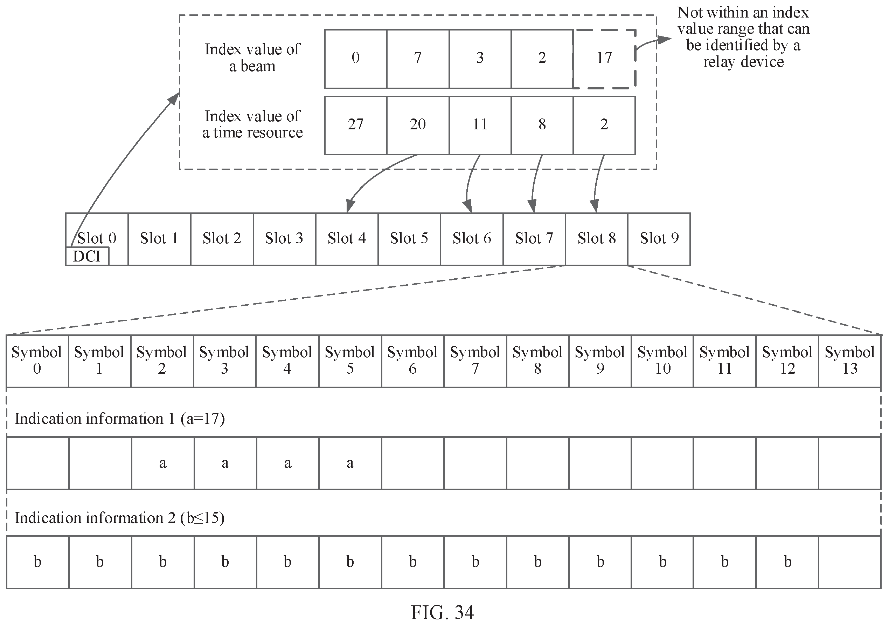

FIG. 34 is a diagram of a conflict between time resources indicated by a plurality of pieces of control information. For example, the index value range of the access link beam that can be identified by the relay device is 0 to 15. Indication information 1 is activation indication information of an aperiodic forwarding resource, the indication information 1 is DCI, an index value a=17 indicated by a beam field 1 included in the indication information 1 is not within the index value range of the access link beam that can be identified by the relay device, an index value indicated by a time field 1 corresponding to the beam field 1 is within the index value range of the time resource that can be identified by the relay device, and a time resource indicated by the time field 1 is symbols 2 to 5 in a slot 8. Indication information 2 is configuration information of a periodic forwarding resource or activation indication information of a semi-persistent forwarding resource, an index value b≤15 indicated by the indication information 2 is within the index value range of the access link beam that can be identified by the relay device, and a time resource indicated by the indication information 2 is symbols 0 to 12 in the slot 8. Therefore, the time resource indicated by the indication information 1 conflicts with the time resource indicated by the indication information 2 in the symbols 2 to 5 in the slot 8.

Therefore, an embodiment of this application provides another signal forwarding method, to resolve a problem of how a relay device performs processing when activation indication information of an aperiodic forwarding resource conflicts with a time resource indicated by other control information (configuration information of a periodic forwarding resource or activation indication information of a semi-persistent forwarding resource).

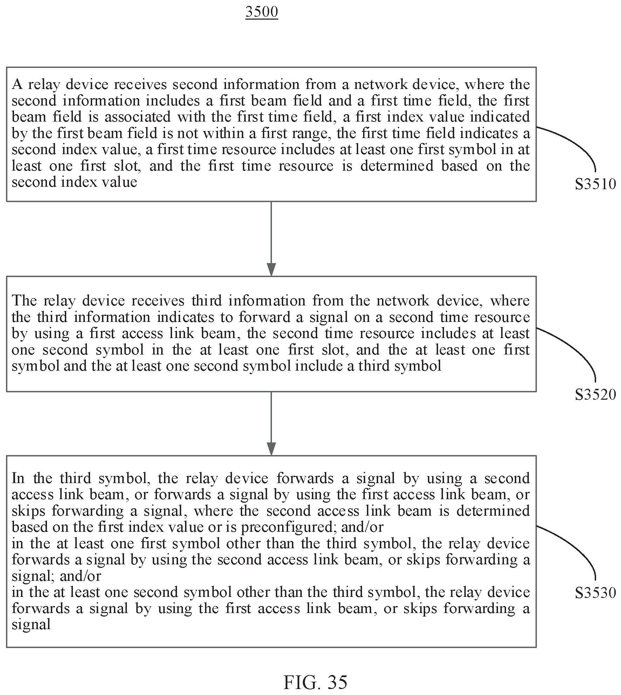

FIG. 35 is an example flowchart of another signal forwarding method 3500 according to an embodiment of this application. A network device in this embodiment of this application may be an access network device or a base station. A beam field indicates an index value of an access link beam, and a time field indicates an index value of a time resource. "xx corresponds to yy" may be understood as "xx is associated with yy". "Forward sth. on (in) xx through yy" may be understood as "forward sth. on (in) xx by using yy".

S3510: The network device sends second information to a relay device, where the second information includes a first beam field and a first time field, and the first beam field corresponds to/is associated with the first time field. A first index value indicated by the first beam field is not within a first range. The first time field indicates a second index value, a first time resource includes at least one first symbol in at least one first slot, and the first time resource is determined based on the second index value. Correspondingly, the relay device receives the second information from the network device. Optionally, an index value of the first time resource is the second index value. The first range may be understood as an index value range of the access link beam that can be identified by the relay device.

Optionally, the second index value indicated by the first time field is within a second range. The second range may be understood as an index value range of the time resource that can be identified by the relay device.

Optionally, the first beam field indicates a second access link beam. For an indication manner, refer to another embodiment of this application. For example, the second access link beam is determined based on the first index value or is preconfigured.

Optionally, the second information is activation indication information of an aperiodic forwarding resource. For example, the second information is DCI or the foregoing DCI 2_8.

Optionally, before the network device sends the second information to the relay device, the network device may send RRC signaling to the relay device. The RRC signaling is used to configure an index value of the access link beam and/or an index value of the time resource for the relay device, and the RRC signaling may be further used to configure a bit length/a quantity of fields of the second information for the relay device. Optionally, OAM may also configure an index value of the access link beam, an index value of the time resource, and a bit length/a quantity of fields of the second information for the relay device.

S3520: The relay device receives third information from the network device, where the third information indicates to forward a signal on a second time resource by using a first access link beam, the second time resource includes at least one second symbol in the at least one first slot, and the at least one first symbol and the at least one second symbol include a third symbol. The third symbol may be understood as a conflicting symbol (an intersection set between two groups of symbols) in symbols included in the first time resource and the second time resource.

Optionally, the third information is configuration information of a periodic forwarding resource, or the third information is activation indication information of a semi-persistent forwarding resource. Optionally, no priority flag (priority flag) is configured in the third information.

S3530: In the third symbol, the relay device forwards a signal through/by using the second access link beam, or forwards a signal through/by using the first access link beam, or skips forwarding a signal; and/or

in the at least one first symbol other than the third symbol, the relay device forwards a signal through/by using the second access link beam, or skips forwarding a signal; and/or
in the at least one second symbol other than the third symbol, the relay device forwards a signal through/by using the first access link beam, or skips forwarding a signal.

Further, the network device sends indication information to the relay device, where the indication information indicates, to the relay device, how to determine a forwarding behavior in the first symbol, the second symbol, or the third symbol. Specifically, the relay device determines one of the foregoing manners based on the indication information.

In an implementation, the second access link beam is determined based on the first index value and a maximum quantity of access link beams used by the relay device. Specifically, the relay device may determine an index value of the second access link beam based on the first index value and the maximum quantity of access link beams used by the relay device, to determine the second access link beam. The maximum quantity of access link beams used by the relay device may be preconfigured by the OAM, or may be reported by the relay device to the network device based on a capability of the relay device.

For example, the index value of the second access link beam is $X_{new}'=mod(X_{invalid}', J)$, where $X_{invalid}'$ is the first index value, J is the maximum quantity of access link beams used by the relay device, $X_{invalid}'$ is greater than or equal to J, and mod() is a modulo function. For example, if the first index value is 17, and the maximum quantity of access link beams used by the relay device is 16, the index value of the second access link beam is 1.

For example, the second access link beam is a predefined or preconfigured access link beam. When an index value indicated by a specific beam field included in the second information is not within the index value range of the access link beam that can be identified by the relay device, the relay device may forward a signal by using the predefined or preconfigured access link beam.

For example, the second access link beam may alternatively be an access link beam reported by the relay device to the network device in advance. When an index value indicated by a specific beam field included in the second information is not within the index value range of the access link beam that can be identified by the relay device, the relay device may forward a signal by using the access link beam that is reported in advance.

In another implementation, a second beam field indicates the second access link beam, the second beam field is a beam field adjacent to the first beam field, and the second information further includes the second beam field.

For example, the second beam field is a field adjacent to the first beam field and located on the left of the first beam field; or the second beam field is a field adjacent to the first beam field and located on the right of the first beam field.

Based on the technical solution provided in this embodiment of this application, after the relay device receives the second information and the third information from the network device, when the first index value indicated by the first beam field included in the second information is not within the index value range of the access link beam that can be identified by the relay device, and a time resource (the at least one first symbol in the at least one first slot) indicated by the first time field corresponding to the first beam field conflicts with/overlaps a time resource (the at least one second symbol in the at least one first slot) indicated by the third information, the relay device may determine how to forward a signal or determine whether to forward a signal.

To facilitate understanding of this embodiment of this application, the following further describes, with reference to specific examples, the signal forwarding method provided in this application.

Scenario 1: This scenario is applicable to a case in which the at least one second symbol includes the at least one first symbol, and a quantity of the at least one second symbol is greater than a quantity of the at least one first symbol.

Optionally, after the relay device receives the second information and the third information, in the third symbol, the relay device forwards a signal by using the second access link beam, or forwards a signal by using the first access link beam, or skips forwarding a signal; and in the at least one second symbol other than the third symbol, the relay device forwards a signal by using the first access link beam, or skips forwarding a signal. The second access link beam is determined based on the first index value or is preconfigured.

For example, the relay device forwards a signal in the third symbol by using the second access link beam. In this example, the relay device forwards the signal based on the second information.

For example, the relay device forwards a signal in the third symbol and in the at least one second symbol other than the third symbol by using the first access link beam. In other words, the relay device forwards the signal in the at least one second symbol by using the first access link beam. In this example, the relay device forwards the signal based on the third information.

For example, the relay device forwards a signal in the third symbol by using the second access link beam, and forwards the signal in the at least one second symbol other than the third symbol by using the first access link beam. In this example, the relay device forwards the signal in the conflicting symbol based on the second information, and forwards the signal in the another symbol based on the third information.

For example, the relay device forwards a signal in the third symbol by using the first access link beam. In this example, the relay device forwards the signal in the conflicting symbol based on the third information.

For example, the relay device forwards a signal in the third symbol by using the second access link beam, and forwards the signal in the at least one second symbol other than the third symbol and a fourth symbol by using the first access link beam. The at least one second symbol other than the third symbol includes the fourth symbol, and the fourth symbol may be understood as a symbol corresponding to a switching interval (a guard interval). In this example, the relay device forwards the signal in the conflicting symbol (the third symbol) based on the second information, and forwards the signal in a symbol other than the third symbol and the fourth symbol based on the third information.

For example, the relay device skips forwarding a signal in the third symbol, and forwards a signal in the at least one second symbol other than the third symbol by using the first access link beam. In this example, the relay device skips forwarding the signal in the third symbol, and forwards the signal in a symbol other than the third symbol based on the third information.

For example, the relay device skips forwarding a signal in the third symbol and in the at least one second symbol other than the third symbol. In other words, the relay device skips forwarding the signal in the at least one second symbol. In this example, when a time resource indicated by the second information conflicts with a time resource indicated by the third information, the relay device ignores the second information and the third information, or neither the time resource indicated by the second information nor the time resource indicated by the third information takes effect.

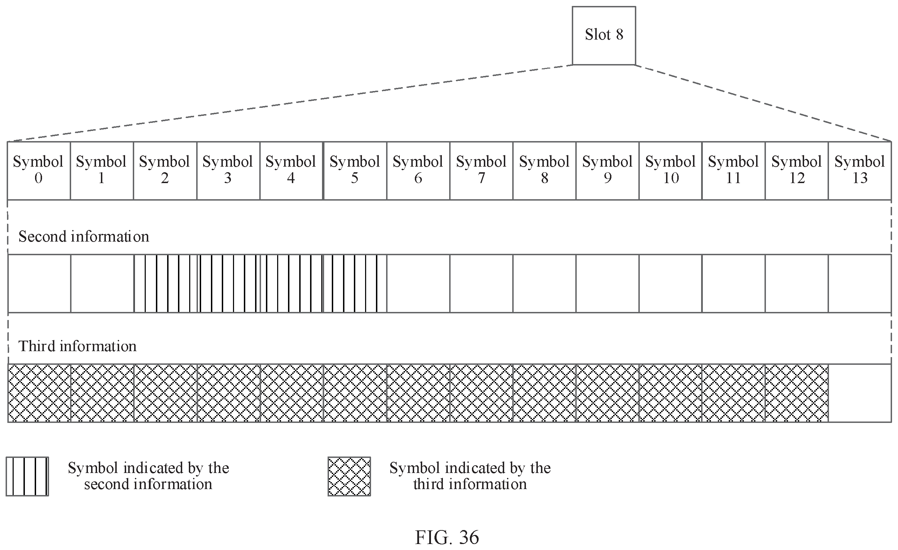

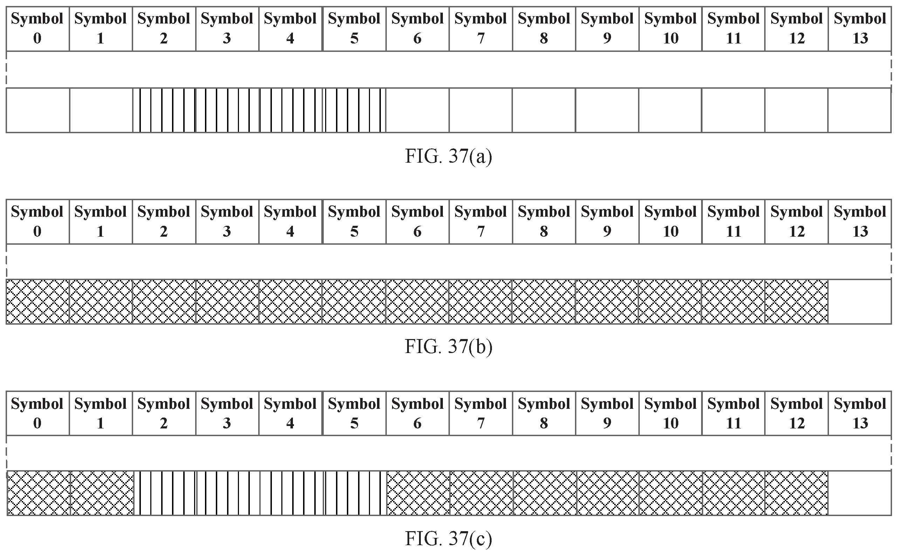

FIG. 36 is a diagram of a conflict between time resources indicated by second information and third information. For example, the first time resource is symbols 2 to 5 in a slot 8, and the second time resource is symbols 0 to 12 in the slot 8. The first time resource conflicts with the second time resource in the symbols 2 to 5. The slot 8 may be understood as the foregoing at least one first slot, the symbols 2 to 5 may be understood as the foregoing at least one first symbol, the symbols 0 to 12 may be understood as the foregoing at least one second symbol, and the symbols 2 to 5 may be understood as the foregoing third symbol. FIG. 37(a) to FIG. 37(g) are diagrams of symbols that are used to forward a signal and that are determined by a relay device based on second information and third information. A filled symbol in the figure is a symbol used to forward a signal.

In a first example, the relay device forwards a signal in the symbols 2 to 5 by using the second access link beam, where the second access link beam is determined based on the first index value or is preconfigured. In this example, the relay device forwards the signal based on the second information, and the symbols used to forward the signal are shown in FIG. 37(a).

In a second example, the relay device forwards a signal in the symbols 0 to 12 by using the first access link beam. In this example, the relay device forwards the signal based on the third information. In this example, the relay device forwards the signal based on the third information, and the symbols used to forward the signal are shown in FIG. 37(b).

In a third example, the relay device forwards a signal in the symbols 2 to 5 by using the second access link beam, and forwards the signal in the symbol 0, the symbol 1, and the symbols 6 to 12 by using the first access link beam, where the second access link beam is determined based on the first index value or is preconfigured. The symbol 0, the symbol 1, and the symbols 6 to 12 may be understood as the at least one second symbol other than the third symbol. In this example, the relay device forwards the signal in the conflicting symbols based on the second information, and forwards the signal in the other symbols based on the third information, and the symbols used to forward the signal are shown in FIG. 37(c).

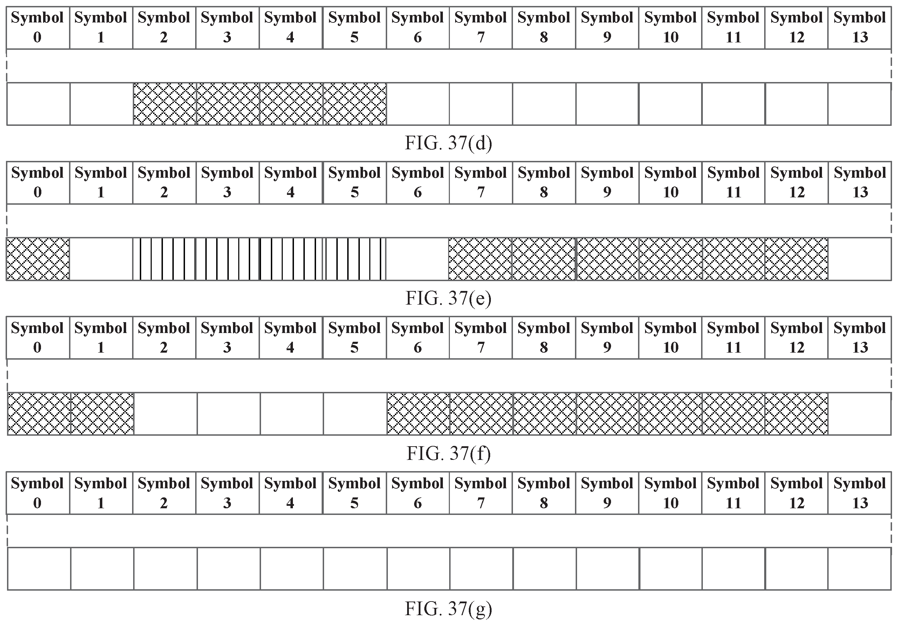

In a fourth example, the relay device forwards a signal in the symbols 2 to 5 by using the first access link beam. In this example, the relay device forwards the signal in the conflicting symbols based on the third information, and the symbols used to forward the signal are shown in FIG. 37(d).

In a fifth example, the relay device forwards a signal in the symbols 2 to 5 by using the second access link beam, and forwards the signal in the symbol 0 and the symbols 7 to 12 by using the first access link beam, where the second access link beam is determined based on the first index value or is preconfigured. The symbol 2 and the symbol 6 may be understood as the foregoing fourth symbol, and the symbol 0 and the symbols 7 to 12 may be understood as the at least one second symbol other than the third symbol and the fourth symbol. In this example, the relay device forwards the signal in the conflicting symbols based on the second information, and forwards the signal in the symbols other than the third symbol and the fourth symbol based on the third information, and the symbols used to forward the signal are shown in FIG. 37(e).

In a sixth example, the relay device skips forwarding a signal in the symbols 2 to 5, and forwards a signal in the symbol 0, the symbol 1, and the symbols 6 to 12 by using the first access link beam, and the symbols used to forward the signal are shown in FIG. 37(f).

In a seventh example, the relay device skips forwarding a signal in the symbols 0 to 12. In this example, neither the time resource indicated by the second information nor the time resource indicated by the third information takes effect, and a symbol used to forward a signal is shown in FIG. 37(g).

Scenario 2: This scenario is applicable to a case in which the at least one first symbol is the same as the at least one second symbol. In this scenario, the third symbol is the same as the at least one first symbol and the at least one second symbol.

Optionally, after the relay device receives the second information and the third information, in the third symbol (the at least one first symbol or the at least one second symbol), the relay device forwards a signal by using the second access link beam, or forwards a signal by using the first access link beam, or skips forwarding a signal.

For example, the relay device forwards a signal in the third symbol (the at least one first symbol or the at least one second symbol) by using the second access link beam, where the second access link beam is determined based on the first index value or is preconfigured.

In this example, the relay device forwards the signal based on the second information.

For example, the relay device forwards a signal in the third symbol (the at least one first symbol or the at least one second symbol) by using the first access link beam. In this example, the relay device forwards the signal based on the third information.

For example, the relay device skips forwarding a signal in the third symbol (the at least one first symbol or the at least one second symbol). In this example, neither a time resource indicated by the second information nor a time resource indicated by the third information takes effect.

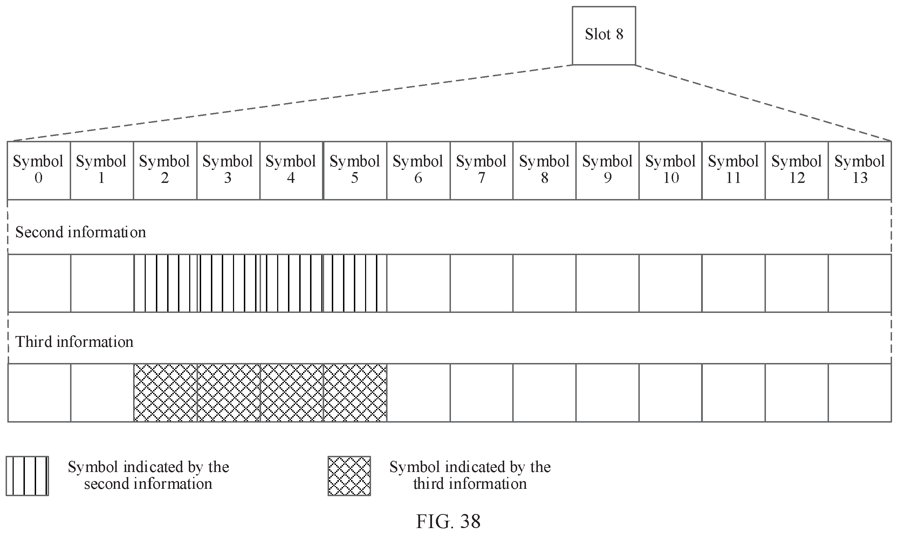

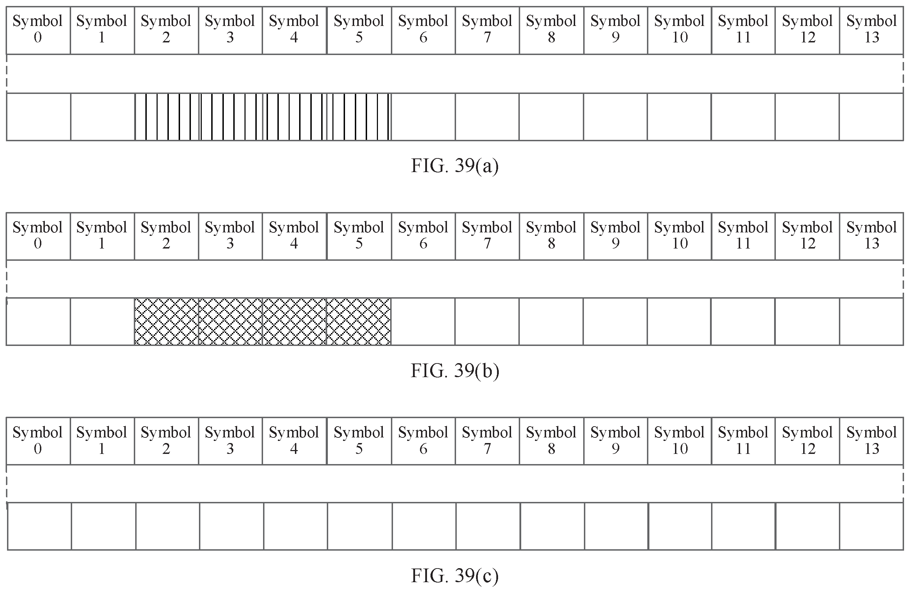

FIG. 38 is another diagram of a conflict between time resources indicated by second information and third information. For example, the first time resource is symbols 2 to 5 in a slot 8, and the second time resource is symbols 2 to 5 in the slot 8. The first time resource conflicts with the second time resource in the symbols 2 to 5. The slot 8 may be understood as the foregoing at least one first slot, and the symbols 2 to 5 may be understood as the foregoing at least one first symbol, the foregoing at least one second symbol, and the foregoing third symbol. FIG. 39(a) to FIG. 39(c) are other diagrams of symbols that are used to forward a signal and that are determined by a relay device based on second information and third information. A filled symbol in the figure is a symbol used to forward a signal.

In a first example, the relay device forwards a signal in the symbols 2 to 5 by using the second access link beam. In this example, the relay device forwards the signal based on the second information, and the symbols used to forward the signal are shown in FIG. 39(a).

In a second example, the relay device forwards a signal in the symbols 2 to 5 by using the first access link beam. In this example, the relay device forwards the signal based on the third information, and the symbols used to forward the signal are shown in FIG. 39(b).

In a third example, the relay device skips forwarding a signal in the symbols 2 to 5. A symbol used to forward a signal is shown in FIG. 39(c).

Scenario 3: This scenario is applicable to a case in which the at least one first symbol includes the at least one second symbol, and a quantity of the at least one first symbol is greater than a quantity of the at least one second symbol.

Optionally, after the relay device receives the second information and the third information, in the third symbol, the relay device forwards a signal by using the second access link beam, or forwards a signal by using the first access link beam, or skips forwarding a signal; and in the at least one first symbol other than the third symbol, the relay device forwards a signal by using the second access link beam, or skips forwarding a signal. The second access link beam is determined based on the first index value or is preconfigured.

For example, the relay device forwards a signal in the third symbol by using the second access link beam.

In this example, the relay device forwards the signal in the conflicting symbol based on the second information.

For example, the relay device forwards a signal in the third symbol by using the first access link beam. In this example, the relay device forwards the signal based on the third information.

For example, the relay device forwards a signal in the third symbol and in the at least one first symbol other than the third symbol by using the second access link beam. In other words, the relay device forwards the signal in the at least one first symbol by using the second access link beam. In this example, the relay device forwards the signal based on the second information.

For example, the relay device forwards a signal in the third symbol by using the first access link beam, and forwards the signal in the at least one first symbol other than the third symbol by using the second access link beam. In this example, the relay device forwards the signal in the conflicting symbol based on the third information, and forwards the signal in the another symbol based on the second information.

For example, the relay device forwards a signal in the third symbol by using the first access link beam, and forwards the signal in the at least one first symbol other than the third symbol and a fifth symbol by using the second access link beam. The at least one first symbol other than the third symbol includes the fifth symbol, and the fifth symbol may be understood as a symbol corresponding to a switching interval (a guard interval). In this example, the relay device forwards the signal in the conflicting symbol based on the third information, and forwards the signal in the symbol other than the third symbol and the fifth symbol based on the second information.

For example, the relay device skips forwarding a signal in the third symbol, and forwards a signal in the at least one first symbol other than the third symbol by using the second access link beam. In this example, the relay device skips forwarding a signal in the third symbol, and forwards the signal in the symbol other than the third symbol based on the second information.

For example, the relay device skips forwarding a signal in the third symbol and in the at least one first symbol other than the third symbol. In other words, the relay device skips forwarding a signal in the at least one first symbol. In this example, when a time resource indicated by the second information conflicts with a time resource indicated by the third information, the relay device ignores the second information and the third information, or neither the time resource indicated by the second information nor the time resource indicated by the third information takes effect.

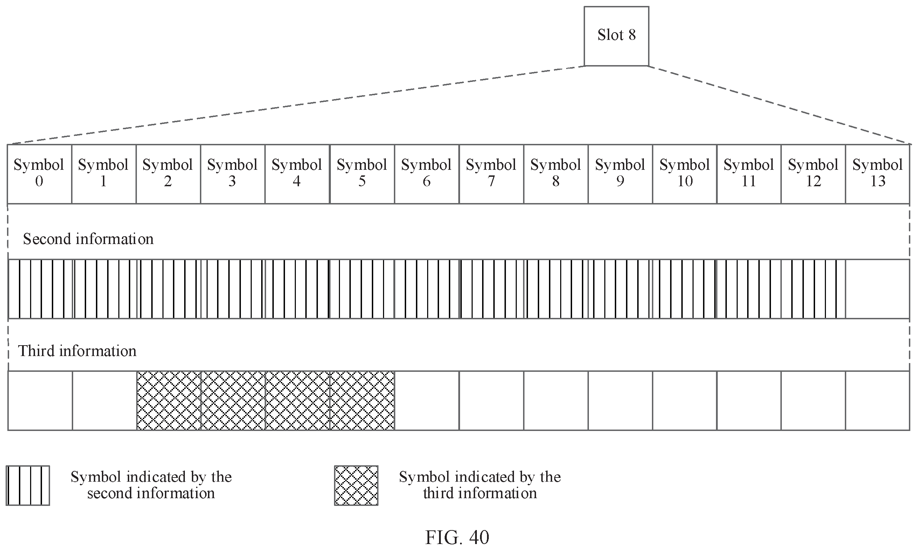

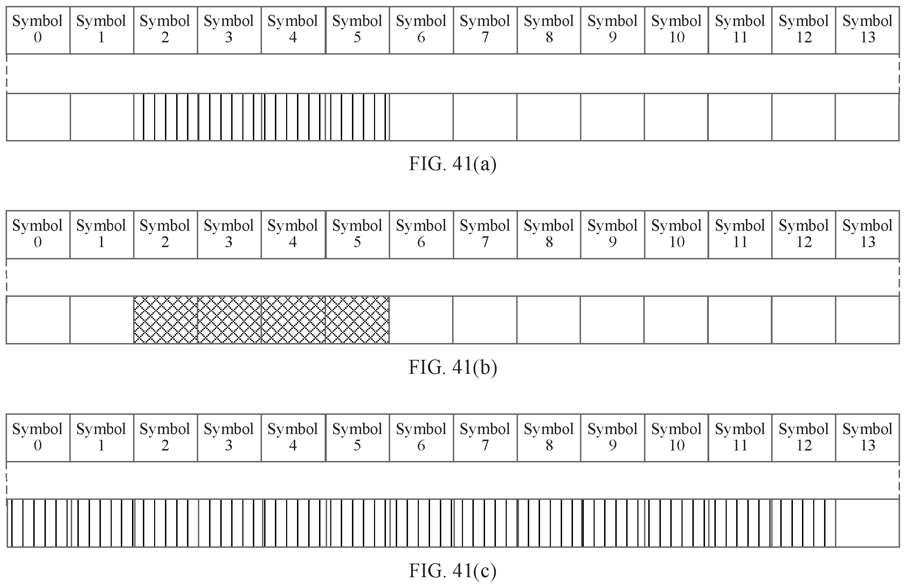

FIG. 40 is another diagram of a conflict between time resources indicated by second information and third information. For example, the first time resource is symbols 0 to 12 in a slot 8, and the second time resource is symbols 2 to 5 in the slot 8. The first time resource conflicts with the second time resource in the symbols 2 to 5. The slot 8 may be understood as the foregoing at least one first slot, the symbols 0 to 12 may be understood as the foregoing at least one first symbol, the symbols 2 to 5 may be understood as the foregoing at least one second symbol, and the symbols 2 to 5 may be understood as the foregoing third symbol. FIG. 41(a) to FIG. 41(g) are other diagrams of symbols that are used to forward a signal and that are determined by a relay device based on second information and third information. A filled symbol in the figure is a symbol used to forward a signal.

In a first example, the relay device forwards a signal in the symbols 2 to 5 by using the second access link beam, where the second access link beam is determined based on the first index value or is preconfigured. In this example, the relay device forwards the signal in the conflicting symbols based on the second information, and the symbols used to forward the signal are shown in FIG. 41(a).

In a second example, the relay device forwards a signal in the symbols 2 to 5 by using the first access link beam. In this example, the relay device forwards the signal based on the third information, and the symbols used to forward the signal are shown in FIG. 41(b).

In a third example, the relay device forwards a signal in the symbols 0 to 12 by using the second access link beam, where the second access link beam is determined based on the first index value or is preconfigured. In this example, the relay device forwards the signal based on the second information, and the symbols used to forward the signal are shown in FIG. 41(c).

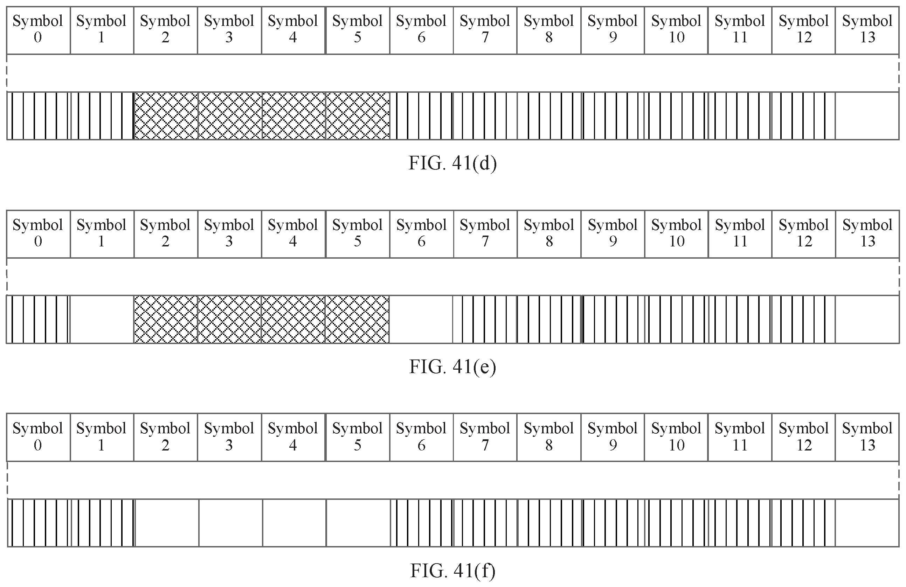

In a fourth example, the relay device forwards a signal in the symbols 2 to 5 by using the first access link beam, and forwards the signal in the symbol 0, the symbol 1, and the symbols 6 to 12 by using the second access link beam. In this example, the relay device forwards the signal in the conflicting symbols based on the third information, and forwards the signal in the other symbols based on the second information, and the symbols used to forward the signal are shown in FIG. 41(d).

In a fifth example, the relay device forwards a signal in the symbols 2 to 5 by using the first access link beam, and forwards the signal in the symbol 0 and the symbols 7 to 12 by using the second access link beam. In this example, the relay device forwards the signal in the conflicting symbols based on the third information, and forwards the signal in the symbols other than the third symbol and the fifth symbol based on the second information, and the symbols used to forward the signal are shown in FIG. 41(e).

In a sixth example, the relay device forwards a signal in the symbol 0, the symbol 1, and the symbols 6 to 12 by using the second access link beam. In this example, the relay device skips forwarding a signal in the third symbol, and forwards the signal in the symbols other than the third symbol based on the second information, and the symbols used to forward the signal are shown in FIG. 41(f).

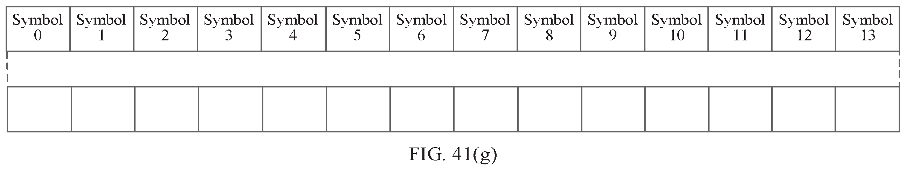

In a seventh example, the relay device skips forwarding a signal in the symbols 0 to 12. In this example, neither the time resource indicated by the second information nor the time resource indicated by the third information takes effect, and a symbol used to forward a signal is shown in FIG. 41(g).

Optionally, the second information includes N beam fields and N time fields, the N beam fields and the N time fields are in one-to-one correspondence/associated in a one-to-one manner, the N beam fields include the first beam field and the second beam field, the N time fields include the first time field, and N is a positive integer. A location relationship between the N beam fields and the N time fields that are included in the second information is similar to that in FIG. 27 and FIG. 28, and details are not described herein again. In addition, when the second information includes an invalid field, a specific implementation in which the relay device distinguishes between the valid field and the invalid field is as described in the foregoing embodiment. Details are not described herein again.

The relay device may sequentially receive activation indication information of a plurality of aperiodic forwarding resources. A problem of how the relay device performs processing when an index value of an access link beam indicated by a beam field included in latest received activation indication information is not within the index value range that can be identified by the relay device and a time resource indicated by a time field corresponding to the beam field conflicts with a time resource indicated by activation indication information of another aperiodic forwarding resource urgently needs to be resolved.

Therefore, an embodiment of this application provides another signal forwarding method, to resolve a problem of how a relay device performs processing when time resources indicated by activation indication information of a plurality of aperiodic forwarding resources conflict.

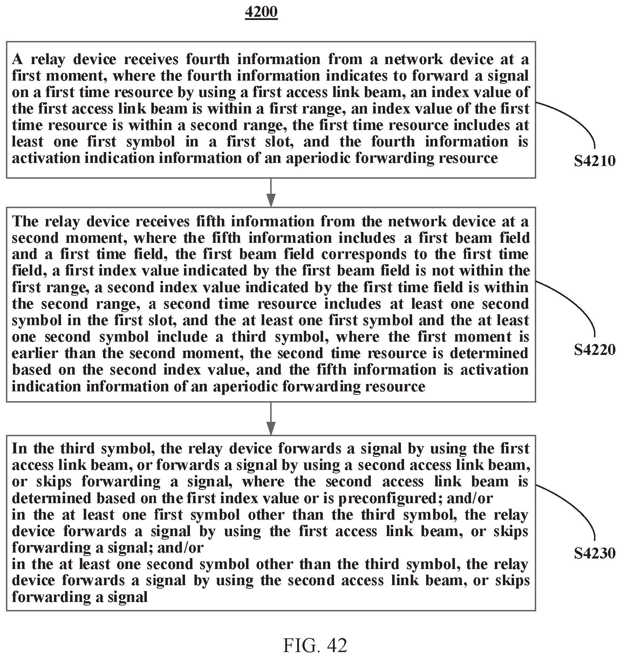

FIG. 42 is an example flowchart of another signal forwarding method 4200 according to an embodiment of this application. A network device in this embodiment of this application may be an access network device or a base station. A beam field indicates an index value of an access link beam, and a time field indicates an index value of a time resource. "xx corresponds to yy" may be understood as "xx is associated with yy". "Forward sth. on (in) xx through yy" may be understood as "forward sth. on (in) xx by using yy".

S4210: A relay device receives fourth information from the network device at a first moment, where the fourth information indicates to forward a signal on a first time resource by using a first access link beam, an index value of the first access link beam is within a first range, an index value of the first time resource is within a second range, the first time resource includes at least one first symbol in a first slot, and the fourth information is activation indication information of an aperiodic forwarding resource. For example, the fourth information is DCI or the foregoing DCI 2_8.

The first range may be understood as an index value range of the access link beam that can be identified by the relay device, and the second range may be understood as an index value range of the time resource that can be identified by the relay device.

S4220: The relay device receives fifth information from the network device at a second moment, where the fifth information includes a first beam field and a first time field, the first beam field corresponds to/is associated with the first time field, a first index value indicated by the first beam field is not within the first range, a second index value indicated by the first time field is within the second range, a second time resource includes at least one second symbol in the first slot, and the at least one first symbol and the at least one second symbol include a third symbol, where the first moment is earlier than the second moment, the second time resource is determined based on the second index value, and the fifth information is activation indication information of an aperiodic forwarding resource. The fifth information may be understood as activation indication information of an aperiodic forwarding resource latest received by the relay device. The third symbol may be understood as a conflicting symbol in symbols included in the first time resource and the second time resource. Optionally, an index value of the second time resource is the second index value. For example, the fifth information is DCI or the foregoing DCI 2_8.

S4230: In the third symbol, the relay device forwards a signal by using the first access link beam, or forwards a signal by using a second access link beam, or skips forwarding a signal, where the second access link beam is determined based on the first index value or is preconfigured; and/or

in the at least one first symbol other than the third symbol, the relay device forwards a signal by using the first access link beam, or skips forwarding a signal; and/or

in the at least one second symbol other than the third symbol, the relay device forwards a signal by using the second access link beam, or skips forwarding a signal.

Based on the technical solution provided in this embodiment of this application, after the relay device receives the fourth information and the fifth information from the network device, when the first index value indicated by the first beam field included in the fifth information is not within the index value range of the access link beam that can be identified by the relay device, and the second time resource (the at least one second symbol in the first slot) indicated by the first time field corresponding to the first beam field conflicts with/overlaps the first time resource (the at least one first symbol in the first slot) indicated by the fourth information, the relay device may determine how to forward a signal or determine whether to forward a signal.

In an implementation, the second access link beam is determined based on the first index value and a maximum quantity of access link beams used by the relay device. Specifically, the relay device may determine an index value of the second access link beam based on the first index value and the maximum quantity of access link beams used by the relay device, to determine the second access link beam. The maximum quantity of access link beams used by the relay device may be preconfigured by OAM, or may be reported by the relay device to the network device based on a capability of the relay device.

For example, the index value of the second access link beam is $X_{new}'=mod(X_{invalid}', J)$, where $X_{invalid}'$ is the first index value, J is the maximum quantity of access link beams used by the relay device, $X_{invalid}'$ is greater than or equal to J, and mod() is a modulo function. For example, if the first index value is 17, and the maximum quantity of access link beams used by the relay device is 16, the index value of the second access link beam is 1.

For example, the second access link beam is a predefined or preconfigured access link beam. When an index value indicated by a specific beam field included in the fifth information is not within the index value range of the access link beam that can be identified by the relay device, the relay device may forward a signal by using the predefined or preconfigured access link beam.

For example, the second access link beam may alternatively be an access link beam reported by the relay device to the network device in advance. When an index value indicated by a specific beam field included in the fifth information is not within the index value range of the access link beam that can be identified by the relay device, the relay device may forward a signal by using the access link beam that is reported in advance.

In another implementation, a second beam field indicates the second access link beam, the second beam field is a beam field adjacent to the first beam field, and the fifth information further includes the second beam field.

For example, the second beam field is a field adjacent to the first beam field and located on the left of the first beam field; or the second beam field is a field adjacent to the first beam field and located on the right of the first beam field.

Optionally, the fifth information includes N beam fields and N time fields, the N beam fields and the N time fields are in one-to-one correspondence/associated in a one-to-one manner, the N beam fields include the first beam field and the second beam field, the N time fields include the first time field, and N is a positive integer. A location relationship between the N beam fields and the N time fields that are included in the fifth information is similar to that in FIG. 27 and FIG. 28, and details are not described herein again. In addition, when the fifth information includes an invalid field, a specific implementation in which the relay device distinguishes between a valid field and the invalid field is as described in the foregoing embodiment. Details are not described herein again.

In an uplink transmission scenario, a relay device working in a time division multiplexing (time division multiplexing, TDM) mode may need to forward a signal from a terminal device through a backhaul link, and need to send an uplink signal through a control link. A problem of how the relay device performs processing when a time resource associated with the backhaul link conflicts with a time resource associated with the control link urgently needs to be resolved. The signal forwarded through the control link includes a signal corresponding to at least one of the following information: uplink control information (uplink control information, UCI), feedback information (for example, CSI information), and operation and maintenance information.

Therefore, an embodiment of this application provides another signal forwarding method, to resolve a problem of how a relay device performs processing when a time resource associated with a backhaul link conflicts with a time resource associated with a control link.

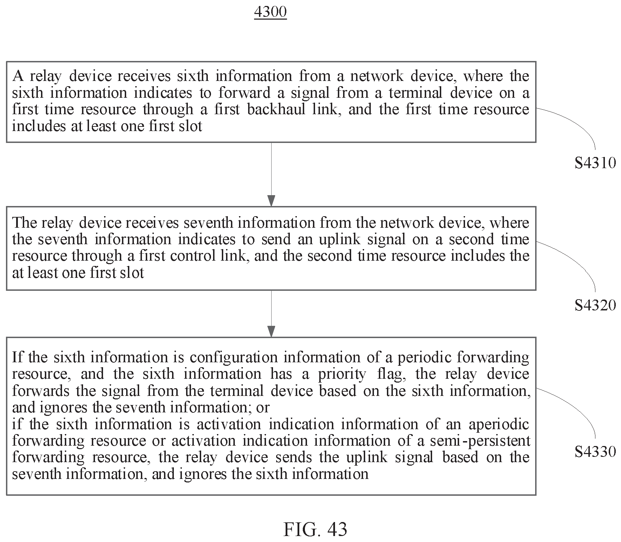

FIG. 43 is an example flowchart of another signal forwarding method 4300 according to an embodiment of this application. A network device in this embodiment of this application may be an access network device or a base station.

S4310: A relay device receives sixth information from the network device, where the sixth information indicates to forward a signal from a terminal device on a first time resource through a first backhaul link, and the first time resource includes at least one first slot. The sixth information may be configuration information of a periodic forwarding resource, activation indication information of an aperiodic forwarding resource, or activation indication information of a semi-persistent forwarding resource.

That the sixth information is the configuration information of the periodic forwarding resource may be understood as that the first time resource and the first backhaul link that are indicated by the sixth information are periodic forwarding resources. That the sixth information is the activation indication information of the aperiodic forwarding resource may be understood as that the first time resource and the first backhaul link that are indicated by the sixth information are aperiodic forwarding resources. That the sixth information is the activation indication information of the semi-persistent forwarding resource may be understood as that the first time resource and the first backhaul link that are indicated by the sixth information are semi-persistent forwarding resources.

S4320: The relay device receives seventh information from the network device, where the seventh information indicates to send an uplink signal on a second time resource through a first control link, and the second time resource includes the at least one first slot.

S4330: If the sixth information is the configuration information of the periodic forwarding resource, and the sixth information has a priority flag, the relay device forwards the signal from the terminal device based on the sixth information, and ignores the seventh information; or

if the sixth information is the configuration information of the periodic forwarding resource, the relay device ignores the seventh information; or
if the sixth information is the activation indication information of the aperiodic forwarding resource or the activation indication information of the semi-persistent forwarding resource, the relay device sends the uplink signal based on the seventh information, and ignores the sixth information.

It should be noted that, when the sixth information is the configuration information of the periodic forwarding resource, and the sixth information has the priority flag, a priority of the sixth information is higher than that of the seventh information; or when the sixth information is the activation indication information of the aperiodic forwarding resource or the activation indication information of the semi-persistent forwarding resource, the priority of the sixth information is lower than that of the seventh information.

In the technical solution provided in this embodiment of this application, when a time resource associated with a control link conflicts with a time resource associated with a backhaul link, if the backhaul link is a periodic forwarding resource, the signal from the terminal device is forwarded on the time resource associated with the backhaul link through the backhaul link; or if the backhaul link is an aperiodic forwarding resource or a semi-persistent forwarding resource, the uplink signal is sent on the time resource associated with the control link through the control link. Therefore, when the time resource associated with the backhaul link conflicts with the time resource associated with the control link, the relay device may determine how to forward a signal.

In an uplink transmission scenario, a relay device working in a frequency division multiplexing (frequency division multiplexing, FDM) mode may need to forward a signal from a terminal device through a backhaul link, and need to send an uplink signal through a control link. A problem of how the relay device performs processing when a time resource associated with the backhaul link conflicts with a time resource associated with the control link and a transmit power $P_{Fwd}$ of the backhaul link and a transmit power $P_{c\text{-}link}$ of the control link exceed a preconfigured maximum transmit power $P_{total}$ urgently needs to be resolved.

Therefore, an embodiment of this application provides another signal forwarding method, to resolve a problem of how a relay device performs processing when a time resource associated with a backhaul link conflicts with a time resource associated with a control link and a transmit power $P_{Fwd}$ of the backhaul link and a transmit power $P_{c\text{-}link}$ of the control link exceed a preconfigured maximum transmit power $P_{total}$.

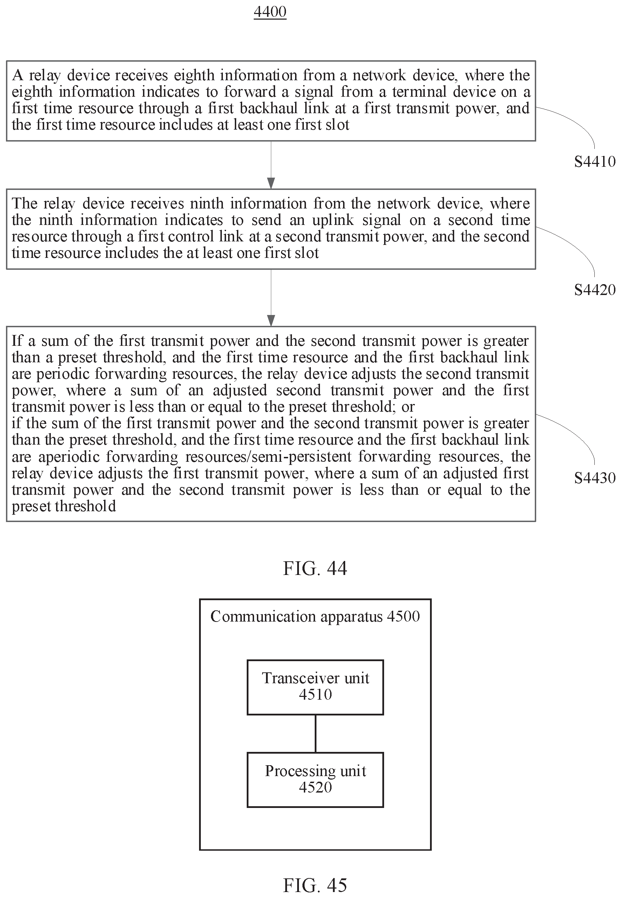

FIG. 44 is an example flowchart of another signal forwarding method 4400 according to an embodiment of this application. A network device in this embodiment of this application may be an access network device or a base station.

S4410: A relay device receives eighth information from the network device, where the eighth information indicates to forward a signal from a terminal device on a first time resource through a first backhaul link at a first transmit power, and the first time resource includes at least one first slot.

The first time resource and the first backhaul link that are indicated by the eighth information are periodic forwarding resources. Alternatively, the first time resource and the first backhaul link that are indicated by the eighth information are aperiodic forwarding resources. Alternatively, the first time resource and the first backhaul link that are indicated by the eighth information are semi-persistent forwarding resources.

S4420: The relay device receives ninth information from the network device, where the ninth information indicates to send an uplink signal on a second time resource through a first control link at a second transmit power, and the second time resource includes the at least one first slot.

S4430: If a sum of the first transmit power and the second transmit power is greater than a preset threshold, and the first time resource and the first backhaul link are periodic forwarding resources, the relay device adjusts the second transmit power, where a sum of an adjusted second transmit power and the first transmit power is less than or equal to the preset threshold; or

if the sum of the first transmit power and the second transmit power is greater than the preset threshold, the first time resource and the first backhaul link are periodic forwarding resources, and the eighth information has a priority flag, the relay device adjusts the second transmit power, where a sum of an adjusted second transmit power and the first transmit power is less than or equal to the preset threshold; or
if the sum of the first transmit power and the second transmit power is greater than the preset threshold, and the first time resource and the first backhaul link are aperiodic forwarding resources/semi-persistent forwarding resources, the relay device adjusts the first transmit power, where a sum of an adjusted first transmit power and the second transmit power is less than or equal to the preset threshold, and the preset threshold is a preconfigured maximum transmit power $P_{total}$.

When the sum of the first transmit power $P_{Fwd}$ and the second transmit power $P_{c\text{-}link}$ is greater than $P_{total}$, for example, if the first time resource and the first backhaul link are periodic forwarding resources, the relay device may remain $P_{Fwd}$ unchanged, and adjust $P_{c-link}$ based on the preset threshold $P_{total}$, where an adjusted value is denoted as $P'_{c-link}$, and $P'_{c-link}$ satisfies: $P'_{c-link} \leq P_{total} - P_{Fwd}$. For another example, if the first time resource and the first backhaul link are aperiodic forwarding resources/semi-persistent forwarding resources, the relay device may remain $P_{c-link}$ unchanged, and adjust $P_{Fwd}$ based on the preset threshold $P_{total}$, where an adjusted value is denoted as $P'_{Fwd}$, and $P'_{Fwd}$ satisfies: $P'_{Fwd} \leq P_{total} - P_{c-link}$. In this way, when the relay device uses both the control link and the forwarding link to perform uplink transmission in the at least one first slot, the sum of the uplink transmit powers does not exceed the preset threshold $P_{total}$.

The foregoing describes the signal forwarding methods provided in embodiments of this application. The following describes an execution body used to perform the foregoing signal forwarding method.

FIG. 45 is a diagram of a structure of a communication apparatus 4500 according to an embodiment of this application. The apparatus 4500 may be used in or deployed in the relay device in the method embodiment in FIG. 8. The communication apparatus 4500 includes:

a transceiver unit 4510, configured to receive first information from a network device, where the first information includes a first beam field and a first time field, the first beam field is associated with the first time field, the first beam field indicates a first index value, and the first time field indicates a second index value; and

a processing unit 4520, configured to: if the first index value is not within a first range, and the second index value is within a second range, skip forwarding a signal on a first time resource, or forward a signal on the first time resource by using a first access link beam, where the first time resource is determined based on the second index value, and the first access link beam is determined based on the first index value or is preconfigured; or

if the second index value is not within the second range, and the first index value is within the first range, ignore the first time field and the first beam field, or forward a signal on a second time resource by using a second access link beam, where the second access link beam is determined based on the first index value, and the second time resource is determined based on the second index value or is preconfigured.

Optionally, the processing unit 4520 is further configured to: if the first index value is not within the first range, and the second index value is not within the second range, ignore the first time field and the first beam field, or forward a signal on the second time resource by using the first access link beam.

Optionally, the processing unit 4520 is further configured to: if the first index value is within the first range, and the second index value is within the second range, forward a signal on the first time resource by using the second access link beam.

Optionally, an index value of the first time resource is the second index value.

Optionally, that the first access link beam is determined based on the first index value includes: The first access link beam is determined based on the first index value and a maximum quantity of used access link beams.

Optionally, an index value of the first access link beam is $X_{new} = mod(X_{invalid}, J)$, where $X_{invalid}$ is the first index value, J is the maximum quantity of used access link beams, $X_{invalid}$ is greater than or equal to J, and mod() is a modulo function.

Optionally, that the first access link beam is determined based on the first index value includes: A second beam field indicates the first access link beam, the second beam field is a beam field adjacent to the first beam field, and the first information further includes the second beam field.

Optionally, an index value of the second access link beam is the first index value.

Optionally, that the second time resource is determined based on the second index value includes: The second time resource is determined based on the second index value and a maximum quantity of used time resources.

Optionally, an index value of the second time resource is $Y_{new} = mod(Y_{invalid}, I)$, where $Y_{invalid}$ is the second index value, I is the maximum quantity of used time resources, $Y_{invalid}$ is greater than or equal to I, and mod() is a modulo function.

Optionally, that the second time resource is determined based on the second index value includes: A second time field indicates the second time resource, the second time field is a time field adjacent to the first time field, and the first information further includes the second time field.

Optionally, the first information is downlink control information DCI, the first information includes N beam fields and N time fields, the N beam fields and the N time fields are associated in a one-to-one manner, the N beam fields include the first beam field and the second beam field, the N time fields include the first time field and the second time field, and N is a positive integer.

Optionally, the first information further includes a quantity field, the quantity field indicates a total quantity of the N beam fields and the N time fields, the N beam fields and the N time fields are consecutive fields, and the quantity field is a field before the N beam fields and the N time fields, or the quantity field is a field after the N beam fields and the N time fields, where a total quantity 2M of fields included in the first information is greater than 2N, and M is a positive integer.

Optionally, the first information further includes a quantity field, the quantity field indicates a quantity of the N beam fields and/or a quantity of the N time fields, the N beam fields are consecutive fields, the N time fields are consecutive fields, and the quantity field is a field between the N beam fields and the N time fields, where a total quantity 2M of fields included in the first information is greater than 2N, and M is a positive integer.

Optionally, the first information further includes an invalid indication field, the invalid indication field indicates that a field after the invalid indication field does not include the beam field or the time field, and the invalid indication field is a field after the N beam fields and the N time fields, where a total quantity 2M of fields included in the first information is greater than 2N, and M is a positive integer.

Optionally, the N beam fields and the N time fields are consecutive fields.

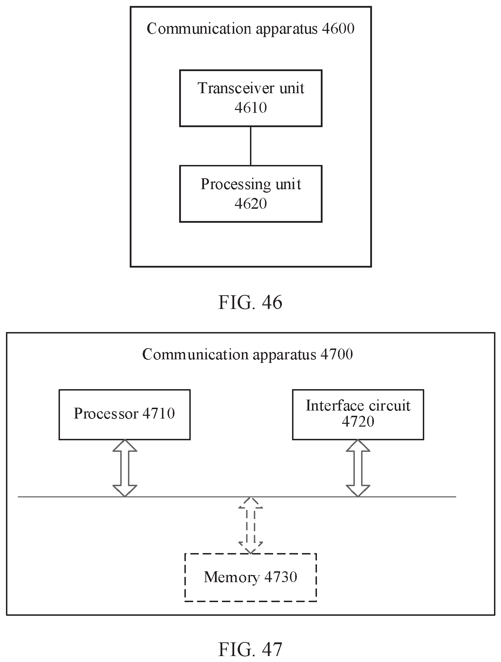

FIG. 46 is a diagram of a structure of another communication apparatus 4600 according to an embodiment of this application. The apparatus 4600 may be used in or deployed in the relay device in the method embodiment in FIG. 35. The communication apparatus 4600 includes:

a transceiver unit 4610, configured to receive second information from a network device, where the second information includes a first beam field and a first time field, the first beam field is associated with the first time field, a first index value indicated by the first beam field is not within a first range, the first time field indicates a second index value, a first time resource includes at least one first symbol in at least one first slot, and the first time resource is determined based on the second index value, where

the transceiver unit 4610 is further configured to receive third information from the network device, where the third information indicates to forward a signal on a second time resource by using a first access link beam, the second time resource includes at least one second symbol in the at least one first slot, and the at least one first symbol and the at least one second symbol include a third symbol; and

a processing unit 4620, configured to: in the third symbol, forward a signal by using a second access link beam, or forward a signal by using the first access link beam, or skip forwarding a signal, where the second access link beam is determined based on the first index value or is preconfigured; and/or

in the at least one first symbol other than the third symbol, forward a signal by using the second access link beam, or skip forwarding a signal; and/or

in the at least one second symbol other than the third symbol, forward a signal by using the first access link beam, or skip forwarding a signal.

Optionally, an index value of the first time resource is the second index value. The second index value indicated by the first time field is within a second range.

Optionally, that the second access link beam is determined based on the first index value includes: The second access link beam is determined based on the first index value and a maximum quantity of used access link beams; or a second beam field indicates the second access link beam, the second beam field is a beam field adjacent to the first beam field, and the second information further includes the second beam field.

Optionally, that the second access link beam is determined based on the first index value and the maximum quantity of used access link beams includes: An index value of the second access link beam is $X_{new}'=mod(X_{invalid}', J)$, where $X_{invalid}'$ is the first index value, J is the maximum quantity of used access link beams, $X_{invalid}'$ is greater than or equal to J, and mod () is a modulo function.

Optionally, the second information is activation indication information of an aperiodic forwarding resource.

FIG. 47 is a schematic block diagram of a communication apparatus 4700 according to an embodiment of this application. The communication apparatus 4700 includes a processor 4710 and an interface circuit 4720. The processor 4710 and the interface circuit 4720 are coupled to each other. It may be understood that the interface circuit 4720 may be a transceiver or an input/output interface. Optionally, the communication apparatus 4700 may further include a memory 4730, configured to store instructions executed by the processor 4710, or store input data required by the processor 4710 to run the instructions, or store data generated after the processor 4710 runs the instructions.

When the communication apparatus 4700 is used in a relay device, the communication apparatus 4700 may implement a function of the relay device in the foregoing method embodiments. When the communication apparatus 4700 is used in a network device, the communication apparatus 4700 may implement a function of the network device in the foregoing method embodiments.

The processor 4710 may be an integrated circuit chip and has a signal processing capability. In an implementation process, steps in the foregoing method embodiments can be implemented by using a hardware integrated logical circuit in the processor, or by using instructions in a form of software. The foregoing processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

An embodiment of this application further provides a communication system, including a relay device in the signal forwarding methods provided in embodiments of this application, another communication device communicating with the relay device, a network device, and another communication device communicating with the network device.

An embodiment of this application further provides a computer-readable storage medium. The computer-readable storage medium stores a computer program used to implement the methods in the foregoing method embodiments. When the computer program runs on a computer, the computer is enabled to implement the methods in the foregoing method embodiments.

An embodiment of this application further provides a computer program product. The computer program product includes a computer program. When the computer program runs on a computer, the methods in the foregoing method embodiments are performed.

An embodiment of this application further provides a chip, including a processor. The processor is connected to a memory, the memory is configured to store a computer program, and the processor is configured to execute the computer program stored in the memory, to cause the chip to perform the methods in the foregoing method embodiments.

It should be understood that, in embodiments of this application, for a technical feature, "first", "second", "third", and the like are used to distinguish between technical features in the technical feature, and there is no time or magnitude order between the technical features described by "first", "second", and "third". In embodiments of this application, "at least one" may alternatively be described as one or more, and "a plurality of" may be two, three, four, or more. This is not limited in this application.

In addition, the term "and/or" in this application describes only an association relationship for describing associated objects and represents that three relationships may exist. For example, A and/or B may represent the following three cases: Only A exists, both A and B exist, and only B exists. In addition, the character "/" in this specification usually represents an "or" relationship between associated objects. In this application, the term "at least one" may represent "one" and "two or more". For example, at least one of A, B, and C may represent the following seventh cases: Only A exists, only B exists, only C exists, both A and B exist, both A and C exist, and both C and B exist, and A, B, C all exist.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for detailed working processes of the foregoing system, apparatuses, and units, refer to corresponding processes in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A signal forwarding method, applied to a relay device, wherein the method comprises:

   receiving first information from a network device, wherein the first information comprises a first beam field and a first time field, the first beam field is associated with the first time field, the first beam field indicates a first index value, and the first time field indicates a second index value; and
   if the first index value is not within a first range, and the second index value is within a second range, skipping forwarding a signal on a first time resource, or forwarding a signal on the first time resource by using a first access link beam, wherein the first time resource is determined based on the second index value, and the first access link beam is determined based on the first index value or is preconfigured; or
   if the second index value is not within the second range, and the first index value is within the first range, ignoring the first time field and the first beam field, or forwarding a signal on a second time resource by using a second access link beam, wherein the second access link beam is determined based on the first index value, and the second time resource is determined based on the second index value or is preconfigured.

2. The method according to claim 1, wherein the method further comprises:
   if the first index value is not within the first range, and the second index value is not within the second range, ignoring the first time field and the first beam field, or forwarding a signal on the second time resource by using the first access link beam.

3. The method according to claim 1 or 2, wherein the method further comprises:
   if the first index value is within the first range, and the second index value is within the second range, forwarding a signal on the first time resource by using the second access link beam.

4. The method according to any one of claims 1 to 3, wherein an index value of the first time resource is the second index value.

5. The method according to any one of claims 1 to 4, wherein that the first access link beam is determined based on the first index value comprises:
   the first access link beam is determined based on the first index value and a maximum quantity of used access link beams.

6. The method according to claim 5, wherein an index value of the first access link beam is $X_{new}=mod(X_{invalid}, J)$, wherein $X_{invalid}$ is the first index value, J is the maximum quantity of used access link beams, $X_{invalid}$ is greater than or equal to J, and mod() is a modulo function.

7. The method according to any one of claims 1 to 4, wherein that the first access link beam is determined based on the first index value comprises:
   a second beam field indicates the first access link beam, the second beam field is a beam field adjacent to the first beam field, and the first information further comprises the second beam field.

8. The method according to any one of claims 1 to 7, wherein an index value of the second access link beam is the first index value.

9. The method according to any one of claims 1 to 8, wherein that the second time resource is determined based on the second index value comprises:
   the second time resource is determined based on the second index value and a maximum quantity of used time resources.

10. The method according to claim 9, wherein an index value of the second time resource is $Y_{new}=mod(Y_{invalid}, I)$, wherein $Y_{invalid}$ is the second index value, I is the maximum quantity of used time resources, $Y_{invalid}$ is greater than or equal to I, and mod() is a modulo function.

11. The method according to any one of claims 1 to 8, wherein that the second time resource is determined based on the second index value comprises:

a second time field indicates the second time resource, the second time field is a time field adjacent to the first time field, and the first information further comprises the second time field.

12. The method according to any one of claims 1 to 11, wherein
the first information is downlink control information DCI, the first information comprises N beam fields and N time fields, the N beam fields and the N time fields are associated in a one-to-one manner, the N beam fields comprise the first beam field and the second beam field, the N time fields comprise the first time field and the second time field, and N is a positive integer.

13. The method according to claim 12, wherein
the first information further comprises a quantity field, the quantity field indicates a total quantity of the N beam fields and the N time fields, the N beam fields and the N time fields are consecutive fields, and the quantity field is a field before the N beam fields and the N time fields, or the quantity field is a field after the N beam fields and the N time fields, wherein a total quantity 2M of fields comprised in the first information is greater than 2N, and M is a positive integer.

14. The method according to claim 12, wherein
the first information further comprises a quantity field, the quantity field indicates a quantity of the N beam fields and/or a quantity of the N time fields, the N beam fields are consecutive fields, the N time fields are consecutive fields, and the quantity field is a field between the N beam fields and the N time fields, wherein a total quantity 2M of fields comprised in the first information is greater than 2N, and M is a positive integer.

15. The method according to claim 12, wherein
the first information further comprises an invalid indication field, the invalid indication field indicates that a field after the invalid indication field does not comprise the beam field or the time field, and the invalid indication field is a field after the N beam fields and the N time fields, wherein a total quantity 2M of fields comprised in the first information is greater than 2N, and M is a positive integer.

16. The method according to claim 15, wherein
the N beam fields and the N time fields are consecutive fields.

17. A signal forwarding method, applied to a relay device, wherein the method comprises:

receiving second information from a network device, wherein the second information comprises a first beam field and a first time field, the first beam field is associated with the first time field, a first index value indicated by the first beam field is not within a first range, the first time field indicates a second index value, a first time resource comprises at least one first symbol in at least one first slot, and the first time resource is determined based on the second index value;
receiving third information from the network device, wherein the third information indicates to forward a signal on a second time resource by using a first access link beam, the second time resource comprises at least one second symbol in the at least one first slot, and the at least one first symbol and the at least one second symbol comprise a third symbol; and
in the third symbol, forwarding a signal by using a second access link beam, or forwarding a signal by using the first access link beam, or skipping forwarding a signal, wherein the second access link beam is determined based on the first index value or is preconfigured; and/or
in the at least one first symbol other than the third symbol, forwarding a signal by using the second access link beam, or skipping forwarding a signal; and/or
in the at least one second symbol other than the third symbol, forwarding a signal by using the first access link beam, or skipping forwarding a signal.

18. The method according to claim 17, wherein an index value of the first time resource is the second index value.

19. The method according to claim 17 or 18, wherein that the second access link beam is determined based on the first index value comprises:

the second access link beam is determined based on the first index value and a maximum quantity of used access link beams; or
a second beam field indicates the second access link beam, the second beam field is a beam field adjacent to the first beam field, and the second information further comprises the second beam field.

20. The method according to claim 19, wherein that the second access link beam is determined based on the first index value and the maximum quantity of used access link beams comprises:
an index value of the second access link beam is $X_{new}'=\mathrm{mod}(X_{invalid}', J)$, wherein $X_{invalid}'$ is the first index value, J is the maximum quantity of used access link beams, $X_{invalid}'$ is greater than or equal to J, and mod() is a modulo function.

**21.** The method according to any one of claims 17 to 20, wherein
the second information is activation indication information of an aperiodic forwarding resource.

**22.** A signal forwarding method, applied to a relay device, wherein the method comprises:

receiving fourth information from a network device at a first moment, wherein the fourth information indicates to forward a signal on a first time resource by using a first access link beam, an index value of the first access link beam is within a first range, an index value of the first time resource is within a second range, the first time resource comprises at least one first symbol in a first slot, and the fourth information is activation indication information of an aperiodic forwarding resource;

receiving fifth information from the network device at a second moment, wherein the fifth information comprises a first beam field and a first time field, the first beam field is associated with the first time field, a first index value indicated by the first beam field is not within the first range, a second index value indicated by the first time field is within the second range, a second time resource comprises at least one second symbol in the first slot, and the at least one first symbol and the at least one second symbol comprise a third symbol, wherein the first moment is earlier than the second moment, the second time resource is determined based on the second index value, and the fifth information is activation indication information of an aperiodic forwarding resource; and

in the third symbol, forwarding a signal by using the first access link beam, or forwarding a signal by using a second access link beam, or skipping forwarding a signal, wherein the second access link beam is determined based on the first index value or is preconfigured; and/or in the at least one first symbol other than the third symbol, forwarding a signal by using the first access link beam, or skipping forwarding a signal; and/or in the at least one second symbol other than the third symbol, forwarding a signal by using the second access link beam, or skipping forwarding a signal.

**23.** The method according to claim 22, wherein
an index value of the second time resource is the second index value.

**24.** The method according to claim 22 or 23, wherein that the second access link beam is determined based on the first index value comprises:
the second access link beam is determined based on the first index value and a maximum quantity of used access link beams.

**25.** The method according to claim 24, wherein
an index value of the second access link beam is $X_{new}{'}=\mathrm{mod}(X_{invalid}{'}, J)$, wherein $X_{invalid}{'}$ is the first index value, J is the maximum quantity of used access link beams, $X_{invalid}{'}$ is greater than or equal to J, and mod() is a modulo function.

**26.** The method according to any one of claims 22 to 25, wherein
a second beam field indicates the second access link beam, the second beam field is a beam field adjacent to the first beam field, and the fifth information further comprises the second beam field.

**27.** A communication apparatus, comprising a unit configured to perform the method according to any one of claims 1 to 16.

**28.** A communication apparatus, comprising a unit configured to perform the method according to any one of claims 17 to 21.

**29.** A communication apparatus, comprising a unit configured to perform the method according to any one of claims 22 to 26.

**30.** A communication apparatus, comprising a processor and an interface circuit, wherein the interface circuit is configured to receive a signal from another communication apparatus and transmit the signal to the processor or send a signal from the processor to another communication apparatus, and the processor is configured to implement the method according to any one of claims 1 to 26 by using a logic circuit or executing code instructions.

**31.** A computer-readable storage medium, wherein

the computer-readable medium stores a computer program; and
when the computer program is run by a processor, the method according to any one of claims 1 to 26 is performed.

**32.** A computer program product, comprising a computer program, wherein when the computer program is executed, the method according to any one of claims 1 to 26 is implemented.

FIG. 1(a)

FIG. 1(b)

FIG. 1(c)

FIG. 2

FIG. 3

Terminal device 400

Signal transceiver
unit 403

Antenna
4033

Processor 401

Transmitter
4031

Memory 402

Computer
program or
configuration
information

Receiver
4032

FIG. 4

Terminal device 500

Antenna
5033

Signal transceiver
unit 503

Processor 501

Transmitter
5031

$F_{1,1}$

$F_{1,K}$

$G_1$

Antenna array 1

Memory 502

Computer
program or
configuration
information

Receiver
5032

$F_{M,1}$

$F_{M,K}$

$G_M$

Antenna array M

FIG. 5

| Terminal device | Relay device | Base station |
|---|---|---|

S601: Configuration information

S602: MAC CE

S603: DCI

S604: Downlink signal

S605: Uplink signal

FIG. 6

| Slot 0 DCI | Slot 1 | Slot 2 | Slot 3 | Slot 4 | Slot 5 | Slot 6 | Slot 7 | Slot 8 | Slot 9 |
|---|---|---|---|---|---|---|---|---|---|

| Index value of a beam | 0 | 7 | 3 | 2 | 17 |
|---|---|---|---|---|---|
| Index value of a time resource | 27 | 20 | 11 | 40 | 2 |

DCI

Not within an index value range that can be identified by a relay device

FIG. 7

<u>800</u>

A relay device receives first information from a network device, where the first information includes a first beam field and a first time field, the first beam field is associated with the first time field, the first beam field indicates a first index value, and the first time field indicates a second index value

S810

If the first index value is not within a first range, and the second index value is within a second range, the relay device skips forwarding a signal on a first time resource, or forwards a signal on the first time resource by using a first access link beam, where the first time resource is determined based on the second index value, and the first access link beam is determined based on the first index value or is preconfigured

S820

If the second index value is not within the second range, and the first index value is within the first range, the relay device ignores the first time field and the first beam field, or forwards a signal on a second time resource by using a second access link beam, where the second access link beam is determined based on the first index value, and the second time resource is determined based on the second index value or is preconfigured

S830

FIG. 8

| 1st beam field | ... | 5th beam field | Not within an index value range that can be identified by a relay device |
|---|---|---|---|

| Index value of a beam | 0 | 7 | 3 | 2 | 17 |
|---|---|---|---|---|---|
| Index value of a time resource | 27 | 20 | 11 | 8 | 2 |

First information

1st time field ... 5th time field

FIG. 9

1st beam field ... 5th beam field

| Index value of a beam | 0 | 7 | 3 | 2 | NULL |
|---|---|---|---|---|---|
| Index value of a time resource | 27 | 20 | 11 | 8 | NULL |

First information

1st time field ... 5th time field

FIG. 10

1st beam field ... 5th beam field

| Index value of a beam | NULL | NULL | NULL | NULL | NULL |
|---|---|---|---|---|---|
| Index value of a time resource | NULL | NULL | NULL | NULL | NULL |

First information

1st time field ... 5th time field

FIG. 11

FIG. 12

FIG. 13

1st beam field        ...        5th beam field

| Index value of a beam | 0 | 7 | 3 | 2 | **0** |
|---|---|---|---|---|---|

| Index value of a time resource | 27 | 20 | 11 | 8 | 2 |
|---|---|---|---|---|---|

First information

1st time field        ...        5th time field

FIG. 14

1st beam field        ...        5th beam field

| Index value of a beam | 0 | 7 | 3 | 2 | 1 |
|---|---|---|---|---|---|

| Index value of a time resource | 27 | 20 | 11 | 40 | 2 |
|---|---|---|---|---|---|

First information

1st time field        ...        5th time field

Not within an index value range that
can be identified by a relay device

FIG. 15

45

1st beam field      ...      5th beam field

| Index value of a beam | 0 | 7 | 3 | NULL | 1 |

| Index value of a time resource | 27 | 20 | 11 | NULL | 2 |

First information

1st time field      ...      5th time field

FIG. 16

1st beam field      ...      5th beam field

| Index value of a beam | 0 | 7 | 3 | 2 | 1 |

| Index value of a time resource | 27 | 20 | 11 | **8** | 2 |

First information

1st time field      ...      5th time field

FIG. 17

1st beam field ... 5th beam field

| Index value of a beam | 0 | 7 | 3 | 2 | 1 |
|---|---|---|---|---|---|
| Index value of a time resource | 27 | 20 | 11 | **11** | 2 |

First information

1st time field ... 5th time field

FIG. 18

1st beam field ... 5th beam field

| Index value of a beam | 0 | 7 | 3 | 2 | 1 |
|---|---|---|---|---|---|
| Index value of a time resource | 27 | 20 | 11 | **27** | 2 |

First information

1st time field ... 5th time field

FIG. 19

1st beam field      ...      5th beam field

| Index value of a beam | 0 | 7 | 3 | 17 | 1 |
|---|---|---|---|---|---|

| Index value of a time resource | 27 | 20 | 11 | 40 | 2 |
|---|---|---|---|---|---|

First information

1st time field      ...      5th time field

Not within an index value range that can be identified by a relay device

FIG. 20

1st beam field      ...      5th beam field

| Index value of a beam | 0 | 7 | 3 | **1** | 1 |
|---|---|---|---|---|---|

| Index value of a time resource | 27 | 20 | 11 | **8** | 2 |
|---|---|---|---|---|---|

First information

1st time field      ...      5th time field

FIG. 21

EP 4 776 719 A1

1st beam field ... 5th beam field

| Index value of a beam | 0 | 7 | 3 | **3** | 1 |
|---|---|---|---|---|---|

| Index value of a time resource | 27 | 20 | 11 | **8** | 2 |
|---|---|---|---|---|---|

First information

1st time field ... 5th time field

FIG. 22

1st beam field ... 5th beam field

| Index value of a beam | 0 | 7 | 3 | **1** | 1 |
|---|---|---|---|---|---|

| Index value of a time resource | 27 | 20 | 11 | **11** | 2 |
|---|---|---|---|---|---|

First information

1st time field ... 5th time field

FIG. 23

1st beam field ... 5th beam field

| Index value of a beam | 0 | 7 | 3 | **3** | 1 |
| --- | --- | --- | --- | --- | --- |
| Index value of a time resource | 27 | 20 | 11 | **11** | 2 |

First information

1st time field ... 5th time field

FIG. 24

1st beam field ... 5th beam field

| Index value of a beam | 0 | 7 | 3 | **0** | 1 |
| --- | --- | --- | --- | --- | --- |
| Index value of a time resource | 27 | 20 | 11 | **27** | 2 |

First information

1st time field ... 5th time field

FIG. 25

1st beam field ... 5th beam field

Index value of a beam

| 0 | 7 | 3 | 2 | 17 |

Index value of a time resource

| 27 | 20 | 11 | 40 | 2 |

First information

1st time field ... 5th time field

Not within an index value range that can be identified by a relay device

FIG. 26

| 0 | 7 | 3 | 2 | **17** | 27 | 20 | 11 | **40** | 2 |

Beam field — Time field

First information

represents a correspondence

FIG. 27

| 0 | 27 | 7 | 20 | 3 | 11 | 2 | **40** | **17** | 2 |
|---|----|---|----|---|----|---|--------|--------|---|

Beam field     Time field     represents a correspondence

First information

FIG. 28

| 0 | 7 | 3 | 2 | 1 | 27 | 20 | 11 | 8 | 2 | ... | | | | | |
|---|---|---|---|---|----|----|----|---|---|-----|--|--|--|--|--|

←——— Beam field ———→←——— Time field ———→←——— **Invalid field** ———→

| 0 | 27 | 7 | 20 | 3 | 11 | 2 | 8 | 1 | 2 | ... | | | | | |
|---|----|---|----|---|----|---|---|---|---|-----|--|--|--|--|--|

←——————————— Valid field ———————————→←——— **Invalid field** ———→

Beam field     Time field

FIG. 29

Quantity field

| ⧄ | 0 | 7 | 3 | 2 | 1 | 27 | 20 | 11 | 8 | 2 | ... | | | | |
|---|---|---|---|---|---|----|----|----|---|---|-----|--|--|--|--|

←——— Beam field ———→←——— Time field ———→←——— **Invalid field** ———→

Quantity field

| ⧄ | 0 | 27 | 7 | 20 | 3 | 11 | 2 | 8 | 1 | 2 | ... | | | | |
|---|---|----|---|----|---|----|---|---|---|---|-----|--|--|--|--|

←——————————— Valid field ———————————→←——— **Invalid field** ———→

Beam field     Time field

FIG. 30

Quantity
field

| 0 | 7 | 3 | 2 | 1 | 27 | 20 | 11 | 8 | 2 | ⁄ | | ... | | | | |

Beam field ← → ← Time field → ← **Invalid field** →

Quantity
field

| 0 | 27 | 7 | 20 | 3 | 11 | 2 | 8 | 1 | 2 | ⁄ | ... | | | | |

← Valid field → ← **Invalid field** →

⌐ Beam field  ☐ Time field

FIG. 31

Quantity field

| 0 | 7 | 3 | 2 | 1 | ⁄ | 27 | 20 | 11 | 8 | 2 | ... | | | | |

← Beam field → ← Time field → ← **Invalid field** →

FIG. 32

Invalid indication field

| 0 | 7 | 3 | 2 | 1 | 27 | 20 | 11 | 8 | 2 | ⁄ | ... | | | | |

Beam field ← → ← Time field → ← **Invalid field** →

Invalid indication field

| 0 | 27 | 7 | 20 | 3 | 11 | 2 | 8 | 1 | 2 | ⁄ | ... | | | | |

← Valid field → ← **Invalid field** →

⌐ Beam field  ☐ Time field

FIG. 33

Not within an index value range that can be identified by a relay device

| Index value of a beam | 0 | 7 | 3 | 2 | 17 |
| Index value of a time resource | 27 | 20 | 11 | 8 | 2 |

Slot 0 | Slot 1 | Slot 2 | Slot 3 | Slot 4 | Slot 5 | Slot 6 | Slot 7 | Slot 8 | Slot 9
DCI

| Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13 |
|---|---|---|---|---|---|---|---|---|---|---|---|---|---|
| | | | | | | | | | | | | | |

Indication information 1 (a=17)

| | | a | a | a | a | | | | | | | | |

Indication information 2 (b≤15)

| b | b | b | b | b | b | b | b | b | b | b | b | b | |

FIG. 34

3500

A relay device receives second information from a network device, where the second information includes a first beam field and a first time field, the first beam field is associated with the first time field, a first index value indicated by the first beam field is not within a first range, the first time field indicates a second index value, a first time resource includes at least one first symbol in at least one first slot, and the first time resource is determined based on the second index value

S3510

The relay device receives third information from the network device, where the third information indicates to forward a signal on a second time resource by using a first access link beam, the second time resource includes at least one second symbol in the at least one first slot, and the at least one first symbol and the at least one second symbol include a third symbol

S3520

In the third symbol, the relay device forwards a signal by using a second access link beam, or forwards a signal by using the first access link beam, or skips forwarding a signal, where the second access link beam is determined based on the first index value or is preconfigured; and/or
in the at least one first symbol other than the third symbol, the relay device forwards a signal by using the second access link beam, or skips forwarding a signal; and/or
in the at least one second symbol other than the third symbol, the relay device forwards a signal by using the first access link beam, or skips forwarding a signal

S3530

FIG. 35

Slot 8

Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13

Second information

Third information

Symbol indicated by the second information

Symbol indicated by the third information

FIG. 36

| Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13 |
|----------|----------|----------|----------|----------|----------|----------|----------|----------|----------|-----------|-----------|-----------|-----------|

FIG. 37(a)

| Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13 |
|----------|----------|----------|----------|----------|----------|----------|----------|----------|----------|-----------|-----------|-----------|-----------|

FIG. 37(b)

| Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13 |
|----------|----------|----------|----------|----------|----------|----------|----------|----------|----------|-----------|-----------|-----------|-----------|

FIG. 37(c)

EP 4 776 719 A1

| Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13 |
|---|---|---|---|---|---|---|---|---|---|---|---|---|---|
| | | | | | | | | | | | | | |

FIG. 37(d)

| Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13 |
|---|---|---|---|---|---|---|---|---|---|---|---|---|---|
| | | | | | | | | | | | | | |

FIG. 37(e)

| Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13 |
|---|---|---|---|---|---|---|---|---|---|---|---|---|---|
| | | | | | | | | | | | | | |

FIG. 37(f)

| Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13 |
|---|---|---|---|---|---|---|---|---|---|---|---|---|---|
| | | | | | | | | | | | | | |

FIG. 37(g)

EP 4 776 719 A1

| Slot 8 |
| :---: |

| Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13 |
| --- | --- | --- | --- | --- | --- | --- | --- | --- | --- | --- | --- | --- | --- |

Second information

Third information

Symbol indicated by the second information

Symbol indicated by the third information

FIG. 38

Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13

FIG. 39(a)

Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13

FIG. 39(b)

Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13

FIG. 39(c)

Slot 8

| Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13 |

Second information

Third information

Symbol indicated by the second information

Symbol indicated by the third information

FIG. 40

| Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13 |
|---|---|---|---|---|---|---|---|---|---|---|---|---|---|

FIG. 41(a)

| Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13 |
|---|---|---|---|---|---|---|---|---|---|---|---|---|---|

FIG. 41(b)

| Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13 |
|---|---|---|---|---|---|---|---|---|---|---|---|---|---|

FIG. 41(c)

EP 4 776 719 A1

| Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13 |
|----------|----------|----------|----------|----------|----------|----------|----------|----------|----------|-----------|-----------|-----------|-----------|

FIG. 41(d)

| Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13 |
|----------|----------|----------|----------|----------|----------|----------|----------|----------|----------|-----------|-----------|-----------|-----------|

FIG. 41(e)

| Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13 |
|----------|----------|----------|----------|----------|----------|----------|----------|----------|----------|-----------|-----------|-----------|-----------|

FIG. 41(f)

| Symbol 0 | Symbol 1 | Symbol 2 | Symbol 3 | Symbol 4 | Symbol 5 | Symbol 6 | Symbol 7 | Symbol 8 | Symbol 9 | Symbol 10 | Symbol 11 | Symbol 12 | Symbol 13 |
|---|---|---|---|---|---|---|---|---|---|---|---|---|---|
| | | | | | | | | | | | | | |

FIG. 41(g)

4200

A relay device receives fourth information from a network device at a first moment, where the fourth information indicates to forward a signal on a first time resource by using a first access link beam, an index value of the first access link beam is within a first range, an index value of the first time resource is within a second range, the first time resource includes at least one first symbol in a first slot, and the fourth information is activation indication information of an aperiodic forwarding resource

S4210

The relay device receives fifth information from the network device at a second moment, where the fifth information includes a first beam field and a first time field, the first beam field corresponds to the first time field, a first index value indicated by the first beam field is not within the first range, a second index value indicated by the first time field is within the second range, a second time resource includes at least one second symbol in the first slot, and the at least one first symbol and the at least one second symbol include a third symbol, where the first moment is earlier than the second moment, the second time resource is determined based on the second index value, and the fifth information is activation indication information of an aperiodic forwarding resource

S4220

In the third symbol, the relay device forwards a signal by using the first access link beam, or forwards a signal by using a second access link beam, or skips forwarding a signal, where the second access link beam is determined based on the first index value or is preconfigured; and/or
in the at least one first symbol other than the third symbol, the relay device forwards a signal by using the first access link beam, or skips forwarding a signal; and/or
in the at least one second symbol other than the third symbol, the relay device forwards a signal by using the second access link beam, or skips forwarding a signal

S4230

FIG. 42

4300

A relay device receives sixth information from a network device, where the sixth information indicates to forward a signal from a terminal device on a first time resource through a first backhaul link, and the first time resource includes at least one first slot

S4310

The relay device receives seventh information from the network device, where the seventh information indicates to send an uplink signal on a second time resource through a first control link, and the second time resource includes the at least one first slot

S4320

If the sixth information is configuration information of a periodic forwarding resource, and the sixth information has a priority flag, the relay device forwards the signal from the terminal device based on the sixth information, and ignores the seventh information; or
if the sixth information is activation indication information of an aperiodic forwarding resource or activation indication information of a semi-persistent forwarding resource, the relay device sends the uplink signal based on the seventh information, and ignores the sixth information

S4330

FIG. 43

4400

A relay device receives eighth information from a network device, where the eighth information indicates to forward a signal from a terminal device on a first time resource through a first backhaul link at a first transmit power, and the first time resource includes at least one first slot

S4410

The relay device receives ninth information from the network device, where the ninth information indicates to send an uplink signal on a second time resource through a first control link at a second transmit power, and the second time resource includes the at least one first slot

S4420

If a sum of the first transmit power and the second transmit power is greater than a preset threshold, and the first time resource and the first backhaul link are periodic forwarding resources, the relay device adjusts the second transmit power, where a sum of an adjusted second transmit power and the first transmit power is less than or equal to the preset threshold; or
if the sum of the first transmit power and the second transmit power is greater than the preset threshold, and the first time resource and the first backhaul link are aperiodic forwarding resources/semi-persistent forwarding resources, the relay device adjusts the first transmit power, where a sum of an adjusted first transmit power and the second transmit power is less than or equal to the preset threshold

S4430

FIG. 44

Communication apparatus 4500

Transceiver unit
4510

Processing unit
4520

FIG. 45

Communication apparatus 4600

Transceiver unit
4610

Processing unit
4620

FIG. 46

Communication apparatus 4700

Processor 4710

Interface circuit
4720

Memory 4730

FIG. 47

## INTERNATIONAL SEARCH REPORT

| International application No. |
| --- |
| **PCT/CN2024/113431** |

**A. CLASSIFICATION OF SUBJECT MATTER**

H04W 72/044(2023.01)i

According to International Patent Classification (IPC) or to both national classification and IPC

**B. FIELDS SEARCHED**

Minimum documentation searched (classification system followed by classification symbols)

IPC: H04W H04L

Documentation searched other than minimum documentation to the extent that such documents are included in the fields searched

Electronic data base consulted during the international search (name of data base and, where practicable, search terms used)

CNTXT; CNABS; ENTXTC; VEN; DWPI; CNKI; 3GPP: 中继, 转发, 接入链路, 波束, 索引, 指示, 字段, 时间, 资源, 时域, 时隙, 不在, 超出, 超越, 超过, 范围, 阈值, relay, forwarding, access link, beam, index, indication, field, time, resource, time domain, slot, not at, exceed, over, threshold

**C. DOCUMENTS CONSIDERED TO BE RELEVANT**

| Category* | Citation of document, with indication, where appropriate, of the relevant passages | Relevant to claim No. |
| --- | --- | --- |
| A | WO 2023092468 A1 (BEIJING XIAOMI MOBILE SOFTWARE CO., LTD.) 01 June 2023 (2023-06-01) description, paragraphs [0391]-[0407] | 1-32 |
| A | CN 115997354 A (BEIJING XIAOMI MOBILE SOFTWARE CO., LTD.) 21 April 2023 (2023-04-21) entire document | 1-32 |
| A | CN 116193460 A (HUAWEI TECHNOLOGIES CO., LTD.) 30 May 2023 (2023-05-30) entire document | 1-32 |
| A | US 2023262482 A1 (HUAWEI TECHNOLOGIES CO., LTD.) 17 August 2023 (2023-08-17) entire document | 1-32 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **07 November 2024** | **21 November 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/113431**

| Patent document cited in search report | | | Publication date (day/month/year) | Patent family member(s) | | | Publication date (day/month/year) |
|---|---|---|---|---|---|---|---|
| WO | 2023092468 | A1 | 01 June 2023 | EP | 4440176 | A1 | 02 October 2024 |
| | | | | CN | 114270910 | A | 01 April 2022 |
| CN | 115997354 | A | 21 April 2023 | WO | 2024098208 | A1 | 16 May 2024 |
| CN | 116193460 | A | 30 May 2023 | WO | 2023093572 | A1 | 01 June 2023 |
| | | | | EP | 4425989 | A1 | 04 September 2024 |
| | | | | US | 2024313845 | A1 | 19 September 2024 |
| US | 2023262482 | A1 | 17 August 2023 | WO | 2022082774 | A1 | 28 April 2022 |
| | | | | EP | 4224763 | A1 | 09 August 2023 |
| | | | | CN | 116349336 | A | 27 June 2023 |

Form PCT/ISA/210 (patent family annex) (July 2022)

## REFERENCES CITED IN THE DESCRIPTION

**Patent documents cited in the description**

- CN 202311286630